(19) Europäisches Patentamt
European Patent Office
Office européen des brevets

(11) Veröffentlichungsnummer: **0 369 385 A2**

(12) **EUROPÄISCHE PATENTANMELDUNG**

(21) Anmeldenummer: **89121033.8**

(51) Int. Cl.[5]: **C09B 62/008, D06P 1/38**

(22) Anmeldetag: **13.11.89**

(30) Priorität: **16.11.88 CH 4261/88**

(43) Veröffentlichungstag der Anmeldung: **23.05.90 Patentblatt 90/21**

(84) Benannte Vertragsstaaten: **BE CH DE ES FR GB IT LI**

(71) Anmelder: **CIBA-GEIGY AG**
**Klybeckstrasse 141**
**CH-4002 Basel(CH)**

(72) Erfinder: **Tzikas, Athanassios, Dr.**
**Unt. Rütschetenweg 36**
**CH-4133 Pratteln(CH)**
Erfinder: **Seiler, Herbert, Dr.**
**Leimgrubenweg 60**
**CH-4125 Riehen(CH)**

(74) Vertreter: **Zumstein, Fritz, Dr. et al**
**Bräuhausstrasse 4**
**D-8000 München 2(DE)**

(54) **Reaktivfarbstoffe, deren Herstellung und Verwendung.**

(57) Reaktivfarbstoffe der Formel

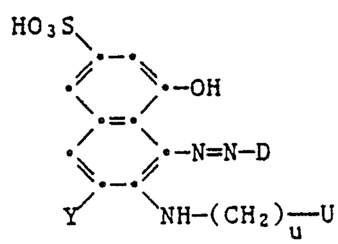

(1),

worin Y Wasserstoff oder Sulfo, U -CN, $-CONH_2$, $-SO_3H$, -OH oder $-OSO_3H$, D ein Phenyl- oder Naphthylrest, der durch $C_1$-$C_4$-Alkyl, $C_1$-$C_4$-Alkoxy, Halogen, Carboxy und Sulfo substituiert sein kann, ist, und der mindestens einen direkt oder über ein Brückenglied an ein Ringkohlenstoffatom gebundenen Reaktivrest enthält, oder an den ein weiterer Rest gebunden ist, welcher einen Reaktivrest enthält, und u die Zahl 2, 3, 4 oder 5 ist, eignen sich besonders zum Färben oder Bedrucken von cellulosehaltigen Fasermaterialien nach dem Ausziehverfahren oder nach Kontinueverfahren und geben, bei hoher färberischer Ausbeute, Färbungen und Drucke mit guten Echtheitseigenschaften.

EP 0 369 385 A2

## Reaktivfarbstoffe, deren Herstellung und Verwendung

Die vorliegende Anmeldung betrifft neue verbesserte Reaktivfarbstoffe, die sich besonders für das Färben von cellulosehaltigen Fasermaterialien nach dem Ausziehverfahren oder dem Kaltverweilverfahren eignen, und die nass- und lichtechte Färbungen ergeben; sowie Verfahren zur Herstellung dieser Farbstoffe, und deren Verwendung zum Färben oder Bedrucken von textilen Materialien.

Gegenstand der Erfindung sind Reaktivfarbstoffe der Formel

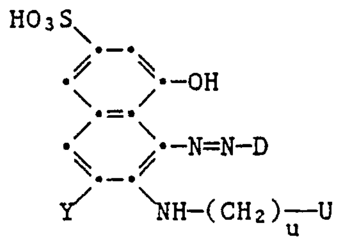

(1),

worin Y Wasserstoff oder Sulfo, U -CN, -$CONH_2$, -$SO_3H$, -OH oder -$OSO_3H$, D ein Phenyl- oder Naphthylrest, der durch $C_1$-$C_4$-Alkyl, $C_1$-$C_4$-Alkoxy, Halogen, Carboxy und Sulfo substituiert sein kann, ist, und der mindestens einen direkt oder über ein Brückenglied an ein Ringkohlenstoffatom gebundenen Reaktivrest enthält, oder an den ein weiterer Rest gebunden ist, welcher einen Reaktivrest enthält, und u die Zahl 2, 3, 4 oder 5 ist.

Als $C_1$-$C_4$-Alkyl-Substituent am Phenyl- oder Naphthylrest D kommt z.B. in Betracht: Methyl, Aethyl, n-Propyl, Isopropyl, n-Butyl, sek.-Butyl, Isobutyl und tert.Butyl; der Alkylrest kann weiter substituiert sein, z.B. durch Halogen, wie Fluor, Chlor oder Brom, Hydroxy, Cyan, $C_1$-$C_4$-Alkoxy, wie Methoxy oder Aethoxy, $C_1$-$C_4$-Alkoxycarbonyl, wie Methoxycarbonyl, Carboxy, Sulfamoyl, Sulfo oder Sulfato. Ein bevorzugter Alkylsubstituent am Phenylrest D ist Methyl.

Als Halogensubstituent am Phenyl- oder Naphthylrest D kommt z.B. in Betracht: Fluor, Chlor und Brom.

Als $C_1$-$C_4$-Alkoxy-Substituent am Phenyl- oder Naphthylrest D kommt z.B. in Betracht: Methoxy, Aethoxy, n-Propoxy, Isopropoxy, und n-Butoxy; der Alkoxyrest kann weiter substituiert sein, z.B. durch $C_1$-$C_4$-Alkoxy, wie Methoxy und Aethoxy; als Beispiel sei der Aethoxyäthoxyrest genannt. Ein bevorzugter Alkoxyrest am Phenylrest D ist Methoxy.

Unter faserreaktiven Resten als Substituent(en) des Phenyl- oder Naphthylrestes D sind solche zu verstehen, die mit den Hydroxygruppen der Cellulose, den Amino-, Carboxy-, Hydroxy- und Thiolgruppen bei Wolle und Seide, oder mit den Amino- und eventuell Carboxygruppen von synthetischen Polyamiden unter Bildung kovalenter chemischer Bindungen zu reagieren vermögen.

Vorzugsweise handelt es sich um faserreaktive Reste der aliphatischen, aromatischen oder heterocyclischen Reihe, die direkt oder über ein Brückenglied an den Rest D gebunden sind, oder an den Rest D ist ein weiterer Rest gebunden, der mindestens eine aliphatische, aromatische oder heterocyclische Reaktivgruppe aufweist.

Geeignete faserreaktive Reste sind beispielsweise solche, die mindestens einen abspaltbaren Substituenten an einem heterocyclischen, aromatischen oder aliphatischen Rest gebunden enthalten.

Als faserreaktive Reste kommen z.B. die folgenden aliphatischen und aromatischen Reste in Betracht:

Vinylsulfonyl-, $\beta$-Chloräthylsulfonyl-, $\beta$-Sulfatoäthylsulfonyl-, $\beta$-Acetoxy-äthylsulfonyl-, Phosphatoäthylsulfonyl-, $\beta$-Thiosulfatoäthylsulfonyl, N-Methyl-N-(B-sulfatoäthyl-sulfonyl)-amino, Acryloyl, Mono-, Di- oder Trichloracryloyl wie -CO-CCl=$CH_2$, -CO-CH=CH-Cl, -CO-CCl=CH-$CH_3$; Mono-, Di- oder Tribromacryloyl wie -CO-CBr=$CH_2$, -CO-CH=CH-Br, -CO-CBr=CH-$CH_3$; sowie -CO-CCl=CH-COOH, -CO-CH=CCl-COOH, -CO-CBr=CH-COOH, -CO-CH=CBr-COOH; -CO-CCl=CCl-COOH, -CO-CBr=CBr-COOH; Vorstufen des Acryloyl-Restes und der Derivate des Acryloyl-Restes wie $\beta$-Chlor- oder $\beta$-Brompropionyl, 3-Phenylsulfonylpropionyl, 3-Methylsulfonylpropionyl, 2-Chlor-3-phenylsulfonylpropionyl, 2,3-Dichlorpropionyl, 2,3-Dibrompropionyl; sowie 2-Fluor-2-chlor-3,3-difluorcyclobutan-1-carbonyl, 2,2,3,3-Tetrafluorcyclobutan-carbonyl-1- oder sulfonyl-1-, $\beta$-(2,2,3,3-Tetrafluorcyclobutyl-1)-acryloyl, $\alpha$- oder $\beta$-Alkenyl-oder Arylsulfonyl-acryloyl-Gruppe wie $\alpha$- oder $\beta$-Methylsulfonylacryloyl, Propiolyl, Chloracetyl, Bromacetyl, 4-($\beta$-Chloäthylsulfonyl)-butyryl, 4-Vinylsulfonyl-butyryl, 5-($\beta$-Chloräthyl-sulfonyl)-valeryl, 5-Vinylsulfonyl-valeryl, 6-($\beta$-Chloräthyl-sulfonyl)-caproyl, 6-Vinylsulfonylcarproyl; sowie 4-Fluor-3-nitro-benzoyl, 4-Fluor-3-nitrophenylsul-

fonyl, 4-Fluor-3-methylsulfonylbenzoyl, 4-Fluor-3-cyanbenzoyl, 2-Fluor-5-methylsulfonylbenzoyl.

Des weiteren sind faserreaktive Reste der heterocyclischen Reihe zu nennen, wie z.B. 2,4-Dichlortriazinyl-6-, Mono-, Di- oder Trihalogenpyrimidinylreste, wie 2,4-Dichlorpyrimidinyl-6-, 2,4,5-Trichlorpyrimidinyl-6-, 2,4-Dichlor-5-nitro- oder 5-methyl- oder -5-carboxymethyl- oder -5-carboxy- oder -5-cyano- oder -5-vinyl- oder -5-sulfo- oder -5-mono-, -di- oder trichlormethyl- oder 5-methylsulfonylpyrimidinyl-6-, 2,5-Dichlor-4-methylsulfonyl-pyrimidinyl-6-, 2-Fluor-4-pyrimidinyl-, 2,6-Difluor-4-pyrimidinyl-, 2,6-Difluor-5-chlor-4-pyrimidinyl-, 2-Fluor-5,6-dichlor-4-pyrimidinyl-, 2,6-Difluor-5-methyl-4-pyrimidinyl-, 2,5-Difluor-6-methyl-4-pyrimidinyl-, 2-Fluor-5-methyl-6-chlor-4-pyrimidinyl-, 2-Fluor-5-nitro-6-chlor-4-pyrimidinyl, 2-Fluor-5-nitro-6-chlor-4-pyrimidinyl-, 5-Brom-2-fluor-4-pyrimidinyl-, 2-Fluor-5-cyan-4-pyrimidinyl-, 2-Fluor-5-methyl-4-pyrimidinyl-, 2,5,6-Trifluor-4-pyrimidinyl-, 5-Chlor-6-chlormethyl-2-fluor-4-pyrimidinyl-, 2,6-Difluor-5-brom-4-pyrimidinyl-, 2-Fluor-5-brom-6-chlormethyl-4-pyrimidinyl-, 2,6-Difluor-5-chlormethyl-4-pyrimidinyl-, 2,6-Difluor-5-nitro-4-pyrimidinyl-, 2-Fluor-6-methyl-4-pyrimidinyl-, 2-Fluor-5-chlor-6-methyl-4-pyrimidinyl-, 2-Fluor-5-chlor-4-pyrimidinyl-, 2-Fluor-6-chlor-4-pyrimidinyl-, 6-Trifluormethyl-5-chlor-2-fluor-4-pyrimidinyl-, 6-Trifluormethyl-2-fluor-4-pyrimidinyl-, 2-Fluor-5-nitro-4-pyrimidinyl-, 2-Fluor-5-trifluormethyl-4-pyrimidinyl-, 2-Fluor-5-phenyl- oder 5-methylsulfonyl-4-pyrimidinyl-, 2-Fluor-5-carbonamido-4-pyrimidinyl-, 2-Fluor-5-carbomethoxy-4-pyrimidinyl-, 2-Fluor-5-brom-6-trifluormethyl-4-pyrimidinyl-, 2-Fluor-6-carbonamido-4-pyrimidinyl-, 2-Fluor-6-carbomethoxy-4-pyrimidinyl-, 2-Fluor-6-phenyl-4-pyrimidinyl-, 2-Fluor-6-cyan-4-pyrimidinyl-, 2,6-Difluor-5-methylsulfonyl-4-pyrimidinyl-, 2-Fluor-5-sulfonamido-4-pyrimidinyl, 2-Fluor-5-chlor-6-carbomethoxy-4-pyrimidinyl-, 2,6-Difluor-5-trifluormethyl-4-pyrimidinyl; 2,4-Bis-methylsulfonyl-pyrimidinyl-4-, 2,5-Bis-methylsulfonyl-5-chlorpyrimidinyl-4-, 2-Methylsulfonyl-pyrimidinyl-4-, 2-Phenylsulfonylpyrimidinyl-4-, 2-Methylsulfonyl-5-chlor-6-methyl-pyrimidinyl-4-, 2-Methylsulfonyl-5-brom-6-methyl-pyrimidinyl-4-, 2-Methylsulfonyl-5-chlor-6-äthyl-pyrimidinyl-4-, 2-Methylsulfonyl-5-nitro-6-methylpyrimidinyl-4-, 2,5,6-Tris-methylsulfonyl-pyrimidinyl-4-, 2-Methylsulfonyl-5,6-dimethyl-pyrimidinyl-4-, 2-Aethylsulfonyl-5-chlor-6-methyl-pyrimidinyl-4-, 2-Methylsulfonyl-6-chlor-pyrimidinyl-4-, 2,6-Bis-methylsulfonyl-5-chlor-pyrimidinyl-4-, 2-Methylsulfonyl-6-carboxy-pyrimidinyl-4-, 2-Methylsulfonyl-5-sulfo-pyrimidinyl-4-, 2-Methylsulfonyl-6-carbomethoxy-pyrimidinyl-4-, 2-Methylsulfonyl-5-carboxy-pyrimidinyl-4-, 2-Methylsulfonyl-5-cyan-6-methoxy-pyrimidinyl-4-, 2-Methylsulfonyl-5-chlor-pyrimidinyl-4-, 2-Sulfoäthylsulfonyl-6-methyl-pyrimidinyl-4-, 2-Methylsulfonyl-5-brom-pyrimidinyl-4-, 2-Phenylsulfonyl-5-chlor-pyrimidinyl-4-, 2-Carboxymethylsulfonyl-5-chlor-6-methylpyrimidinyl-4-, 2,4-Dichlorpyrimidin-6-carbonyl oder 6-sulfonyl, 2,4-Dichlorpyrimidin-5-carbonyl- oder 5-sulfonyl, 2-Chlor-4-methylpyrimidin-5-carbonyl, 2-Methyl-4-chlorpyrimidin-5-carbonyl, 2-Methylthio-4-fluorpyrimidin-5-carbonyl, 2,4,6-Trichlorpyrimidin-5-carbonyl, 2,4-Dichlor-6-methyl-pyrimidin-5-carbonyl-oder 5-sulfonyl, 2-Methylsulfonyl-6-chlorpyrimidin-4-und 5-carbonyl, 2,6-Bis-(methylsulfonyl)pyrimidin-4- oder -5-carbonyl, 2-Aethylsulfonyl-6-chlorpyrimidin-5-carbonyl, 2,4-Bis-(methylsulfonyl)-pyrimidin-5-sulfonyl, 2-Methylsulfonyl-4-chlor-6-methylpyrimidin-5-sulfonyl- oder -5-carbonyl, 2-Chlorchinoxalin-3-carbonyl, 2- oder 3-Monochlorchinoxalin-6-carbonyl, 2- oder 3-Monochlorchinoxalin-6-sulfonyl, 2,3-Dichlorchinoxalin-5- oder -6-carbonyl, 2, 3-Dichlorchinoxalin-5- oder -6-sulfonyl, 1,4-Dichlorphthalazin-6-sulfonyl- oder -6-carbonyl, 2,4-Dichlorchinazolin-7- oder -6-sulfonyl- oder -carbonyl, 2,4,6-Trichlorchinazolin-7- oder -8-sulfonyl, 2- oder 3- oder 4-(4′,5′-Dichlorpyridazon-6′-yl-1′)-phenylsulfonyl- oder -carbonyl, β-(4′,5′-Dichlorpyridazinon-6′-yl-1′)-propionyl, 3,6-Dichlorpyridazin-4-carbonyl oder 4-sulfonyl, 2-Chlor benzthiazol-5-oder 6-carbonyl- oder -5- oder -6-sulfonyl, 2-Arylsulfonyl-oder -Alkylsulfonylbenzthiazol-5- oder -6-carbonyl- oder -5- oder -6-sulfonyl, wie 2-Methylsulfonyl- oder 2-Aethylsulfonylbenzthiazol-5-oder -6-sulfonyl- oder -carbonyl, 2-Phenylsulfonyl-benzthiazol-5- oder -6-sulfonyl- oder -carbonyl und die entsprechenden im ankondensierten Benzolring Sulfogruppen enthaltenden 2-Sulfonylbenzthiazol-5- oder -6-carbonyl oder -sulfonyl-Derivate, 2-Chlorbenzoxazol-5- oder -6-carbonyl- oder -sulfonyl, 2-Chlorbenzimidazol-5- oder -6-carbonyl- oder -sulfonyl, 2-Chlor-1-methylbenzimidazol-5- oder -6-carbonyl- oder -sulfonyl-, 2-Chlor-4-methylthiazol-(1,3)-5-carbonyl oder -5-sulfonyl; ammoniumgruppenhaltige Triazinringe, wie 2-Trimethylammonium-4-phenylamino- oder -4-(o, m- oder p-sulfophenyl)-aminotriazinyl-6-, 2-(1,1-Dimethylhydrazinium)-4-phenylamino-oder -4-(o-, m-oder p-sulfophenyl)-aminotriazinyl-6-, 2-(2-Isopropyliden-1,1-dimethyl)hydrazinium-4-phenylamino- oder -4-(o-, m- oder p-sulfophenyl)-aminotriazinyl-6-, 2-N-Aminopyrrolidinium- oder 2-N-Aminopiperidinium-4-phenylamino- oder -4-(o-, m- oder p-sulfophenyl)-aminotriazinyl-6-, ferner 4-Phenylamino- oder 4-(sulfophenylamino)-triazinyl-6-Reste, die in 2-Stellung über eine Stickstoffbindung das 1,4-Bis-aza-bicyclo[2,2,2]-octan oder das 1,2-Bis-aza-bicyclo-[0,3,3]-octan quartär gebunden enthalten, 2-Pyridinium-4-phenylamino-oder -4-(o-, m- oder p-sulfophenyl)-amino-triazinyl-6- sowie entsprechende 2-Oniumtriazinyl-6-Reste, die in 4-Stellung durch Alkylamino- wie Methylamino, Aethylamino- oder β-Hydroxy-äthylamino-, oder Alkoxy-, wie Methoxy- oder Aethoxy-, oder Aryloxy-, wie Phenoxy-, oder Sulfophenoxy-Gruppen substituiert sind.

Ebenfalls interessante faserreaktive Reste sind Fluor- oder Chlor-1,3,5-triazinreste der Formel

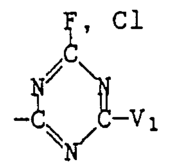

,

wobei als Substituenten $V_1$ am Triazinring insbesondere zu nennen sind:

$-NH_2$, Alkylamino-, N,N-Dialkylamino-, Cycloalkylamino-, N,N-Dicycloalkylamino-, Aralkylamino-, Arylaminogruppen, gemischt substituierte Aminogruppen, wie N-Alkyl-N-cyclohexylamino- und N-Alkyl-N-arylaminogruppen, ferner Aminogruppen, die heterocyclische Reste enthalten, welche weitere ankondensierte carbocyclische Ringe aufweisen können, und Aminogruppen, worin das Aminostickstoffatom Glied eines N-hetercyclischen Ringes ist, der gegebenenfalls weitere Heteroatome enthält, sowie Hydrazino und Semicarbazido. Die oben genannten Alkylreste können geradkettig oder verzweigt, niedrigmolekular oder höhermolekular sein, bevorzugt sind Alkylreste mit 1 bis 6 Kohlenstoffatomen; als Cycloalkyl-, Aralkyl- und Arylreste kommen insbesondere Cyclohexyl-, Benzyl-, Phenäthyl-, Phenyl-und Naphthylreste in Frage; heterocyclische Reste sind vor allem Furan-, Thiophen-, Pyrazol-, Pyridin-, Pyrimidin-, Chinolin-, Benzimidazol-, Benzthiazol-und Benzoxazolreste; und als Aminogruppen, worin das Aminostickstoffatom Glied eines N-heterocyclischen Ringes ist, kommen vorzugsweise Reste von sechsgliedrigen N-heterocyclischen Verbindungen in Betracht, die als weitere Heteroatome Stickstoff, Sauerstoff oder Schwefel enthalten können. Die oben genannten Alkyl-, Cycloalkyl-, Aralkyl- und Arylreste, die heterocyclischen Resten sowie die N-heterocyclischen Ringe können weitersubstituiert sein, z.B. durch: Halogen, wie Fluor, Chlor und Brom, Nitro, Cyan, Trifluormethyl, Sulfamoyl, Carbamoyl, $C_1$-$C_4$-Alkyl, $C_1$-$C_4$-Alkoxy, Acylaminogruppen, wie Acetylamino oder Benzoylamino, Ureido, Hydroxy, Carboxy, Sulfomethyl oder Sulfo. Als Beispiele für derartige Aminogruppen seien genannt: $-NH_2$, Methylamino, Aethylamino, Propylamino, Isopropylamino, Butylamino, Hexylamino, β-Methoxyäthylamino, γ-Methoxypropylamino, β-Aethoxyäthylamino, H,N-Dimethylamino, N,N-Diäthylamino, β-Chloräthylamino, β-Cyanäthylamino, γ-Cyanpropylamino, β-Carboxyäthylamino, Sulfomethylamino, β-Sulfoäthylamino, β-Hydroxyäthylamino, N-N-Di-β-hydroxyäthylamino, γ-Hydroxypropylamino, Benzylamino, Phenäthylamino, Cyclohexylamino, Phenylamino, Toluidino, Xylidino, Chloranilino, Anisidino, Phenetidino, N-Methyl-N-phenylamino, N-Aethyl-N-phenylamino, N-β-Hydroxyäthyl-N-phenylamino, 2-, 3- oder 4-Sulfoanilino, 2,5-Disulfoanilino, 4-Sulfomethylanilino, N-Sulfomethylanilino, 2-, 3-oder 4-Carboxyphenylamino, 2-Carboxy-5-sulfophenylamino, 2-Carboxy-4-sulfophenylamino, 4-Sulfonaphthyl-(1)-amino, 3,6-Disulfonaphthyl-(1)-amino, 3,6,8-Trisulfo naphthyl-(1)-amino, 4,6,8-Trisulfonaphthyl-(1)-amino, 1-Sulfonaphthyl(2)-amino, 1,5-Disulfonaphthyl-(2)-amino, 6-Sulfonaphthyl-(2)-amino, Morpholino, Piperidino, Piperazino, Hydrazino und Semicarbazido.

Die Halogentriazinylreste können auch mit einem zweiten Halogentriazinylrest oder Halogenpyrimidinylrest verknüpft sein. Beispiele für derartige Reste sind die folgenden:

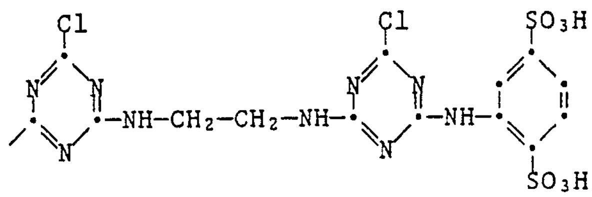

,

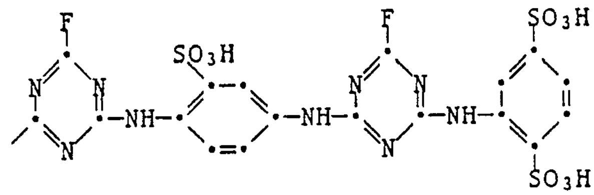

,

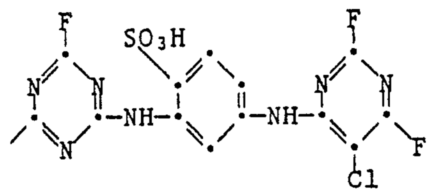

,

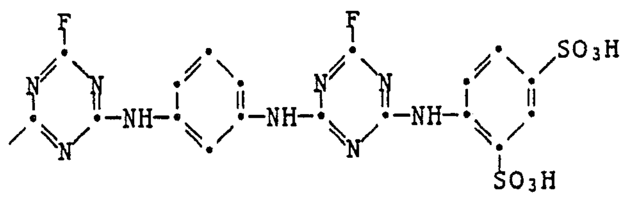

,

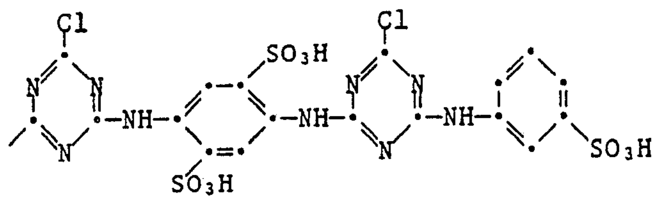

,

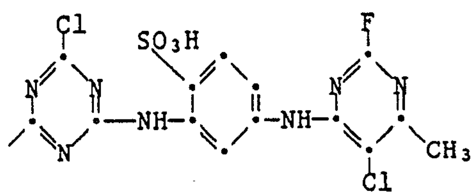

,

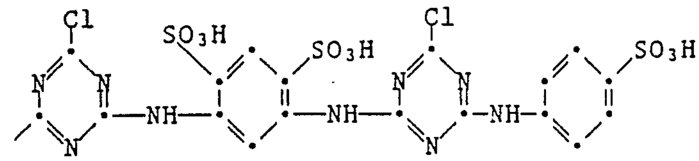

,

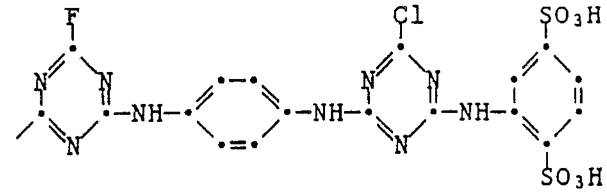

,

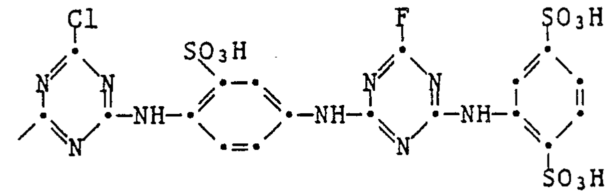

,

Weiterhin können die reaktiven Halogenatome in den oben genannten 2-Halogen-4-substituierten-triazinyl-Resten unter Bildung quartärer Salze noch gegen tertiäre Basen wie Trimethylamin, Triethylamin, Dimethyl-ßhydroxyethylamin, Triethanolamin, N-N-Dimethylhydrazin, Pyridin, α-, γ-Picolin, Nicotinsäure oder Isonicotinsäure ausgetauscht werden.

Die Halogentriazinylreste können über ein Brückenglied auch mit anderen Reaktivresten als Halogentriazinylresten verknüpft sein. Beispiele für derartige Reste sind die folgenden:

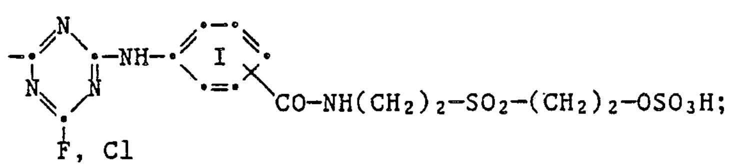

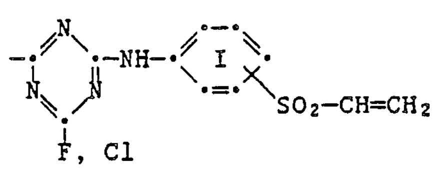

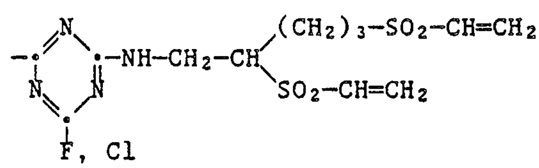

;

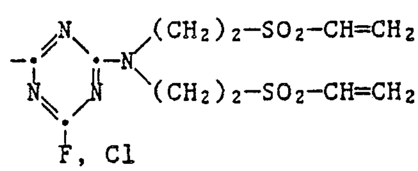

,

wobei der Phenylring I durch $C_1$-$C_4$-Alkyl, $C_1$-$C_4$-Alkoxy, Halogen, Carboxy und insbesondere Sulfo substituiert sein kann. Die Reaktivfarbstoffe der Formel (1) enthalten dann mindestens 2 oder 3 faserreaktive Reste.

Als Brückenglied zwischen dem Phenyl- oder Naphthylrest D und dem faserreaktiven Rest oder als Brückenglied zwischen zwei faserreaktiven Resten kommen die verschiedensten Reste in Betracht. Das Brückenglied ist z.B. ein aliphatischer, aromatischer oder heterocyclischer Rest; ferner kann das Brückenglied auch aus verschiedenen derartigen Resten zusammengesetzt sein. Das Brückenglied enthält in der Regel mindestens eine funktionelle Gruppe, z.B. die Carbonylgruppe oder die Aminogruppe, und ist an das Ringkohlenstoffatom des Phenyl- oder Naphthylrestes D über die funktionelle Gruppe, z.B. die Carbonyl- oder Aminogruppe, $-CH_2$-NH-oder ein Sauerstoffatom gebunden. Als aliphatischer Rest kommt z.B. ein Alkylenrest mit 1 bis 7 Kohlenstoffatomen oder dessen verzweigte Isomere in Betracht. Die C-kette des

Alkylenrestes kann durch ein Heteroatom, wie z.B ein Sauerstoffatom, unterbrochen sein. Als aromatischer Rest kommt z.B. ein Phenylrest, der durch $C_1$-$C_4$-Alkyl, wie z.B. Methyl oder Aethyl, $C_1$-$C_4$-Alkoxy, wie z.B. Methoxy oder Aethoxy, Halogen, wie z.B. Chlor, Carboxy oder Sulfo substituiert sein kann, und als heterocyclischer Rest kommt z.B. ein Piperazinrest in Betracht. Beispiele für solche Brückenglieder sind die folgenden Reste:

$-CO-N(R_1)-(CH_2)_{2-3}-$ ; $-CO-N(R_1)-\overset{|}{C}H-(CH_2)_3-$;

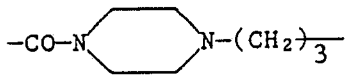 ; $-CO-N(R_1)-(CH_2)_2-O-(CH_2)_2-$ ;

$-N(R_1)-$ ; 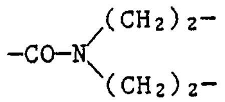 ; $-N(R_1)-CO-(CH_2)_3-$;

$-N(R_1)-(CH_2)_2-O-(CH_2)_2-$ ; $-O-(CH_2)_2-$ ;

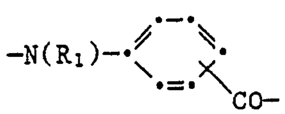 ; 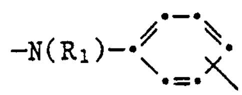 ; $-CH_2-N(R_1)-$ .

Als weiterer Rest, der über ein Brückenglied an den Phenyl- oder Naphthylrest D gebunden ist, und welcher mindestens eine Reaktivgruppe enthält, kommt z.B. ein nichtfaserreaktiver s-Triazinylrest in Betracht, der über ein Brückenglied mindestens einen faserreaktiven Rest enthält. Beispiele für solche nicht-faserreaktive Triazinylreste, welche mindestens einen Reaktivrest enthalten sind:

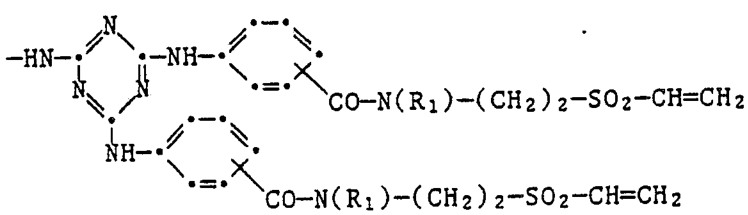 ;

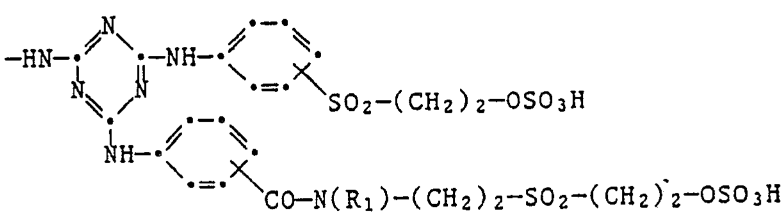 .

In den oben angegebenen Formeln bedeutet $R_1$ Wasserstoff oder $C_1$-$C_4$-Alkyl, das durch Halogen, Hydroxy, Cyan, $C_1$-$C_4$-Alkoxy, $C_1$-$C_4$-Alkoxycarbonyl, Carboxy, Sulfamoyl, Sulfo oder Sulfato substituiert sein kann.

Bevorzugt sind Reaktivfarbstoffe der Formel (1), worin U -CN, $-CONH_2$, $-SO_3H$ oder $-OSO_3H$ ist; vorzugsweise ist U $-CONH_2$ und insbesondere -CN.

Besonders bevorzugt sind die Reaktivfarbstoffe der Formel

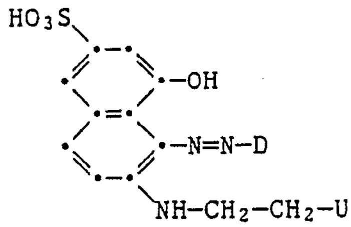

(2),

worin U -CN oder $-CONH_2$ ist, und D die unter Formel (1) angegebene Bedeutung hat.

Ganz besonders bevorzugt sind die Reaktivfarbstoffe der Formel (1) und insbesondere solche der Formel (2), worin D ein Rest der Formel

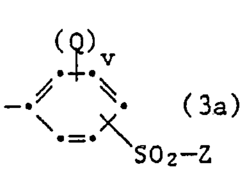

(3a),

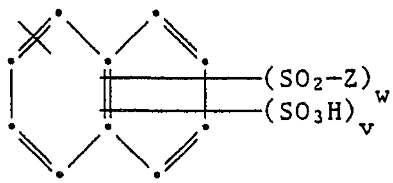

(3b) oder

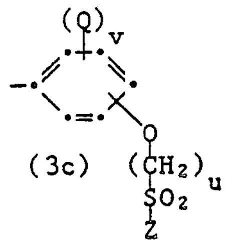

(3c)

ist, worin Q $C_1$-$C_4$-Alkyl, $C_1$-$C_4$-Alkoxy, Halogen, Carboxy oder Sulfo ist, v die Zahl 0, 1 oder 2 und w die Zahl 1 oder 2 bedeutet und u die unter Formel (1) angegebene Bedeutung hat, und Z β-Sulfatoäthyl, β-Thiosulfatoäthyl, β-Phosphatoäthyl, β-Acyloxyäthyl, β-Halogenäthyl oder Vinyl ist.

Als Beispiele für den Substituenten Q im Rest D seien genannt:

Alkylgruppen mit 1 bis 4 Kohlenstoffatomen, wie Methyl, Aethyl, Propyl, Isopropyl oder Butyl, Alkoxygruppen mit 1 bis 4 Kohlenstoffatomen, wie Methoxy, Aethoxy, Propoxy, Isopropoxy oder Butoxy, Halogenatome, wie Fluor, Chlor oder Brom.

Vorzugsweise bedeutet Q Methyl, Methoxy und Sulfo.

Der Substituent Q als Sulfo in den Formeln (3a) und (3c) sowie die $-SO_3H$ Gruppe in Formel (3b) ist vorzugsweise in ortho-Position zu der Azogruppe gebunden.

Als β-Halogenäthyl kommt für Z in Formel (3a), (3b) oder (3c) insbesondere der β-Chloräthylrest und als β-Acyloxyäthyl insbesondere der β-Acetoxyäthylrest in Betracht.

Ebenfalls ganz besonders bevorzugt sind die Reaktivfarbstoffe der Formel (1) und insbesondere solche der Formel (2) worin D ein Rest der Formel

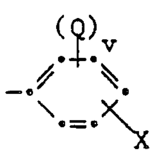

(4a),

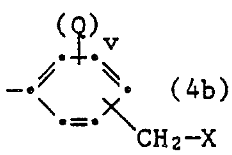

(4b) oder

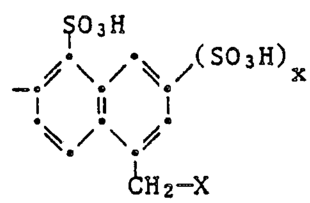

(4c)

und X ein Rest der Formel

$-NHCOCBr=CH_2$ (5a),

$-NHCOCHBrCH_2Br$ (5b),

$-NHCO(CH_2)_3SO_2-Z$ (5c) oder

$-N(R_{11})-SO_2-Z$ (5d)

ist, Q, Z und v die unter Formel (3a), (3b) oder (3c) angegebenen Bedeutungen haben, x die Zahl 0 oder 1 und $R_{11}$ Wasserstoff Methyl oder Aethyl ist.

In den Formeln (4a) und (4b) ist Q als Sulfogruppe vorzugsweise in ortho-Position zur Azogruppe gebunden.

Ferner sind ganz besonders bevorzugt Reaktivfarbstoffe der Formel (1) und insbesondere solche der Formel (2), worin D ein Rest der Formel

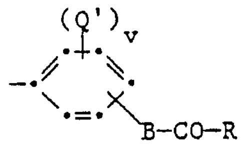

(6)

ist, Q′ $C_1$-$C_4$Alkyl, $C_1$-$C_4$-Alkoxy, Halogen, Carboxy, Sulfo oder -$SO_2$-Z, worin Z die unter Formel (3a), (3b) oder (3c) angegebene Bedeutung hat, ist, v die Zahl 0, 1 oder 2 ist, B eine direkte Bindung oder ein Rest $-(CH_2)_n-$ oder $-(CH_2)_n-$; n = 1, 2, 3, 4, 5 oder 6; R ein Rest der Formel

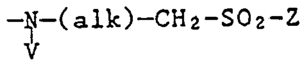

(7a)

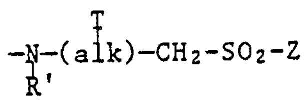

(7b)

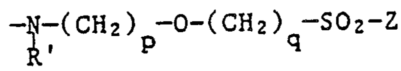

(7c)

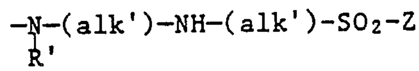

(7d)

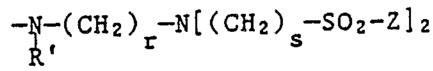

(7e) oder

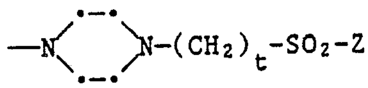

(7f),

worin R′ Wasserstoff oder $C_1$-$C_6$-Alkyl ist, alk einen Alkylenrest mit 1 bis 7 Kohlenstoffatomen oder dessen verzweigte Isomere darstellt, T Wasserstoff, Halogen, Hydroxy, Sulfato, Carboxy, Cyano, $C_1$-$C_4$-Alkanoyloxy $C_1$-$C_4$-Alkoxycarbonyl, Carbamoyl oder einen Rest -$SO_2$-Z bedeutet, V Wasserstoff, gegebenenfalls substituiertes $C_2$-$C_4$-Alkyl oder einen Rest der Formel

$-(\overset{T}{a\,|\,k})-CH_2-SO_2-Z$

worin (alk) die zuvor angegebene Bedeutung hat, alk′ unabhängig voneinander Polymethylenreste mit 2 bis 6 C-Atomen oder dessen verzweigte Iosmere, Z die unter Formel (3a), (3b) oder (3c) angegebene Bedeutung hat, p, q, r und t unabhängig voneinander je die Zahl 1, 2, 3, 4, 5 oder 6 bedeuten und s = 2, 3, 4, 5 oder 6 ist.

Für Q′ als $C_1$-$C_4$-Alkyl, $C_1$-$C_4$-Alkoxy und Halogen kommen die gleichen Reste wie unter Formel (3a), (3b) oder (3c) für Q angegeben in Betracht.

Der Rest B enthält 1 bis 6, vorzugsweise 1 bis 4 Kohlenstoffatome; Beispiele für B sind: Methylen, Aethylen, Propylen, Butylen, Methylenoxy, Aethylenoxy, Propylenoxy und Butylenoxy. Falls B einen Rest $-O-(CH_2)_n-$ darstellt, ist B durch das Sauerstoffatom an den Benzolring gebunden. Vorzugsweise ist B die direkte Bindung.

Der Alkylenrest alk ist vorzugsweise Methylen, Aethylen, Methylmethylen, Propylen oder Butylen. Der Substituent T ist als Alkanoyloxyrest insbesondere Acetyloxy, Propionyloxy oder Butyryloxy, und als Alkoxycarbonylrest insbesondere Methoxycarbonyl, Aethoxycarbonyl oder Propyloxycarbonyl. Falls V ein Alkylrest ist, kann dieser Methyl, Aethyl, Propyl, Isopropyl, Butyl, Isobutyl, sec-Butyl oder tert-Butyl sein. Derivate der Carboxy- oder Sulfogruppe sind z.B. Carbamoyl, N-Methyl-, N-Aethyl-, N,N-Dimethyl- und N,N-Diäthylcarbamoyl, Cyan, Acetyl, Propionyl, Butyryl, Methoxycarbonyl, Aethoxycarbonyl, Propyloxycarbonyl, Sulfamoyl, H-Methyl-, N-Aethyl-, H,N-Dimethyl- und N,N-Diäthylsulfamoyl, Methylsulfonyl, Aethylsulfonyl und Propylsulfonyl. Die Polymethylenreste alk′ sind vorzugsweise Aethylen, Propylen oder Butylen. Die Indizes p, q und t sind unabhängig voneinander und vorzugsweise 2, 3 oder 4. Die Indizes r und s sind unabhängig voneinander vorzugsweise 2.

Falls T ein Rest -$SO_2$-Z und R′ Wasserstoff ist, hat der Rest der Formel (7b) vorzugsweise die Form

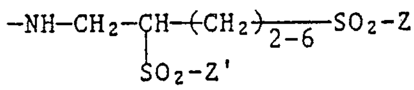
(7g)

worin Z und Z′ unabhängig voneinander β-Sulfatoäthyl, β-Thiosulfatoäthyl, β-Phosphatoäthyl, β-Acyloxyäthyl, β-Halogenäthyl oder Vinyl ist. Eine wichtige Formelvariante dieses Restes ist:

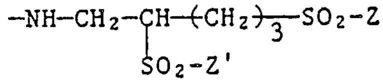
(7h)

worin Z = Z′ ist, wobei Z bzw. Z′ die oben angegebene Bedeutung hat; insbesonere ist Z bzw. Z′ B-Sulfatoäthyl, β-Chloräthyl oder Vinyl.

Ganz besonders bevorzugt sind ebenfalls Reaktivfarbstoffe der Formel (1) und insbesondere solche der Formel (2), worin D ein Rest der Formel

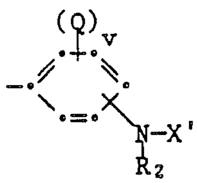
(9a),
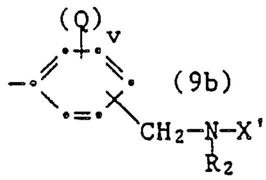
(9b) oder
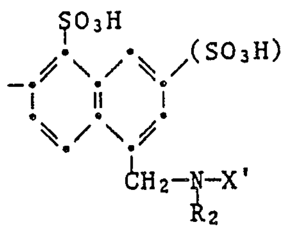
(9c)

ist, worin Q die unter Formel (3a), (3b) oder (3c) angegebene Bedeutung hat, $R_2$ Wasserstoff, Methyl oder Aethyl, X′ ein Triazin-, oder Pyrimidin-Reaktivrest, v die Zahl 0, 1 oder 2 und x die Zahl 0 oder 1 ist. Falls X′ ein Triazin-Reaktivrest ist, bedeutet U in Formel (1) bzw. (2) vorzugsweise CH. Bedeutet Q in den Formeln (9a) und (9b) eine Sulfogruppe, so ist diese vorzugsweise in ortho-Stellung zur Azogruppe gebunden.

Von den Reaktivfarbstoffen der Formeln (1) und (2), worin D ein Rest der Formel (6) ist, sind besonders wichtig die Reaktivfarbstoffe, worin D ein Rest der Formel

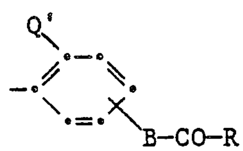
(8)

ist, Q′ Wasserstoff oder Sulfo, B eine direkte Bindung oder ein Rest $-CH_2-$ oder $-O-CH_2CH_2-$, R ein Rest der Formel (7a), (7b), (7c) oder (7f), Z β-Sulfatoäthyl, β-Chloräthyl oder Vinyl, alk Methylen oder Aethylen, T Wasserstoff und V Wasserstoff oder ein Rest der Formel

$-(\overset{T}{alk})-CH_2-SO_2-Z$

worin alk, T und Z die angegebenen Bedeutungen haben, oder alk ein Rest

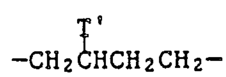
,

T′ ein Rest $-SO_2Z$, worin Z die oben angegebene Bedeutung hat, und V Wasserstoff, R′ Wasserstoff, p die Zahl 2, q die Zahl 2 und t die Zahl 3 ist.

Besonders wichtig sind ferner die Reaktivfarbstoffe der Formel (1) und insbesondere solche der Formel (2), worin D ein Rest der Formel (9a), (9b) oder (9c) ist und X′ 2,4,5-Trichlorpyrimidinyl-(6)- oder 2,4-Difluor-5-chlorpyrimidinyl-(6) oder ein Rest der Formel

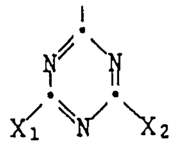

(10)

ist, worin Xi Fluor, Chlor, Brom, Sulfo, $C_1$-$C_4$-Alkylsulfonyl, Phenylsulfonyl oder Carboxypridinium, und $X_2$ -OH, eine gegebenenfalls substituierte Alkoxygruppe, -SH, eine gegebenenfalls substituierte Alkylthio-oder Arylthiogruppe, $-NH_2$ oder der Rest eines aliphatischen, aromatischen oder heterocyclischen Amins ist, oder $X'$ ein Rest der Formel

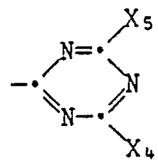

(12)

ist, worin $X_4$ Fluor, Chlor, Brom, Sulfo, $C_1$-$C_4$-Alkylsulfonyl, Phenylsulfonyl, Carboxypyridinium, $-NH_2$ oder der Rest eines aliphatischen, aromatischen oder heterocyclischen Amins ist, oder die gleich Bedeutung hat wie $X_5$, unabhängig von diesem, und $X_5$ ein Rest der Formel

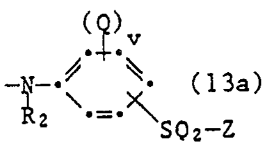

(13a),

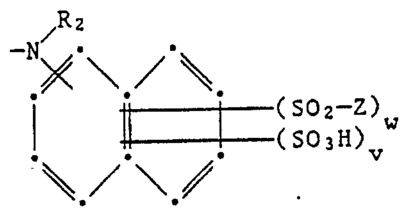

(13b) oder

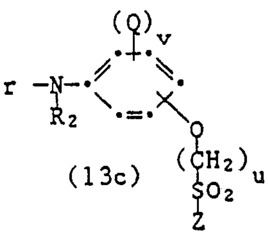

(13c)

ist, worin Q und v die unter Formel (3a), (3b) oder (3c) angegebenen Bedeutungen haben, und w die Zahl 1 oder 2 bedeutet und u die Zahl 2, 3, 4 oder 5 ist, Z $\beta$-Sulfatoäthyl, $\beta$-Thiosulfatoäthyl, $\beta$-Phosphatoäthyl, $\beta$-Acyloxyäthyl, $\beta$-Halogenäthyl oder Vinyl, und $R_2$ Wasserstoff, Methyl oder Aethyl ist, oder $X'$ ist ein Rest der Formel

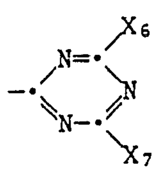

(14),

worin $X_6$ Fluor, Chlor, Brom, Sulfo, $C_1$-$C_4$-Alkylsulfonyl, Phenylsulfonyl, Carboxypyridinium, $-NH_2$ oder der Rest eines aliphatischen, aromatischen oder heterocyclischen Amins ist, oder die gleiche Bedeutung hat wie $X_7$, unabhängig von diesem, und $X_7$ ein Rest der Formel

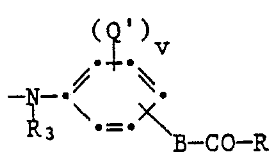

(15)

ist, worin $Q'$ und v die unter Formel (6) angegebenen Bedeutungen haben, $R_3$ Wasserstoff oder $C_1$-$C_4$-

Alkyl, das durch Halogen, Hydroxy, Cyan, $C_1$-$C_4$-Alkoxy, $C_1$-$C_4$-Alkoxycarbonyl, Carboxy, Sulfamoyl, Sulfo oder Sulfato substituiert sein kann, ist, B eine direkte Bindung oder ein Rest $-(CH_2)_n$ oder $-O-(CH_2)_n$; n = 1, 2, 3, 4, 5 oder 6; R ein Rest der Formel

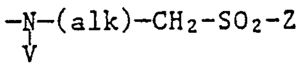 (7a)

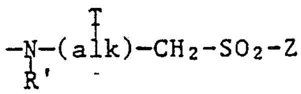 (7b)

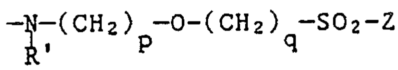 (7c)

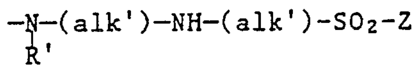 (7d)

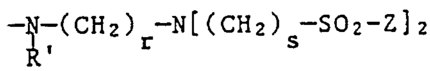 (7e) oder

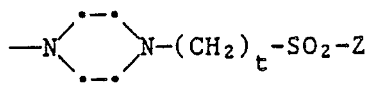 (7f),

worin R′ Wasserstoff oder $C_1$-$C_6$-Alkyl ist, alk einen Alkylenrest mit 1 bis 7 Kohlenstoffatomen oder dessen verzweigte Isomere darstellt, T Wasserstoff, Halogen, Hydroxy, Sulfato, Carboxy, Cyano, $C_1$-$C_4$-Alkanoyloxy, $C_1$-$C_4$-Alkoxycarbonyl, Carbamoyl oder einen Rest $-SO_2$-Z bedeutet, V Wasserstoff, gegebenenfalls substituiertes $C_1$-$C_4$-Alkyl oder einen Rest der Formel

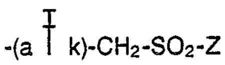

worin (alk) die zuvor angegebene Bedeutung hat, alk′ unabhängig voneinander Polymethylenreste mit 2 bis 6 C-Atomen oder dessen verzweigte Iosmere, Z β-Sulfatoäthyl, β-Thiosulfatoäthyl, β-Phosphatoäthyl, β-Acyloxyäthyl, β-Halogenäthyl oder Vinyl ist, p, q, r und t unabhängig voneinander je die Zahl 1, 2, 3, 4, 5 oder 6 bedeuten und s = 2, 3, 4, 5 oder 6 ist, oder $X_7$ ein direkt an den Triazinring gebundener Rest der Formel (7a), (7b), (7c), (7d), (7e) oder (7f) ist, worin Z, alk, T, V, R′, alk′, p, q, r, s und t die angegebenen Bedeutungen haben.

Ganz besonders wichtig sind die Reaktivfarbstoffe, worin in Formel (10) $X_1$ Fluor oder Chlor und $X_2$ $C_1$-$C_4$-Alkoxy, $C_1$-$C_4$-Alkoxy-$C_1$-$C_4$-alkoxy; $-NH_2$, $C_1$-$C_4$-Alkylamino, N,N-Di-$C_1$-$C_4$-alkylamino, Phenylamino, N-$C_1$-$C_4$-Alkyl-N-phenylamino oder Naphthylamino, worin die Alkylreste durch $C_1$-$C_4$-Alkoxy, Cyan, Halogen, Hydroxy, Sulfo oder Sulfato substituiert sein können, und der Phenyl- bzw. Naphthylrest durch $C_1$-$C_4$-Alkyl, $C_1$-$C_4$-Alkoxy, Halogen, Carboxy oder Sulfo substituiert sein kann; oder Morpholino ist; oder $X_1$ Fluor oder Chlor, und $X_2$ ein Rest der Formel

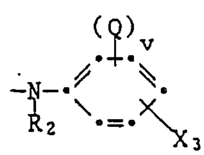 (11),

ist, worin $R_2$ Wasserstoff, Methyl oder Aethyl ist, Q $C_1$-$C_4$-Alkyl, $C_1$-$C_4$-Alkoxy, Halogen, Carboxy oder Sulfo, und v die Zahl 0, 1 oder 2 ist, und $X_3$ ein Rest der Formel

$-NHCOCBr=CH_2$ (5a),

$-NHCOCHBr-CH_2Br$ (5b),

$-NHCO-(CH_2)_3-SO_2-Z$ (5c) oder

$-N(R_1)-SO_2-Z$ (5d),

$R_1$ Wasserstoff, Methyl oder Aethyl und Z β-Sulfatoäthyl, β-Thiosulfatoäthyl, β-Phosphatoäthyl, β-Acyloxyäthyl, β-Halogenäthyl oder Vinyl ist.

Ganz besonders wichtig sind ferner die Reaktivfarbstoffe, worin in Formel (14) $X_6$ Fluor, Chlor, $-NH_2$, $C_1$-$C_4$-Alkylamino, N,N-Di-$C_1$-$C_4$-alkylamino, Phenylamino, N-$C_1$-$C_4$-Alkyl-N-phenylamino oder Naphthylamino, worin die Alkylreste durch $C_1$-$C_4$-Alkoxy, Cyan, Halogen, Hydroxy, Sulfo oder Sulfato substituiert sein können, und der Phenyl- bzw. Naphthylrest durch $C_1$-$C_4$-Alkyl, $C_1$-$C_4$-Alkoxy, Halogen, Carboxy oder Sulfo substituiert sein kann, oder Morpholino oder ein Rest der Formel

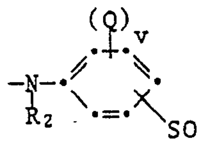 (13a), 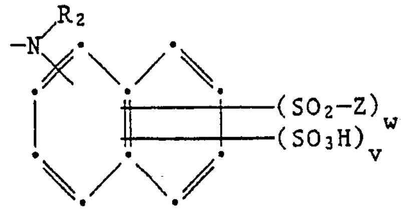 (13b) oder 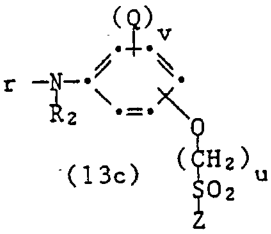

(13c)

ist, worin Q $C_1$-$C_4$-Alkyl, $C_1$-$C_4$-Alkoxy, Halogen, Carboxy oder Sulfo ist, v die Zahl 0, 1 oder 2 und w die Zahl 1 oder 2 bedeutet und u die Zahl 2, 3,4 oder 5 ist, Z die unter Formel (7a) angegebene Bedeutung hat, und $R_2$ Wasserstoff, Methyl oder Aethyl ist, und/oder worin $X_7$ ein Rest der Formel (7a), (7b), (7c) oder (7f), Z $\beta$-Sulfatoäthyl, $\beta$-Chloräthyl oder Vinyl, alk Methylen oder Aethylen, T Wasserstoff und V Wasserstoff oder ein Rest der Formel

$-(a\underset{T}{|}k)-CH_2-SO_2-Z$

ist, worin alk ein Rest $-CH_2\overset{\prime}{C}HCH_2CH_2-$, T ein Rest $-SO_2Z$, worin Z die oben angegebene Bedeutung hat, V Wasserstoff, R′ Wasserstoff, p und q je die Zahl 2 und 6 die Zahl 3 ist, oder worin $X_7$ ein Rest der Formel

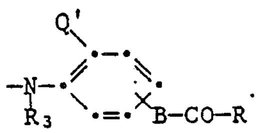

(16)

ist, worin $R_3$ Wasserstoff oder $C_1$-$C_4$-Alkyl, das durch Halogen, Hydroxy, Cyan, $C_1$-$C_4$-Alkoxy, $C_1$-$C_4$-Alkoxycarbonyl, Carboxy, Sufamoyl, Sulfo oder Sulfato substituiert sein kann, B eine direkte Bindung oder ein Rest $-CH_2-$ oder $-O-CH_2CH_2-$, R ein Rest der Formel (7a), (7b), (7c) oder (7f), Z $\beta$-Sulfatoäthyl, $\beta$-Chloräthyl oder Vinyl, alk Methylen, oder Aethylen, T Wasserstoff und V Wasserstoff oder ein Rest der Formel

$-(a\overset{T}{|}k)-CH_2-SO_2-Z$

ist, worin alk, T und Z die angegebenen Bedeutungen haben, oder alk ein Rest

$$-CH_2\overset{T'}{C}HCH_2CH_2-$$

T′ ein Rest $-SO_2Z$, worin Z die oben angegebene Bedeutung hat, und V Wasserstoff R′ Wasserstoff, p die Zahl 2, m die Zahl 2 und q die Zahl 3 ist, oder $X_7$ ein Rest der Formel

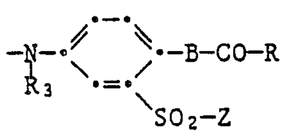

(17)

ist, worin $R_3$ Wasserstoff, Methyl oder Aethyl, B eine direkte Bindung oder ein Rest $-CH_2-$ oder $-O-CH_2CH_2-$, R ein Rest der Formel (7a), (7b), (7c) oder (7f), Z $\beta$-Sulfatoäthyl, $\beta$-Chloräthyl oder Vinyl, alk Methylen oder Aethylen, T Wasserstoff und V Wasserstoff oder ein Rest der Formel $-(a\underset{T}{|}k)-CH_2-SO_2-Z$

worin alk, T und Z die oben angegebenen Bedeutungen haben, oder alk ein Rest

$-CH_2$ $HCH_2CH_2$-, T ein Rest $-SO_2-Z$, worin Z die oben angegebene Bedeutung hat und V Wasserstoff, R′ Wasserstoff, p und q je die Zahl 2 und t die Zahl 3 ist.

Insbesondere bedeutet $R_3$ in Formel (16) Wasserstoff, Methyl oder Aethyl.

Am interessantesten sind die Farbstoffe der Formeln

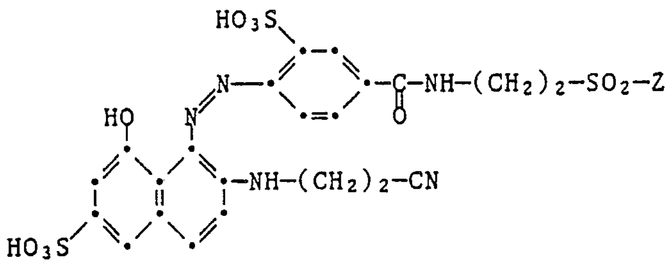

(18) und

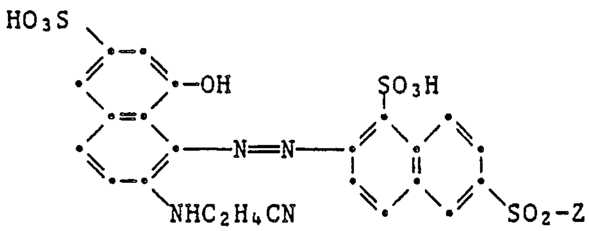

(19),

worin Z β-Sulfatoäthyl, β-Chloräthyl oder Vinyl ist; und

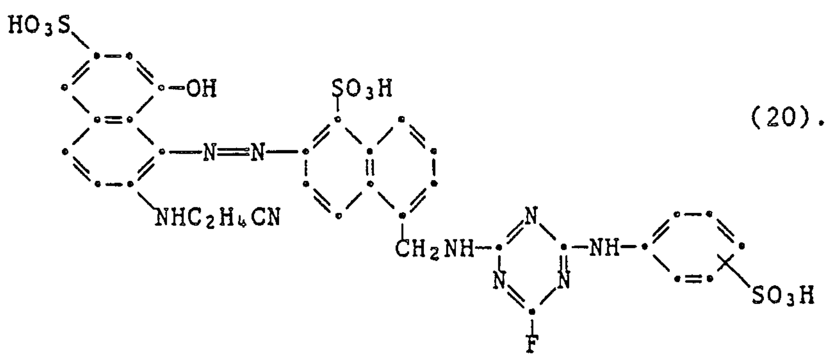

(20).

Gegenstand der Erfindung ist ferner ein Verfahren zur Herstellung von Reaktivfarbstoffen der Formel (1), welches dadurch gekennzeichnet ist, dass man in einen entsprechenden Farbstoff, worin D keinen Reaktivrest enthält, oder in ein Farbstoffvorprodukt mit dem Rest D mindestens einen Reaktivrest einführt, oder dass man im Fall der Verwendung von Farbstoffvorprodukten, die erhaltenen Zwischenprodukte in die gewünschten Endfarbstoffe überführt, und gegebenenfalls eine weitere Umwandlungsreaktion anschliesst.

Eine Ausführungsform des erfindungsgemässen Verfahrens ist dadurch gekennzeichnet, dass man ein Amin der Formel

$D'-NH_2$ (21)

worin D′ die für D in Formel (1) angegebene Bedeutung hat oder ein Phenyl- oder Naphthylrest D ist, welcher frei von Reaktivresten ist, diazotiert und auf eine Kupplungskomponente der Formel

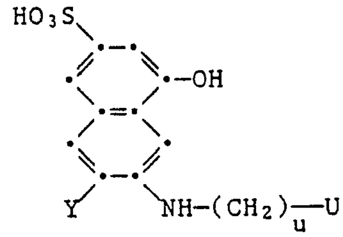

(22),

worin u, U und Y die unter Formel (1) angegebenen Bedeutungen haben, kuppelt, und falls D′ frei von Reaktivresten ist, mindestens einen Reaktivrest in D′ einführt, und gegebenenfalls eine weitere Umwandlungsreaktion anschliesst.

Die Diazotierung der Diazokomponente der Formel (21) erfolgt in der Regel durch Einwirken salpetriger Säure in wässrig-mineralsaurer Lösung bei tiefer Temperatur, die Kupplung auf die Kupplungskomponente der Formel (22) bei sauren, neutralen bis schwach alkalischen pH-Werten.

Gegebenenfalls wird an das erfindungsgemässe Verfahren eine weitere Umwandlungsreaktion angeschlossen. Bei der Herstellung der Endfarbstoffe aus Vorprodukten handelt es sich um Kupplungen, die zu Azofarbstoffen führen.

Da die einzelnen oben angegebenen Verfahrensschritte in unterschiedlicher Reihenfolge ausführt werden können, sind verschiedene Ausführungsformen möglich. Im allgemeinen führt man die Umsetzung schrittweise nacheinander aus, wobei die Reihenfolge der einfachen Reaktionen zwischen den einzelnen Reaktionskomponenten vorteilhafterweise sich nach den besonderen Bedingungen richtet.

Dabei hängt es von der Struktur der Ausgansstoffe ab, welche der möglichen Verfahrensvarianten die besten Resultate ergeben, oder unter welchen speziellen Bedingungen, z.B. bei welcher Kondensationstemperatur, die Reaktion am vorteilhaftesten auszuführen ist.

Da unter bestimmten Voraussetzungen Hydrolyse z.B. eines Halogentriazinrestes eintritt, muss ein Zwischenprodukt, welches Acetylaminogruppen enthält, zwecks Abspaltung der Acetylgruppen verseift werden, bevor mit einem Halogentriazin kondensiert wird. Welche Reaktion zweckmässigerweise zuerst ausführt wird, ist von Fall zu Fall verschieden und richtet sich vor allem nach der Löslichkeit der beteiligten Aminoverbindungen und der Basizität der zu acylierenden Aminogruppen.

Eine abgewandelte Ausführungsform des Verfahrens besteht darin, zunächst einen Farbstoff herzustellen, der eine Vorstufe des Reaktivrestes enthält, und diese nachträglich in die Endstufe umzuwandeln, z.B. durch Veresterung oder eine Additionsreaktion. Beispielsweise kann man einen Farbstoff mit dem Rest HO-$CH_2CH_2$-herstellen und das Zwischenprodukt vor oder nach der Acylierung mit Schwefelsäure umsetzen, so dass die Hydroxygruppe in die Sulfatogruppe übergeführt wird; oder man verwendet einen analogen Farbstoff mit der Gruppe $H_2C=CH$- und lagert an das Zwischenprodukt Thioschwefelsäure an, wobei ein Rest $HO_3SS$-$CH_2CH_2$-entsteht. Die Sulfatierung der Hydroxygruppe in einem Farbstoff der Formel (1) oder einem geeigneten Vorprodukt, erfolgt z.B. durch Umsetzung mit konzentrierter Schwefelsäure bei 0°C bis mässig erhöhter Temperatur. Die Sulfatierung kann auch durch Reaktion der Hydroxyverbindung mit zwei Aequivalenten Chlorsulfonsäure pro Hydroxygruppe in einem polaren organischen Lösungsmittel, wie beispielsweise H-Methylpyrrolidon, bei 10 bis 80°C erfolgen. Vorzugsweise erfolgt die Sulfatierung durch Eintragen der betreffenden Verbindung in Schwefelsäuremonohydrat bei Temperaturen zwischen 5 und 15°C. Die Einführung eines anderen Reaktivrestes in eine Verbindung der Formel (1) oder ein Zwischenprodukt anstelle eines Halogenatoms oder der Sulfatogruppe, beispielsweise einer Thiosulfato-oder Phosphatogruppe, erfolgt in an sich bekannter Weise. Der Weg der Herstellung über eine Zwischenstufe des Reaktivrestes geht in vielen Fällen einheitlich und vollständig.

Ausserdem können Eliminierungsreaktionen an die Synthese angeschlossen werden. Beispielsweise kann man Reaktivfarbstoffe der Formel (1), welche Sulfatoäthylsulfonylreste enthalten, mit halogenwasserstoffabspaltenden Mitteln, wie Natriumhydroxid, behandeln, wobei die Sulfatoäthylsulfonylreste in Vinylsulfonylreste übergehen.

Die Einführung mindestens eines faserreaktiven Restes in die Diazokomponente der Formel (21) oder in den von faserreaktiven Gruppen freien Farbstoff der Formel (1) erfolgt in an sich bekannter Weise; so wird z.B. die Kondensation eines 2,4,6-Trihalogen-s-triazins oder eines Pyrimidins mit dem organischen Farbstoff der Formel (1), welcher frei von Reaktivresten ist, bzw. der eine Gruppe -$N(R_1)H$ enthaltenden diazotierbaren Komponente der Formel (21) vorzugsweise in wässriger Lösung oder Suspension, bei niedrigen Temperaturen, vorzugsweise zwischen 0° und 5°C und bei schwach saurem, neutralem bis schwach alkalischem pH-Wert ausgeführt. Vorteilhaft wird der bei der Kondensation freiwerdende Halogenwasserstoff

laufend durch Zugabe wässriger Alkalihydroxide, -carbonate oder -bicarbonate neutralisiert. Für die mögliche weitere Umsetzung der so erhaltenen Halogentriazinfarbstoffe bzw. für die Umsetzung des 2,4,6-Trihalogen-s-triazins mit Verbindungen, welche den Rest der Formel (11), (15), (16) oder (17) einführen, setzt man die freien Amine oder deren Salze, bevorzugt in Form des Hydrochlorids, ein. Die Umsetzung wird bei Temperaturen etwa zwischen 0 und 40 °C, bevorzugt zwischen 5 und 25 °C, unter Zusatz säurebindender Mittel, bevorzugt Natriumcarbonat, in einem pH-Bereich von 2 bis 8, bevorzugt 5 bis 6,5, durchgeführt.

Die Kondensation des Halogentriazins mit einer Verbindung, welche den Rest der Formel (11), (15), (16) oder (17) einführt, kann vor oder nach der Kondensation des Halogentriazins mit einem von Reaktivresten freien Farbstoff der Formel (1) geschehen. Die Kondensation des Halogentriazins mit einer Verbindung, welchen den Rest der Formel (11), (15), (16) oder (17) einführt, erfolgt vorzugsweise in wässriger Lösung oder Suspension, bei niedriger Temperatur und bei schwach saurem bis neutralem pH-Wert. Auch hier wird der bei der Kondensation freiwerdende Halogenwasserstoff vorteilhafterweise durch laufende Zugabe von wässrigen Alkalihydroxiden, -carbonaten oder -bicarbonaten neutralisiert.

Die Verbindungen welche den Rest der Formel (11), (15), (16) oder (17) einführen, können hergetellt werden, indem man z.B. die entsprechenden Aminobenzoesäure- oder Aminonaphthoesäurechloride bzw. die entsprechenden Sulfonsäurechloride mit Aminen, welche den Resten der Formel (7a) bis (7f) entsprechen, kondensiert; oder man geht von einem Nitrobenzoyl- oder Nitronaphthoylchlorid bzw. -sulfochlorid aus, kondensiert mit dem Amin, und reduziert die Nitrogruppe zur Aminogruppe. Nach einer anderen beschriebenen Methode kann man das Säurechlorid mit einem ungesättigten aliphatischen Amin umsetzen, und an die Doppelbindung des Säureamids 2-Mercaptoäthanol bei Temperaturen zwischen 50 ° und 180 ° C mit Hilfe katalytischer Mengen eines Radikalbildners oder von Schwefel anlagern. Die dadurch erhaltenen Hydroxyäthylthioäther-Verbindungen können auch hergestellt werden, indem man das Säurechlorid mit einem Halogenalkylamin kondensiert, und das Kondensationsprodukt mit 2-Mercaptoäthanol und Natriumalkoholat in Alkohol erwärmt. Die Thioätherverbindungen werden dann noch zu den entsprechenden Sulfonen oxydiert.

Die Oxydation der Thioätherverbindungen zu den Sulfonen kann nach verschiedenen Methoden erfolgen, beispielsweise mit Wasserstoffperoxid mit oder ohne Zusatz von Wolfram- oder Vanadinverbindungen als Katalysatoren, ferner mit Peressigsäure, Kaliumpermanganat oder Chromsäure, oder mit Chlor/Salzsäure je in wässrigem, wässrig-organischem oder organischem Medium.

Die so erhältlichen Carbonsäureamide bzw. Sulfonsäureamide, in denen die Gruppierung $-SO_2-Z$ eine β-Hydroxyäthylsulfonylgruppe darstellt, können durch Behandeln mit Sulfatierungsmitteln, Phosphorylierungsmitteln, Halogenierungsmitteln, Alkyl- oder Arylsulfonsäurehalogeniden, Alkyl-oder Arylcarbonsäurehalogeniden oder Alkyl- oder Arylcarbonsäureanhydriden in die entsprechenden Produkte überführt werden, in denen die Gruppierung $-SO_2-Z$ die Gruppierung $-SO_2-CH_2-CH_2-O-SO_3H$, $-SO_2-CH_2-CH_2-O-PO_3H_2$, $-SO_2-CH_2-CH_2$-Halogen oder $-SO_2-CH_2-CH_2-O$-Acyl bedeutet.

Geeignete Sulfatierungsmittel sind hierbei beispielsweise konzentrierte Schwefelsäure sowie Chlorsulfonsäure und Amidosulfonsäure oder andere Schwefeltrioxid abgebende Verbindungen. Geeignete Phosphorylierungsmittel sind hierbei beispielsweise konzentrierte Phosphorsäure, Pyro-, Meta-oder Polyphosphorsäure, Polyphosphorsäurealkylester, Phosphoroxichlorid oder Gemische aus Phosphorsäure und Phosphor-(V)-oxid. Als Halogenierungsmittel können beispielsweise Thionylchlorid oder Thionylbromid verwendet werden.

Ein Ausführungsform des erfindungsgemässen Verfahrens ist dadurch gekennzeichnet, dass man in einen von faserreaktiven Resten freien Farbstoff der Formel (1) oder in eine Verbindung der Formel (21), welche frei von faserreaktiven Resten ist, in an sich bekannter Weise einen oder zwei Reste der Formel

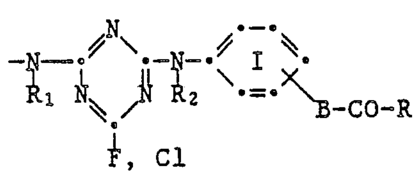

(23)

einführt, wobei $R_1$, $R_2$, B und R die oben angegebenen Bedeutungen haben, oder dass man, im Falle der Verwendung von Farbstoffvorprodukten der Formel (21), die erhaltenen Zwischenprodukte in die gewünschten Endfarbstoffe überführt, und gegebenenfalls eine weitere Umwandlungsreaktion anschliesst.

Das molare Verhältnis der Ausgangsstoffe muss der Zusammensetzung des Endproduktes entsprechend gewählt werden, je nachdem ob nur ein Rest oder zwei Reste der Formel (23) in dem Reaktivfarbstoff der Formel (1) vorhanden sein sollen.

Die Einführung eines Restes oder zweier Reste der Formel (23) kann auch schrittweise erfolgen; so erhält man die Reaktivfarbstoffe der Formel (1), z.B. indem man einen organischen Farbstoff der Formel (1), welcher frei von faserreaktiven Gruppen ist oder ein Farbstoffvorprodukt der Formel (21), welches frei von faserreaktiven Gruppen ist, mit mindestens ein Aequivalent eines s-Triazins der Formel

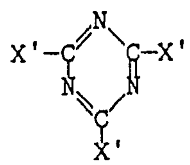

(24),

und mit mindestens einem Aequivalent eines Amins der Formel

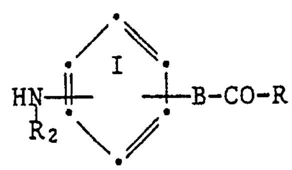

(25)

in beliebiger Folge zu einem Reaktivfarbstoff der Formel (1) umsetzt, wobei $R_1$, $R_2$, B, und R die oben angegebenen Bedeutungen haben, und X′ unabhängig voneinander ein Halogenatom bedeuten; oder im Falle der Verwendung von Farbstoffvorprodukten, die erhaltenen Zwischenprodukte in die gewünschte Endfarbstoffe überführt.

Da die einzelnen oben angegebenen Verfahrensschritte in unterschiedlicher Reihenfolge, gegebenenfalls teilweise auch gleichzeitig, ausgeführt werden können, sind verschiedene Ausführungsformen möglich. Im allgemeinen führt man die Umsetzung schrittweise nacheinander aus, wobei die Reihenfolge der einfachen Reaktionen zwischen den einzelnen Reaktionskomponenten vorteilhafterweise sich nach den besonderen Bedingungen richtet.

Eine bevorzugte Ausführungsform des erfindungsgemässen Verfahrens ist dadurch gekennzeichnet, dass man eine Kupplungskomponente der Formel

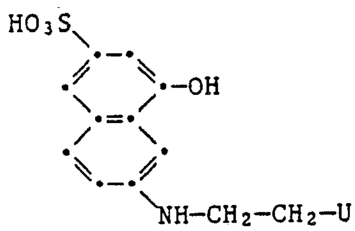

(26)

verwendet, worin U die unter Formel (2) angegebene Bedeutung hat.

Eine besonders bevorzugte Ausführungsform des erfindungsgemässen Verfahrens ist dadurch gekennzeichnet, dass man eine Diazokomponente der Formel (21) verwendet, worin D die unter Formel (3a), (3b), (3c), (4a), (4b), (4c), (6), (9a), (9b) oder (9c) angegebene Bedeutung hat, und Z ausser der angegebenen Bedeutung noch β-Hydroxyäthyl sein kann. Z als β-Hydroxyäthyl kann im Anschluss an die Kupplungsreaktion in die für Z angegebenen faserreaktiven Reste umgewandelt werden.

Eine ganz besonders bevorzugte Ausführungsform des erfindungsgemässen Verfahrens ist dadurch gekennzeichnet, dass man eine Diazokomponente der Formel (21) verwendet, worin D die unter Formel (8) angegebene Bedeutung hat, oder worin D die unter Formel (9a), (9b) oder (9c) angegebene Bedeutung hat und X′ ein Triazin- oder Pyrimidinrest, insbesondere ein 2,4,5-Trichlorpyrimidinyl-(6)- oder 2,4-Difluor-5-chlorpyrimidinyl-(6)-Rest ist.

Eine ebenfalls ganz besonders bevorzugte Ausführungsform des erfindungsgemässen Verfahrens ist dadurch gekennzeichnet, dass man eine Diazokomponente der Formel (21) verwendet, worin D ein Rest der Formel (9a), (9b) oder (9c) ist und X′ ein Rest der Formel (10) ist, worin $X_1$ und $X_2$ die unter Formel (10) angegebenen Bedeutungen haben, insbesondere $X_1$ Fluor oder Chlor, und $X_2$ $C_1$-$C_4$-Alkoxy, $C_1$-$C_4$-Alkoxy-

$C_1$-$C_4$-Alkoxy; -$NH_2$, $C_1$-$C_4$-Alkylamino, N,N-Di-$C_1$-$C_4$-alkylamino, Phenylamino, N-$C_1$-$C_4$-Alkyl-N-phenylamino oder Naphthylamino, worin die Alkylreste durch $C_1$-$C_4$-Alkoxy, Cyan, Halogen, Hydroxy, Sulfo oder Sulfato substituiert sein können, und der Phenyl-bzw. Naphthylrest durch $C_1$-$C_4$-Alkyl, $C_1$-$C_4$-Alkoxy, Halogen, Carboxy oder Sulfo substituiert sein kann; oder Morpholino ist; oder worin $X_1$ Fluor oder Chlor, und $X_2$ ein Rest der Formel (11) ist und Q, v, $R_2$ und $X_3$ die unter Formel (11) angegebenen Bedeutungen haben; oder dass man eine Diazokomponente der Formel (21) verwendet, worin D ein Rest der Formel (9a), (9b) oder (9c) ist und $X'$ ein Rest der Formel (12) oder (14) ist, worin $R_3$, $X_3$, $X_4$, $X_5$, $X_6$ und $X_7$ die oben angebenen Bedeutungen haben. Eine ebenfalls ganz besonders bevorzugte Ausführungsform des erfindungsgemässen Verfahrens ist dadurch gekennzeichnet, dass man eine Diazokomponente der Formel (21), worin $D'$ ein Rest der Formel (9a), (9b) oder (9c) ist, und $X'$ Wasserstoff ist, verwendet und nach der Kupplungsreaktion den Farbstoff mit einem Acylierungsmittel, welches den Rest der Formel (10), (12) oder (14) einführt, umsetzt.

Als Amine der Formel (21) kommen z.B. in Betracht

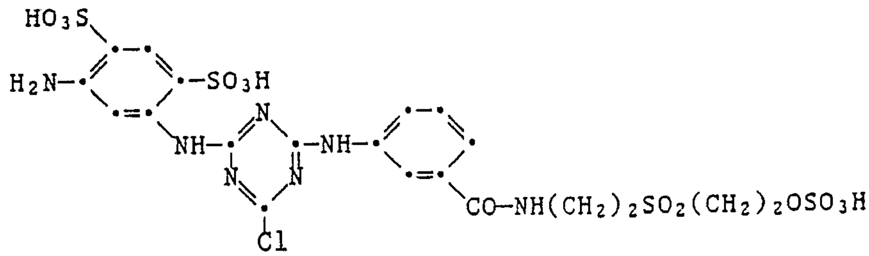

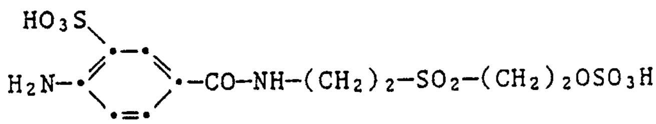

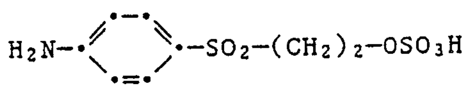

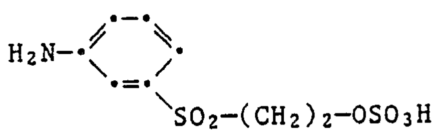

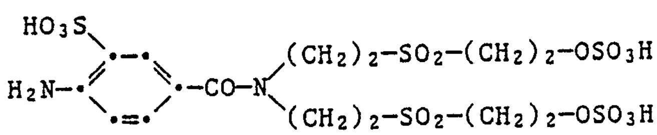

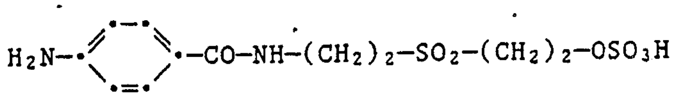

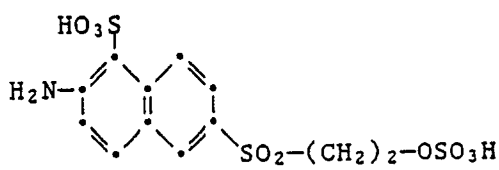

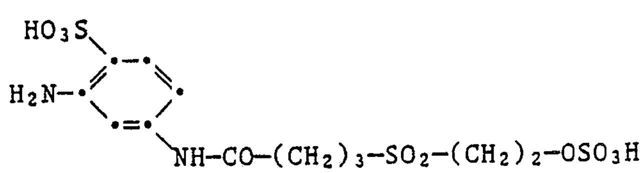

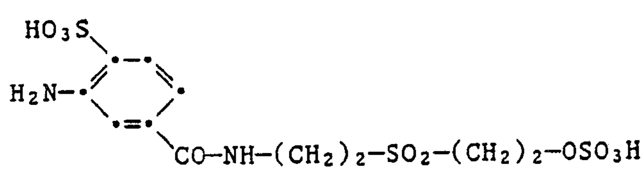

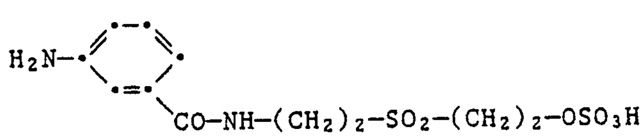

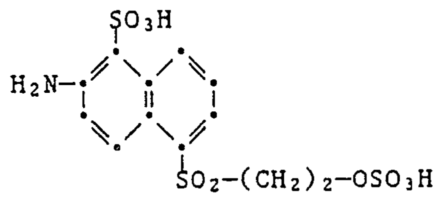

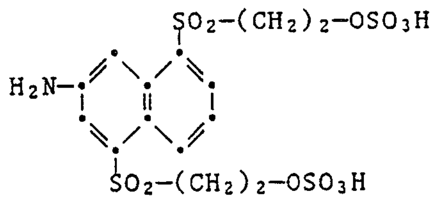

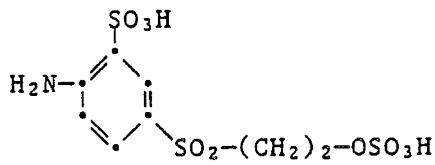

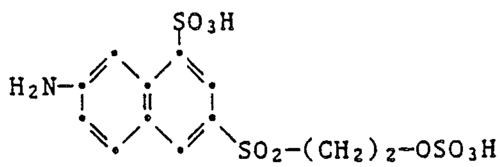

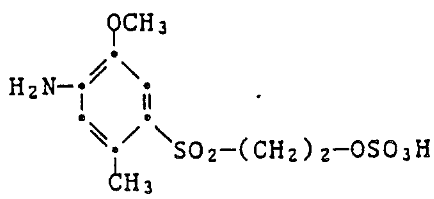

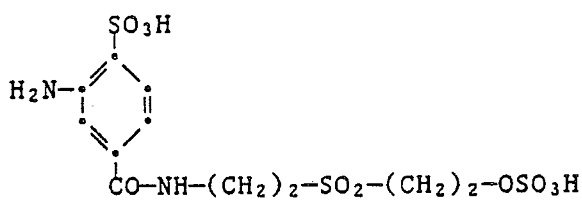

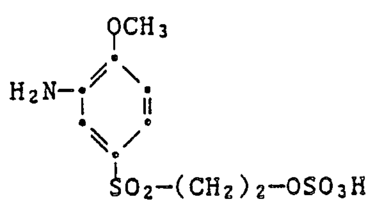

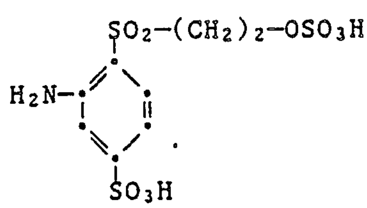

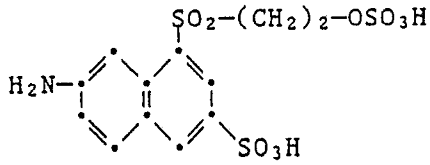

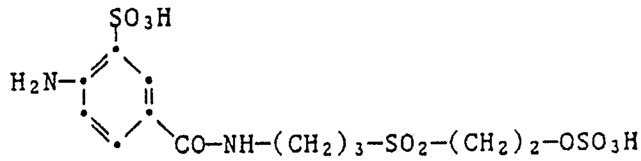

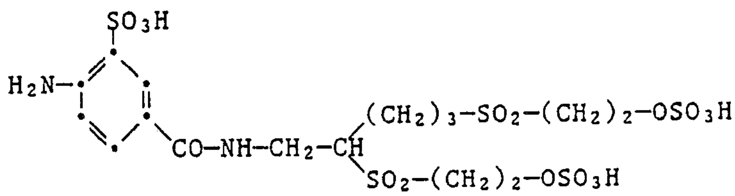

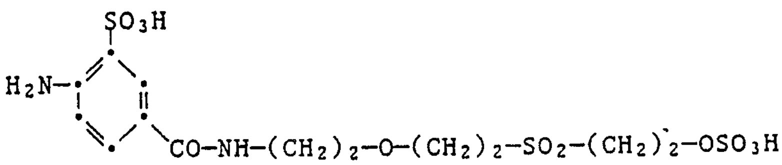

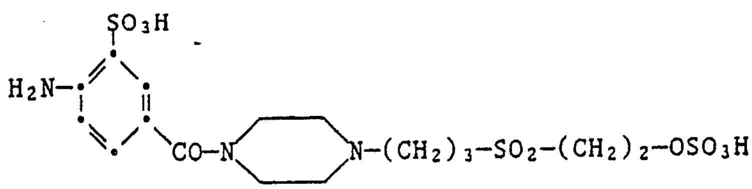

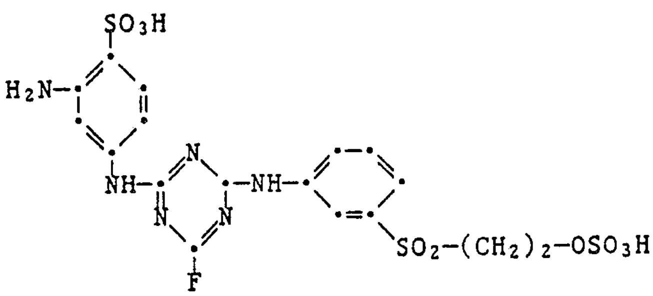

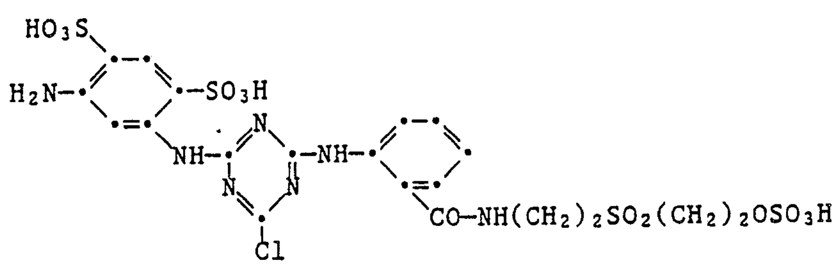

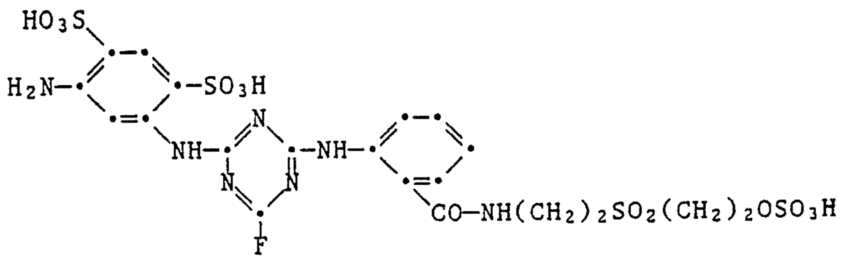

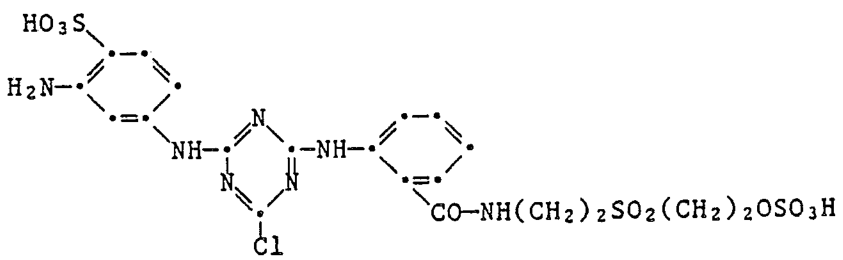

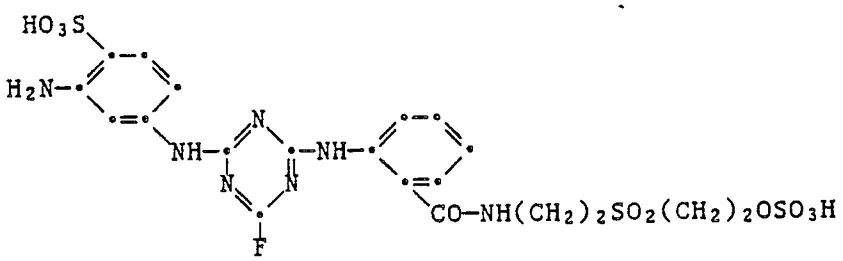

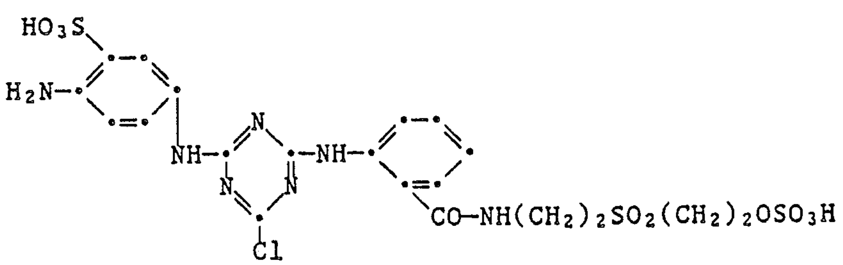

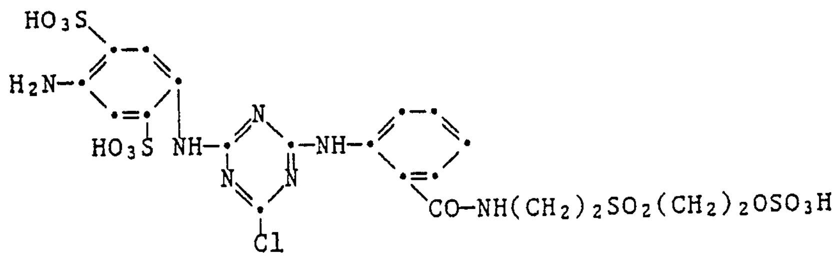

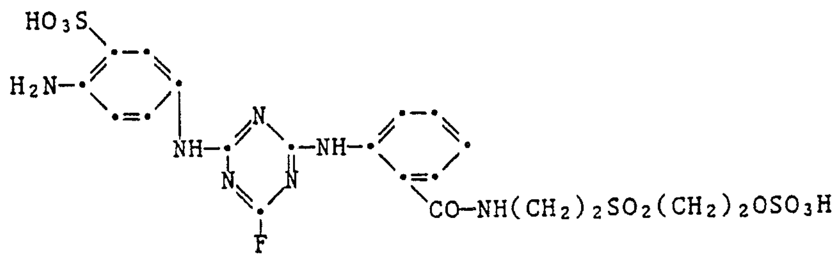

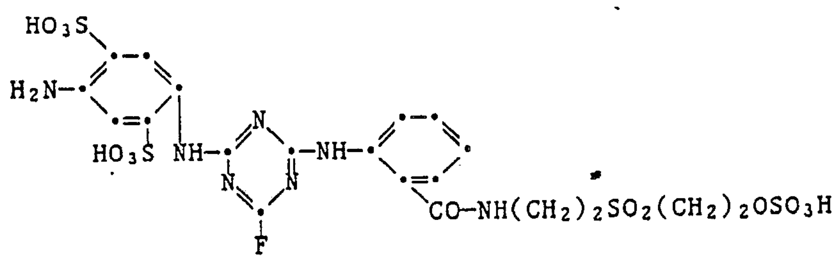

sowie die entsprechenden Verbindungen, die anstelle der $-SO_2-(CH_2)_2-OSO_3H$ Gruppe $-SO_2-(CH_2)_2-Cl$ der $-SO_2-CH=CH_2$ enthalten.

Als Kupplungskomponenten der Formel (22) kommen z.B. in Betracht:
2-(β-Cyanoäthylamino)-8-hydroxynaphthalin-6-sulfonsäure,
2-(β-Carbamoyläthylamino)-8-hydroxynaphthalin-6-sulfonsäure,
2-(β-Sulfoäthylamino)-8-hydroxynaphthalin-6-sulfonsäure,
2-(β-Sulfatoäthylamino)-8-hydroxynaphthalin-6-sulfonsäure.

Die ganz besonders wichtigen Reaktivfarbstoffe der Formeln (18), (19) und (20) werden z.B. hergestellt, indem man ein Amin der Formel

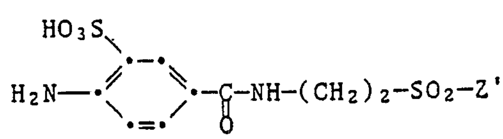

(18a),

oder zur Herstellung des Farbstoffs der Formel (19) ein Amin der Formel

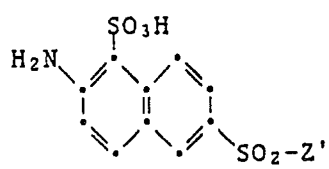

(19a)

worin Z′ die für Z angegebene Bedeutung hat oder β-Hydroxyäthyl ist, diazotiert und auf eine Kupplungs-

komponente der Formel

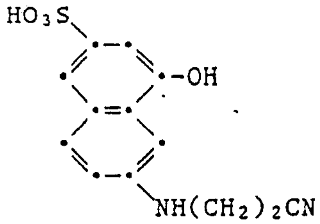

(18b)

kuppelt, und falls Z′ in Formel (18a) β-Hydroxyäthyl ist, diesen Rest in einen Rest Z umwandelt, oder indem man zur Herstellung des Farbstoffs der Formel (20) ein Amin der Formel

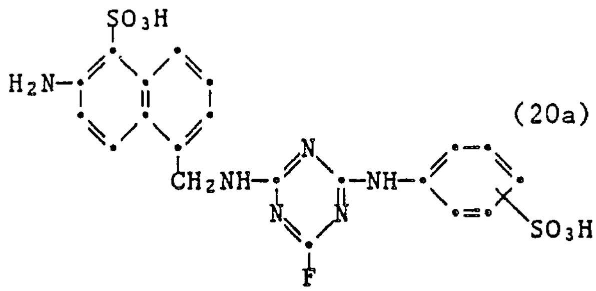

(20a)

diazotiert und auf eine Kupplungskomponente der Formel (18b) kuppelt.

Die Reaktivfarbstoffe der Formel (1) eignen sich zum Färben und Bedrucken der verschiedensten Materialien, wie Seide, Leder, Wolle, Polamidfasern und Polyurethanen, und insbesondere cellulosehaltiger Fasermaterialien aller Art. Solche Fasermaterialien sind beispielsweise die natürlichen Cellulosefasern, wie Baumwolle, Leinen und Hanf, sowie Zellstoff und regenerierte Cellulose. Die Reaktivfarbstoffe der Formel (1) sind auch zum Färben oder Bedrucken von hydroxylgruppenhaltigen Fasern geeignet, die in Mischgeweben enthalten sind, z.B. von Gemischen aus Baumwolle mit Polyamidfasern, oder insbesondere Polyesterfasern.

Die erfindungsgemässen Farbstoffe lassen sich auf verschiedene Weise auf das Fasermaterial applizieren und auf der Faser fixieren, insbesondere in Form von wässrigen Farbstofflösungen und -druckpasten. Sie eignen sich sowohl für das Ausziehverfahren als auch zum Färben nach dem Foulard-Färbeverfahren, wonach die Ware mit wässrigen, gegebenenfalls salzhaltigen Farbstofflösungen imprägniert wird, und die Farbstoffe nach einer Alkalibehandlung oder in Gegenwart von Alkali, gegebenenfalls unter Wärmeeinwirkung fixiert werden. Nach dem Fixieren werden die Färbungen oder Drucke mit kaltem und heissem Wasser, gegebenenfalls unter Zusatz eines dispergierend wirkenden und die Diffusion der nicht fixierten Anteile fördernden Mittels gründlich gespült.

Die Reaktivfarbstoffe der Formel (1) zeichnen sich durch hohe Reaktivität, gutes Fixiervermögen und ein sehr gutes Aufbauvermögen aus. Sie können daher nach dem Ausziehfärbeverfahren bei niedrigen Färbetemperaturen eingesetzt werden und erfordern bei Pad-Steam-Verfahren nur kurze Dämpfzeiten. Die Fixiergrade sind hoch und die nicht fixierten Anteile können leicht ausgewaschen werden, wobei die Differenz zwischen Ausziehgrad und Fixiergrad bemerkenswert kein, d.h. der Seifverlust sehr gering ist. Die Reaktivfarbstoffe der Formel (1) eignen sich auch besonders zum Druck, vor allem auf Baumwolle, ebenso aber auch zum Bedrucken von stickstoffhaltigen Fasern, z.B. von Wolle oder Seide oder von Mischgeweben, die Wolle oder Seide enthalten.

Die mit den erfindungsgemässen Farbstoffen hergestellten Färbungen und Drucke auf Cellulosefasermaterialien besitzen eine hohe Farbstärke und eine hohe Faser-Farbstoff-Bindungsstabilität, sowohl in saurem als auch in alkalischem Bereich, weiterhin eine gute Lichtechtheit und sehr gute Nassechtheitseigenschaften, wie Wasch-, Wasser-, Seewasser-, Ueberfärbe-und Schweissechtheiten, sowie eine gute Plissierechtheit, Bügelechtheit und Reibechtheit. Ferner eignen sich die mit den erfindungsgemässen Farbstoffen hergestellten Färbungen und Drucke für weitere Ausrüstungen des Textilmaterials, wie z.B. der Kunstharzausrüstung.

Die nachfolgenden Beispiele dienen zur Erläuterung der Erfindung. Die Temperaturen sind in Celsiusgraden angegeben, Teile sind Gewichtsteile, die Prozentangaben beziehen sich auf Gewichtsprozente,

sofern nicht anders vermerkt. Gewichtsteile stehen zu Volumenteilen im Verhältnis von Kilogramm zu Liter.

Die Herstellung der Monoazoverbindungen ist in den nachfolgenden Ausführungsbeispielen nicht in allen Fällen beschrieben, sie ergibt sich jedoch ohne weiteres aus der allgemeinen Beschreibung.

Beispiel 1:

134 Teile 1,3-Phenylendiamin-4,6-disulfosäure werden in 500 Teilen Wasser bei Raumtemperatur (ca. 20° C) und pH 4 gelöst. Diese Lösung wird innert ca. 1 Std. zu einer Suspension aus 93 Teilen Cyanurchlorid in 800 Teilen einer Eis/Wasser-Mischung so zugetropft, dass bei einer Temperatur von 0 bis 3° der pH-Wert 4,0 nicht überschritten wird. Anshcliessend wird das Reaktionsgemisch 1 1/2 Std. bei 0 bis 3° und einem pH-Wert zwischen 3,5-4,5 ausreagiert. Dann werden 176 Teile 3-Amino-2′-(2-sulfatoethylsulfonyl)-äthyl-benzamid zugegeben und bei 0 bis 5° C und einem pH-Wert zwischen 4 und 4,5 2 Stunden kondensiert. Die entstandene Reaktionslösung wird in üblicher Weise diazotiert und auf eine Suspension aus 97 Teilen 2-(β-Cyanäthylamino)-8-hydroxynaphthalin-6-sulfonsäure in 500 Teilen Wasser bei einem pH-Wert von ca. 1,0 gekuppelt. Nach zwei Stunden ist die Kupplung beendet. Der pH-Wert der Reaktionslösung wird auf 6,0 gestellt. Dann wird das Produkt mittels Umkehrosmose und Sprühtrocknung gereinigt und entsalzt. Man erhält 380 Teile einer Verbindung, die in Form der freien Säure der Formel

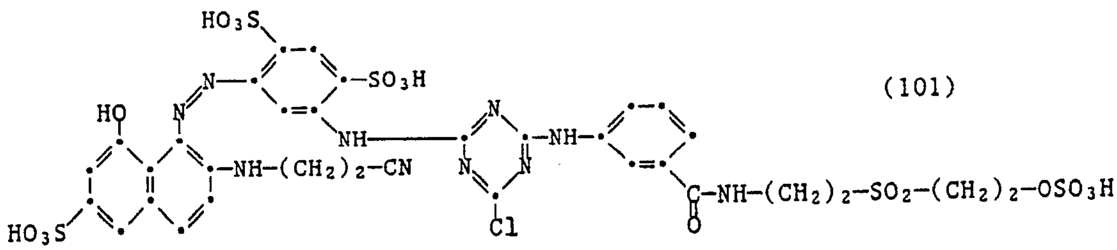

(101)

entspricht. Der so erhaltene Farbstoff färbt Baumwolle in Bordeaux Tönen mit sehr guten allgemeinen Echtheitseigenschaften.

Beispiel 2:

Die wässrige Lösung des gemäss Beipsiel 1 erhaltenen Farbstoffes wird bei Raumtemperatur und einem pH-Wert von 10 etwa 30 Minuten lang vinyliert. Anschliessend wird der pH-Wert mit Salzsäure auf 6,5 zurückgestellt und der Monoazofarbstoff sprühgetrocknet. Der erhaltene Farbstoff entspricht in Form der freien Säure der Formel

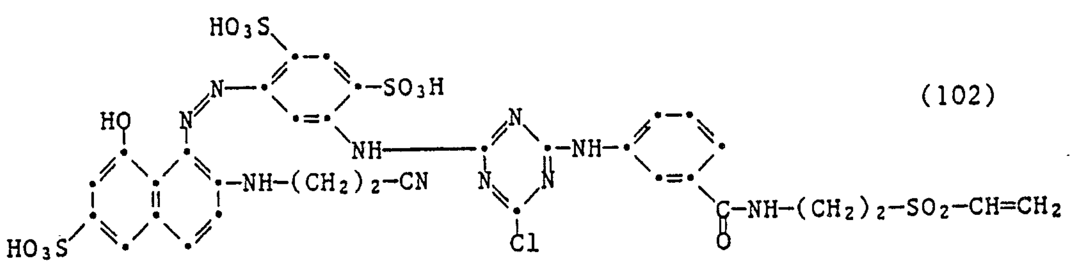

(102)

Er färbt Baumwolle in Bordeaux Tönen mit sehr guten allgemeinen Echtheitseigenschaften.

Beispiel 3:

37,0 Teile der Verbindung der Formel

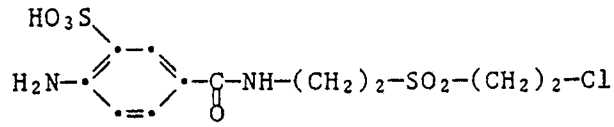

werden in üblicher Weise diazotiert und auf eine Suspension auf 29,2 Teile 2-(β-Cyanäthylamino)-8-hydroxynaphthalin-6-sulfonsäure in 200 Teilen Wasser bei einem pH-Wert von ca. 1,0 bis 2,0 innert zwei Stunden gekuppelt. Der pH-Wert wird nun auf 6,0 gestellt. Die erhaltene

Lösung wird mittels Umkehrosmose entsalzt und anschliessend sprühgetrocknet. Man erhält eine salzfreie Verbindung, die in Form der freien Säure der Formel

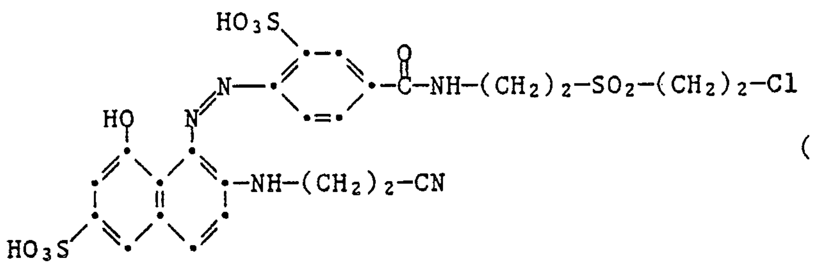

(103)

entspricht. Der erhaltene Farbstoff färbt Baumwolle in Bordeaux Tönen mit ausgezeichneten Echtheitseigenschaften.

Beispiel 4:

Dei wässrige Lösung des gemäss Beispiel 3 erhaltenen Farbstoffes wird bei Raumtemperatur und dem pH-Wert 10 20 Minuten lang vinyliert. Anschliessend wird der pH-Wert mit Salzsäure auf 5,0 zurückgestellt und der Monoazofarbstoff sprühgetrocknet. Er entspricht in Form der freien Säure der Formel

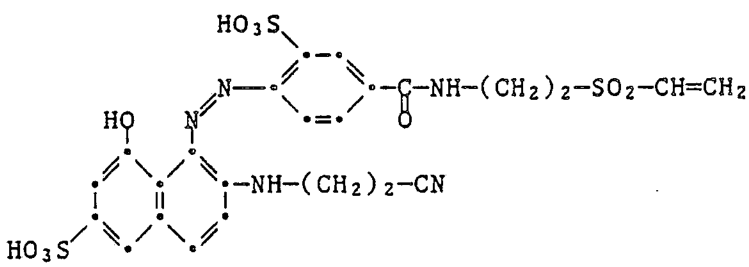

(104).

Er färbt Baumwolle in Bordeaux Tönen mit sehr guten Echtheit seigenschaften.

Weitere Farbstoffe, die gemäss den in den bisherigen Beispielen gegebenen Vorschriften hergestellt werden können, sind die Reaktivfarbstoffe der folgenden Formeln, die Baumwolle in Bordeaux Tönen anfärben.

| Beispiel | Reaktivfarbstoff | |
|---|---|---|
| 5 | 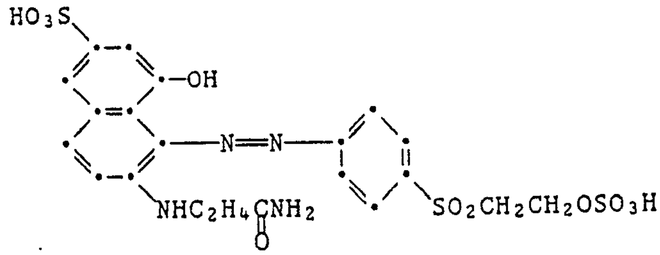 | (105) |
| 6 | 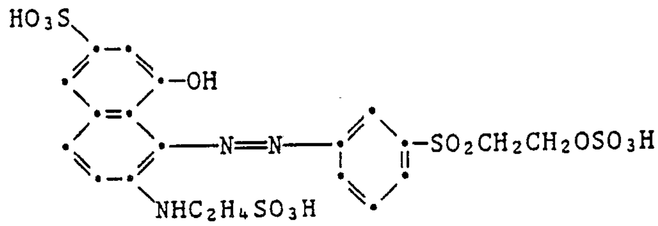 | (106) |
| 7 | 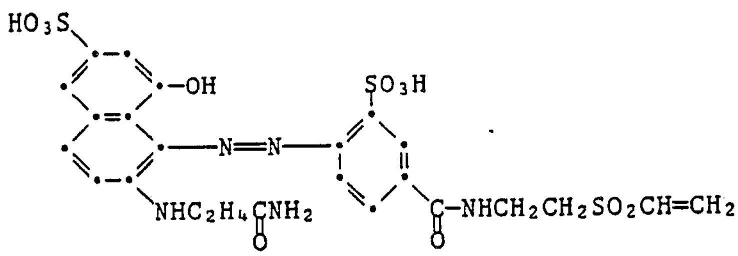 | (107) |
| 8 | 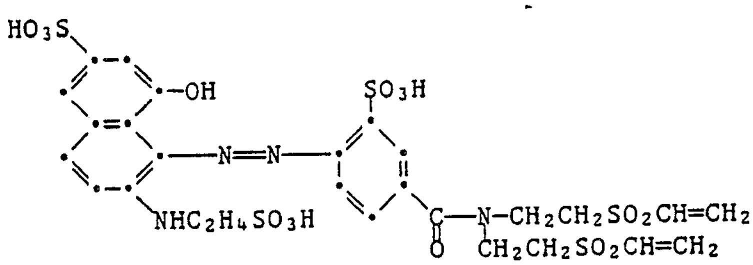 | (108) |
| 9 | 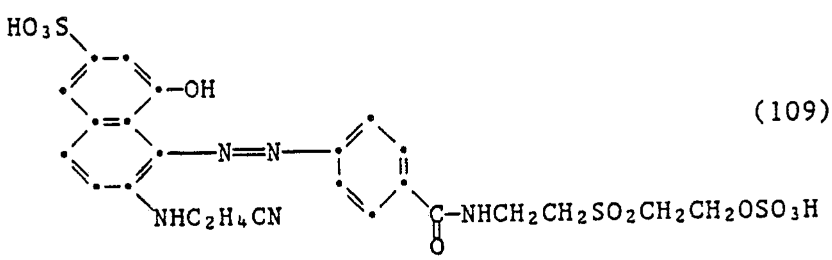 | (109) |
| 10 | 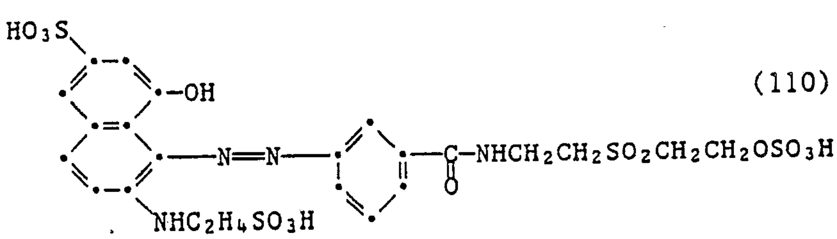 | (110) |

11 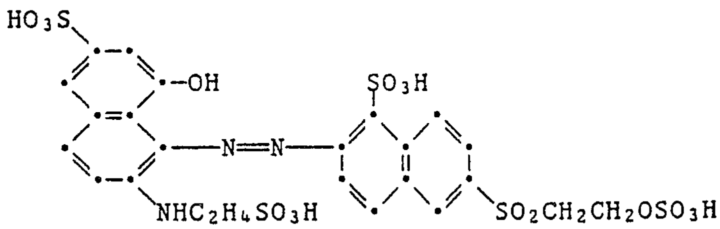 (111)

12 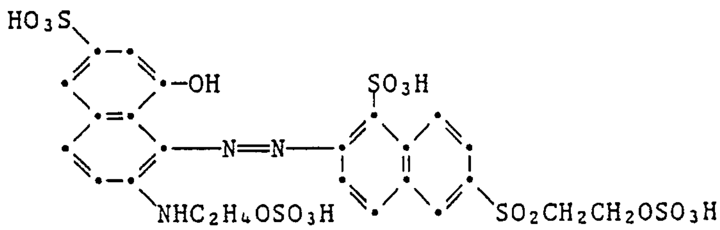 (112)

13 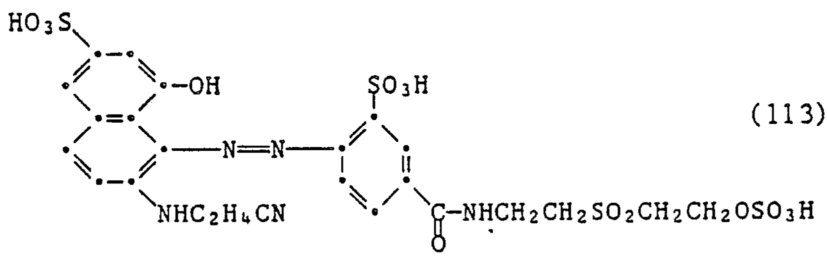 (113)

14 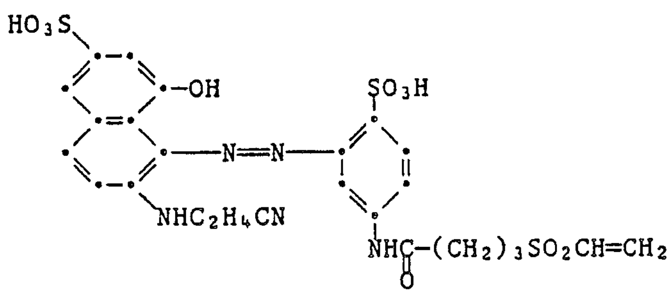 (114)

15 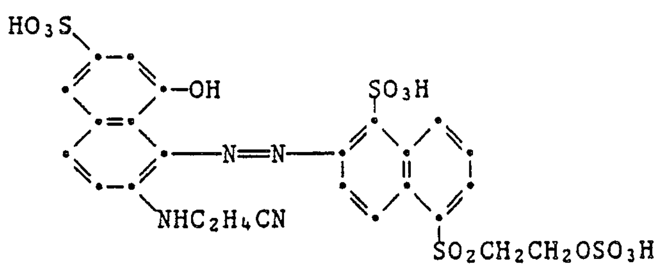 (115)

16 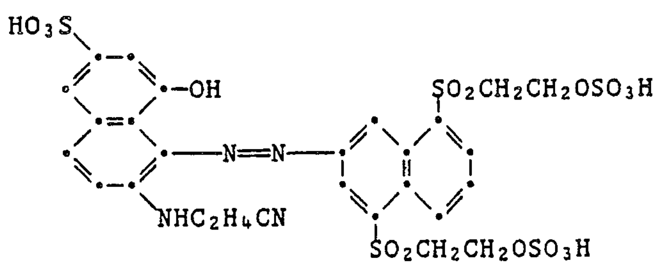 (116)

17

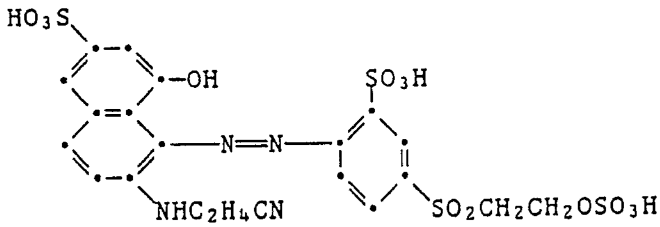

(117)

18

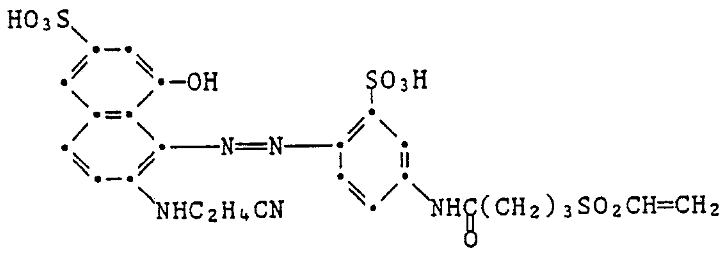

(118)

19

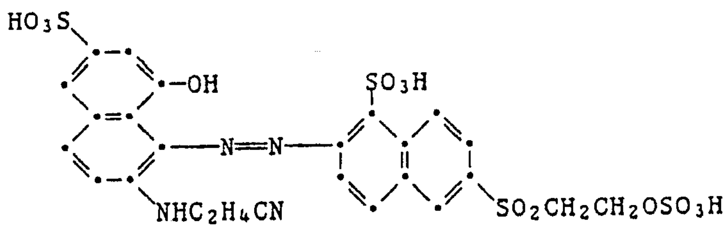

(119)

20

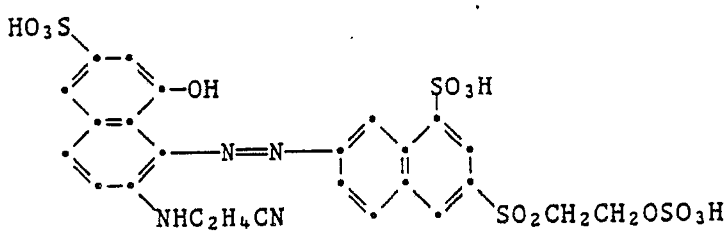

(120)

21

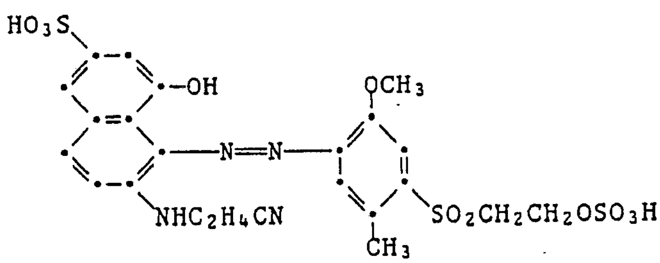

(121)

22

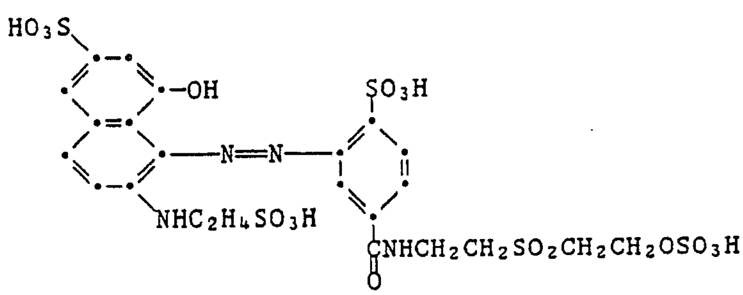

(122)

23 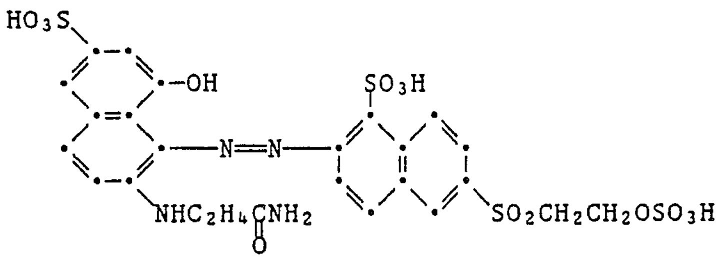 (123)

24 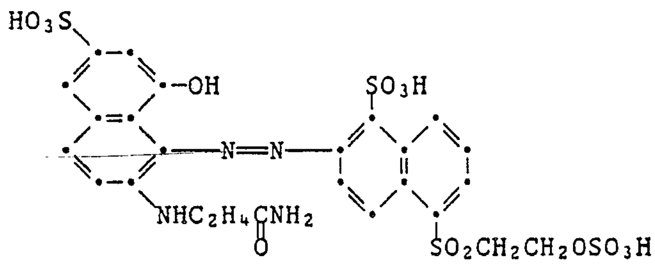 (124)

25 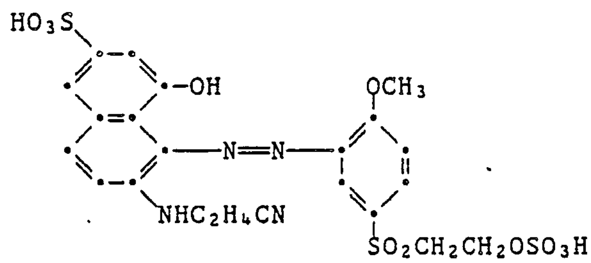 (125)

26 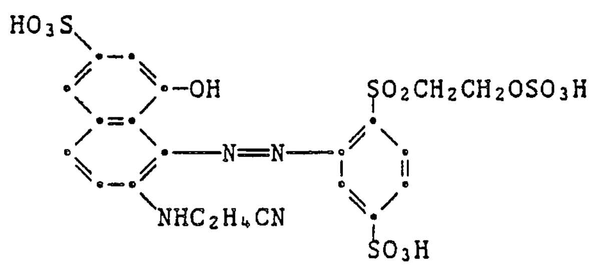 (126)

27 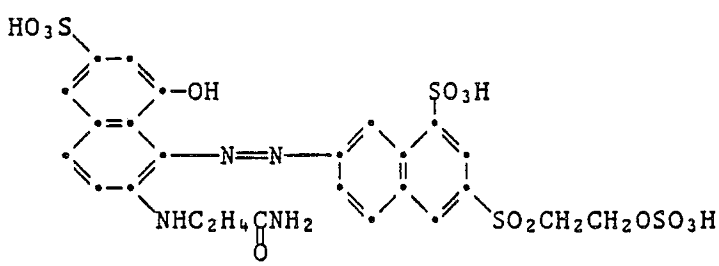 (127)

28 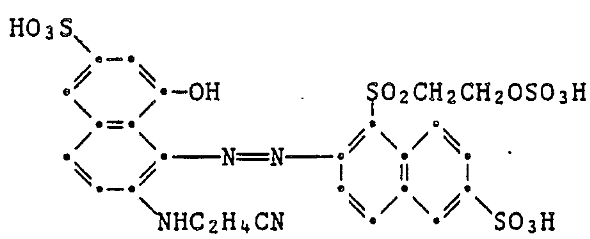 (128)

29

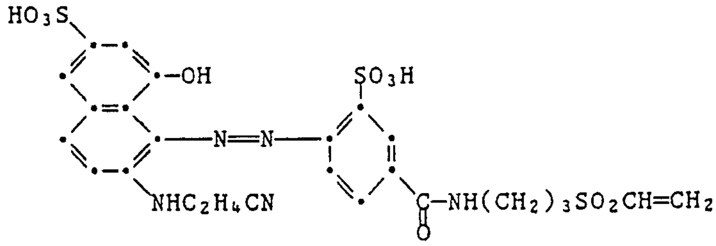

(129)

30

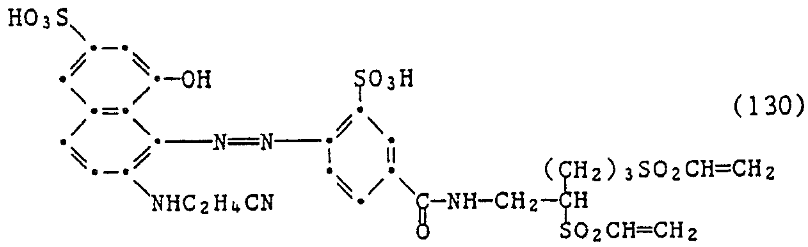

(130)

31

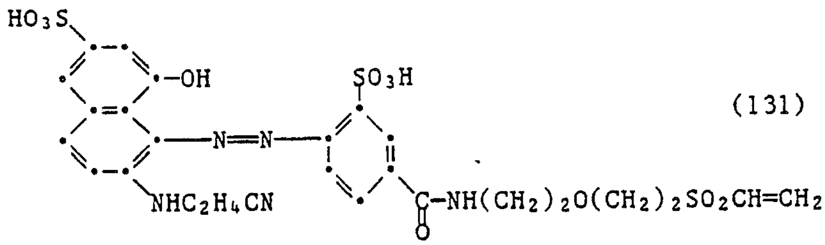

(131)

32

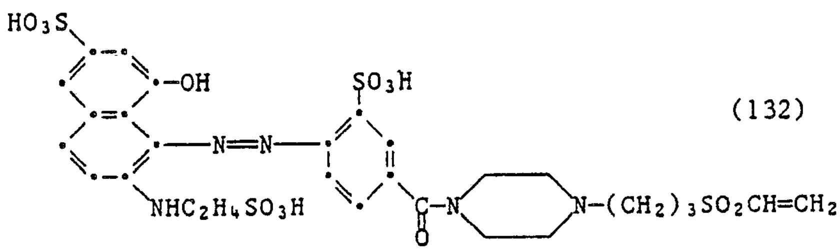

(132)

33

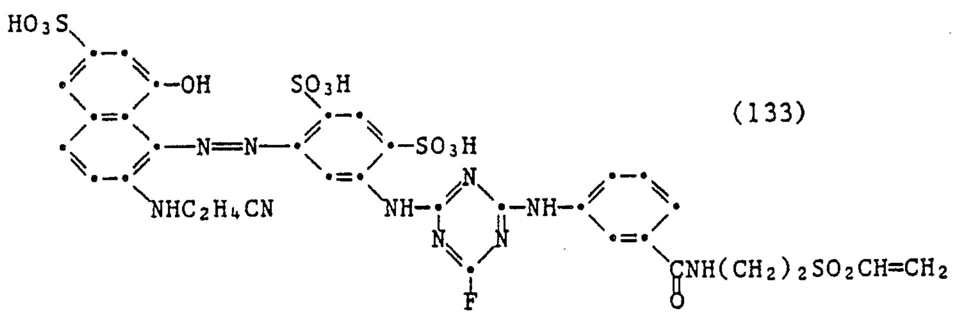

(133)

34 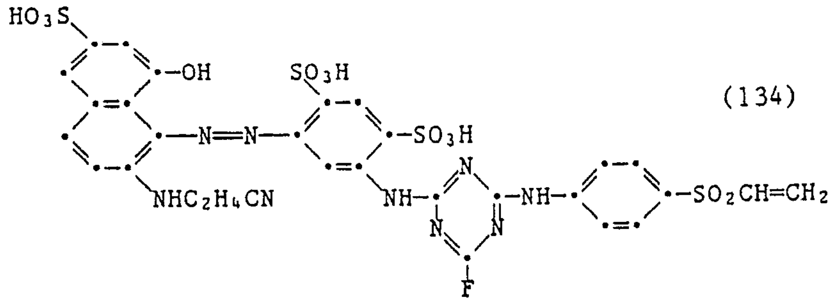 (134)

35 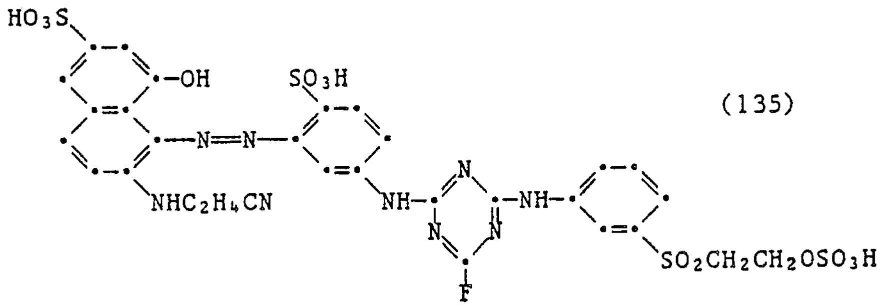 (135)

36 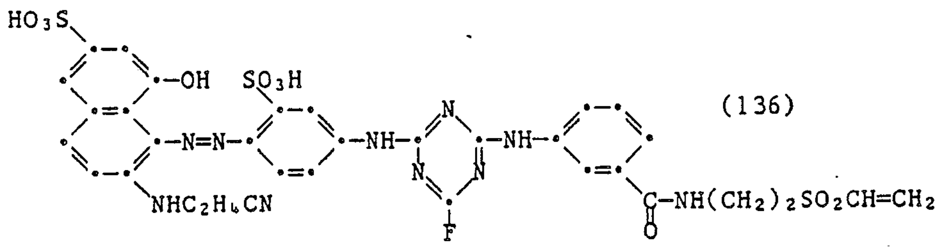 (136)

37 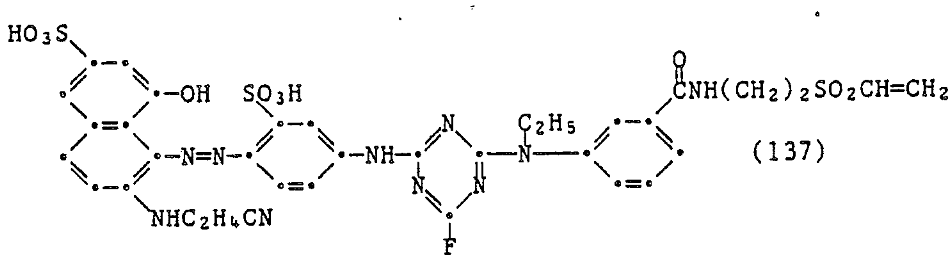 (137)

38 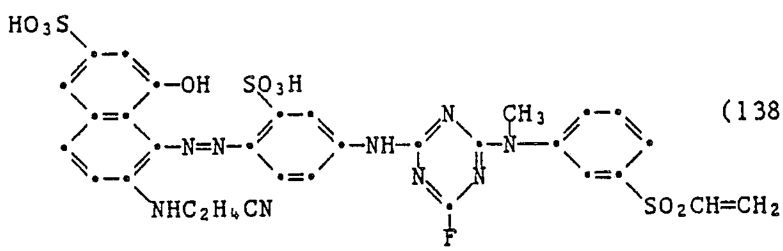 (138)

39

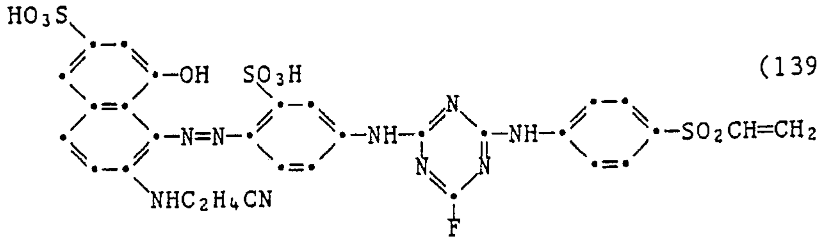

(139)

40

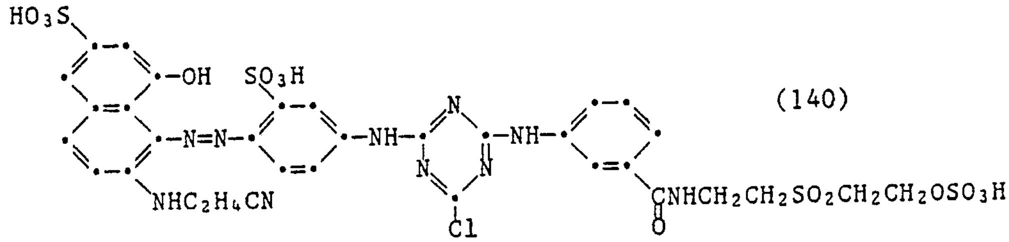

(140)

41

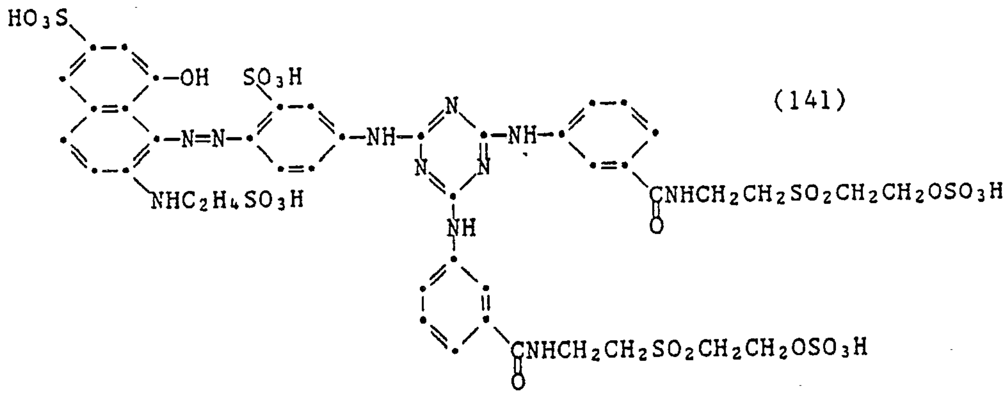

(141)

42

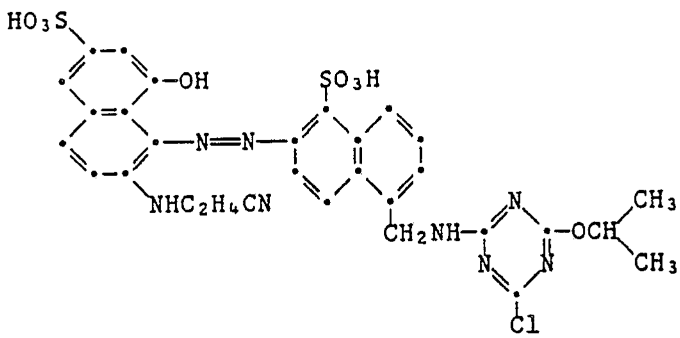

(142)

43

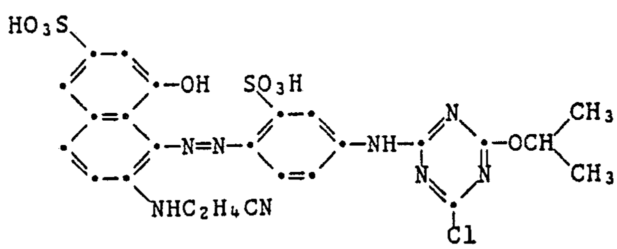

(143)

44 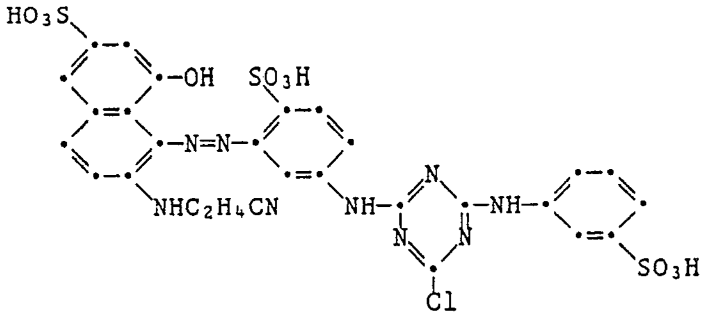 (144)

45 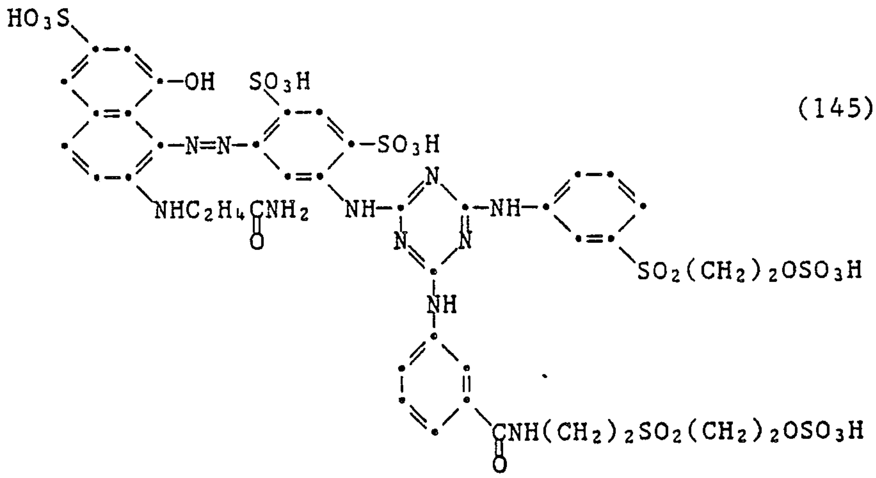 (145)

46 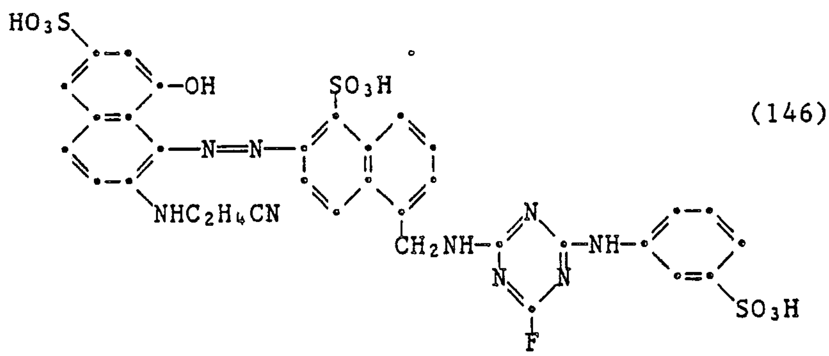 (146)

47 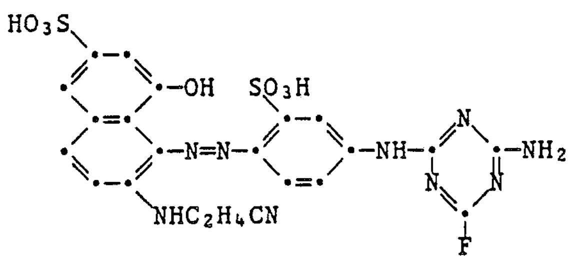 (147)

48 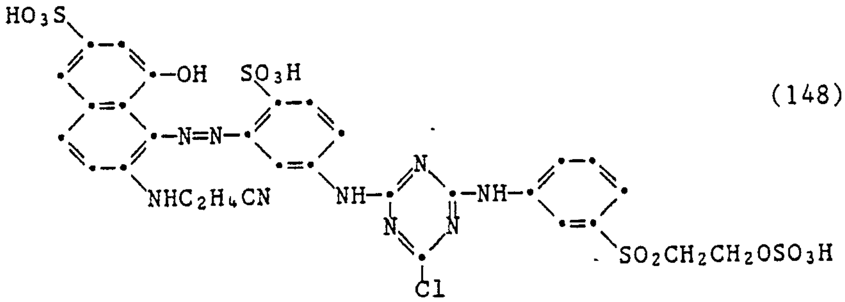 (148)

49 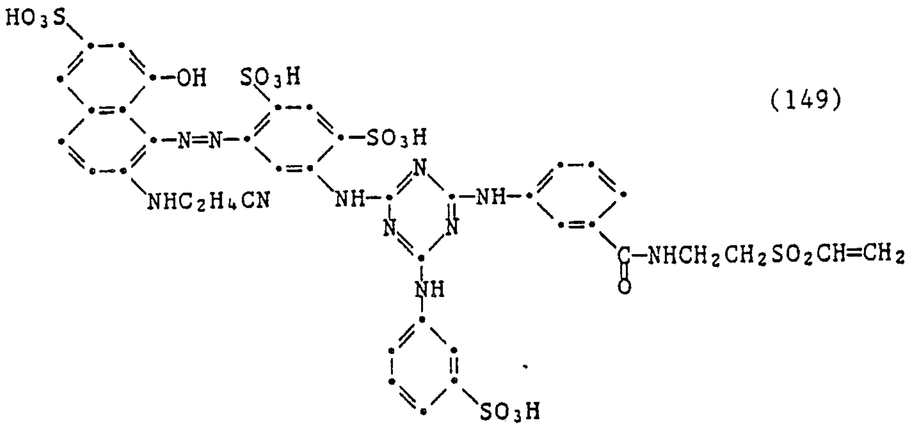 (149)

50 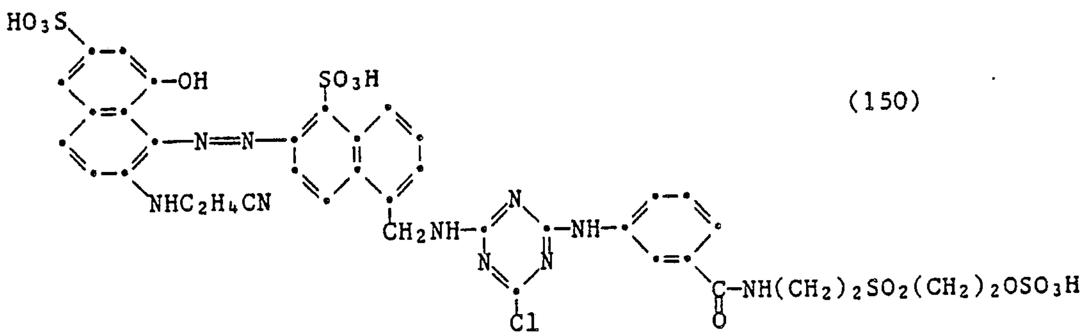 (150)

51 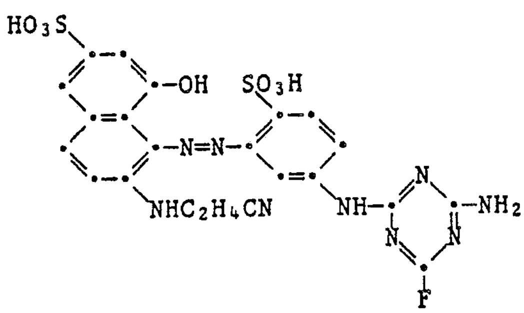 (151)

52 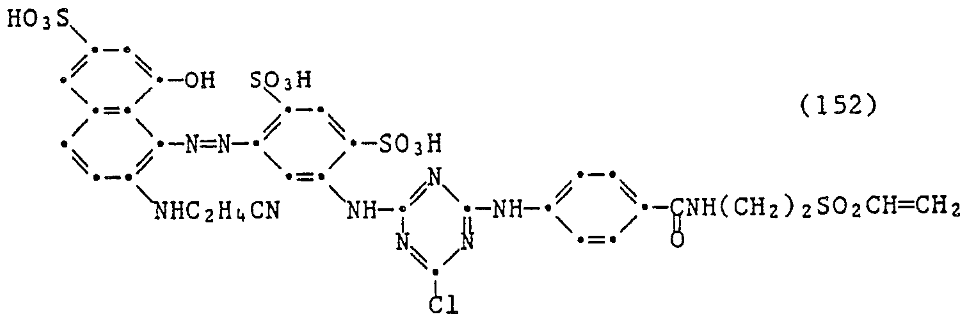 (152)

53 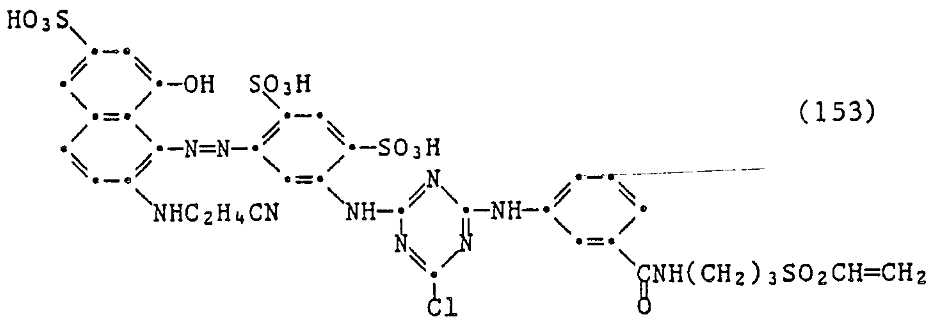 (153)

54 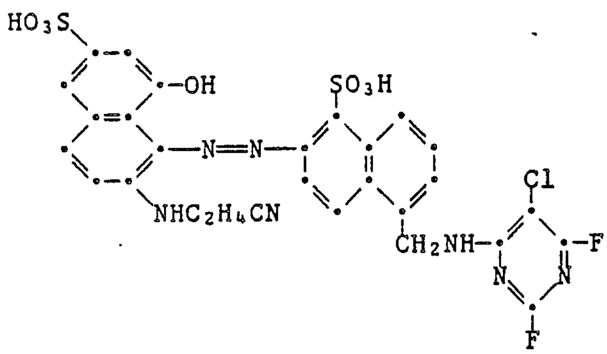 (154)

55 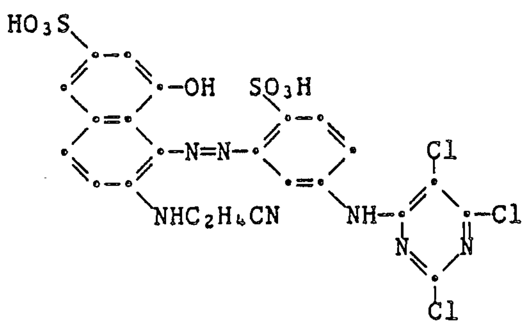 (155)

56 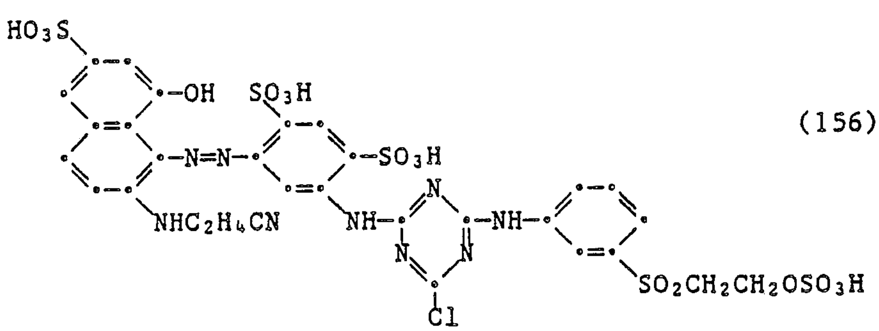 (156)

57 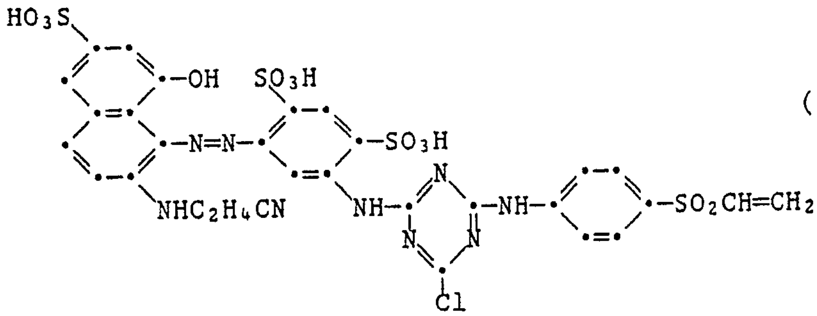 (157)

58 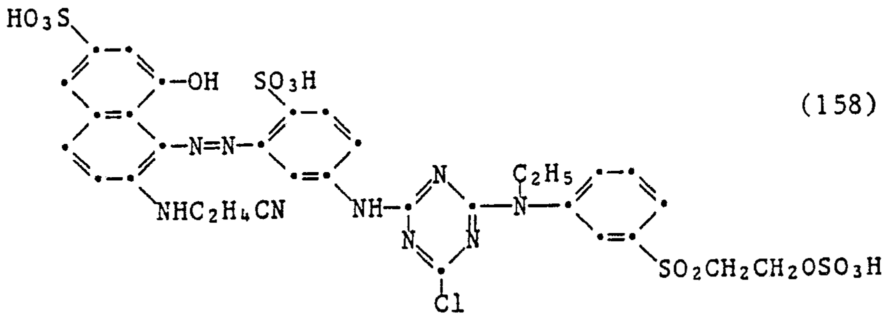 (158)

59 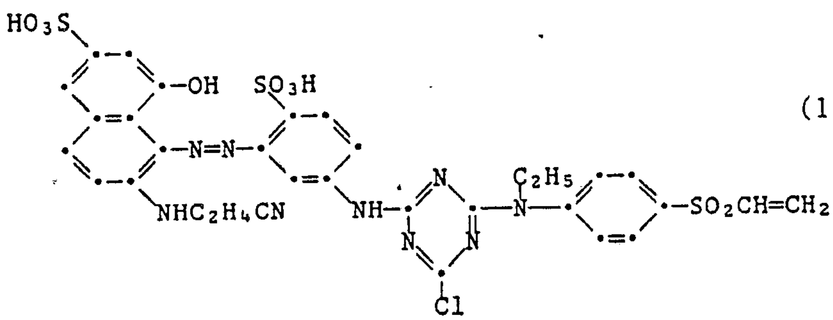 (159)

60 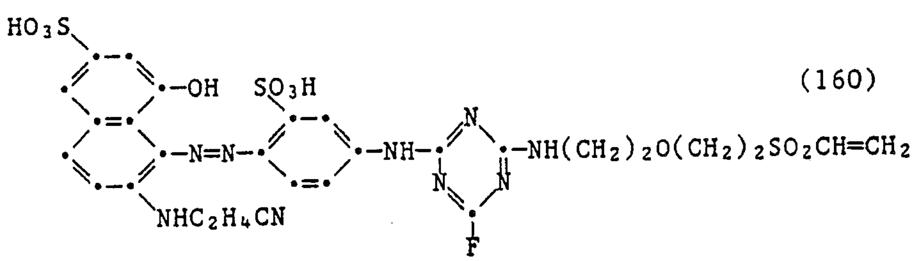 (160)

61 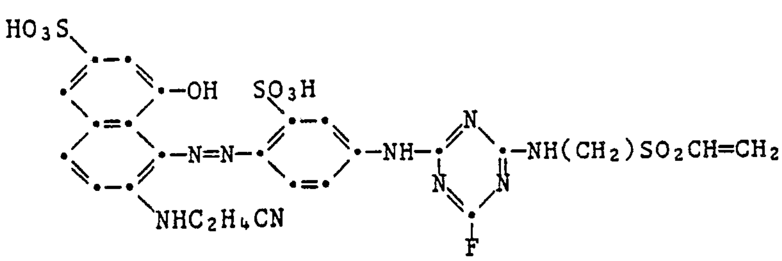 (161)

62

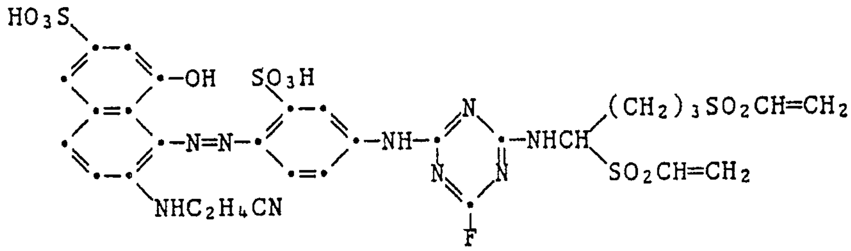

(162)

63

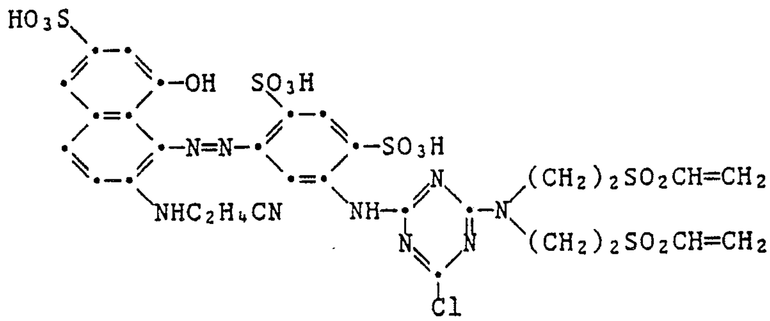

(163)

64

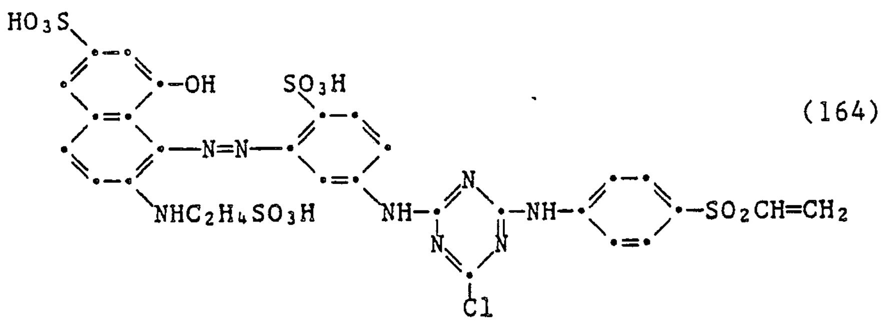

(164)

65

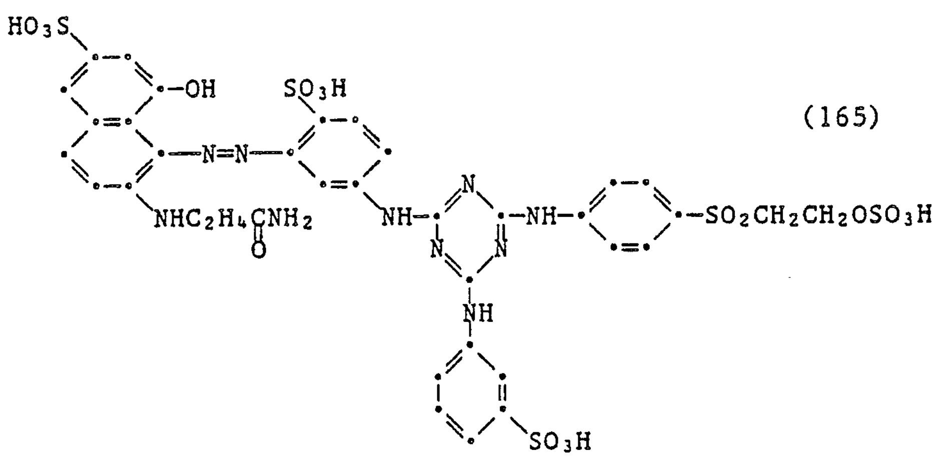

(165)

66 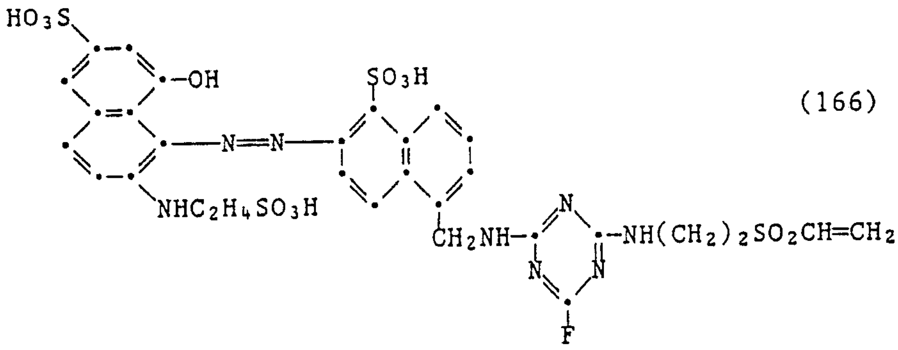 (166)

67 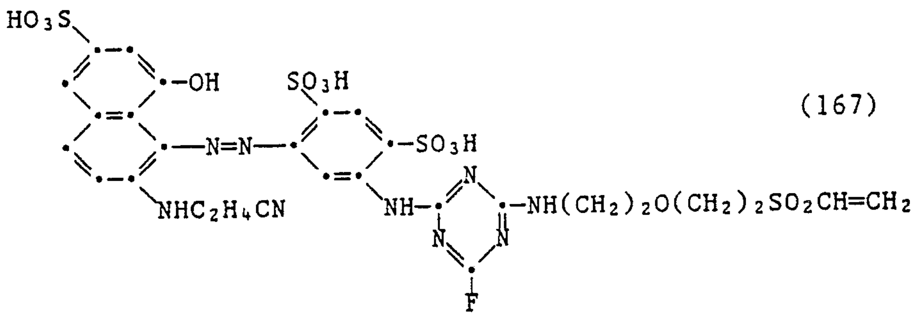 (167)

68 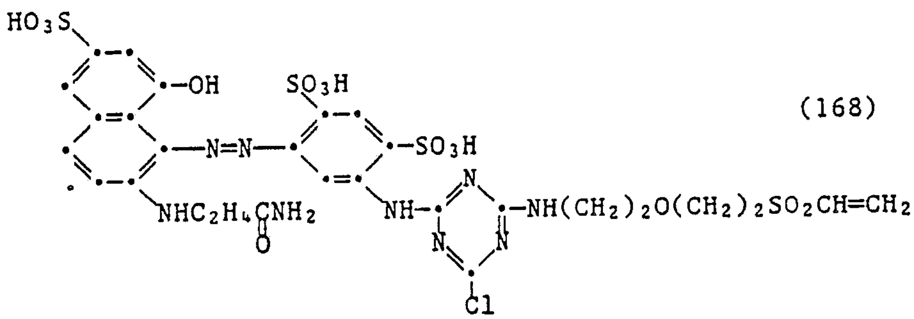 (168)

69 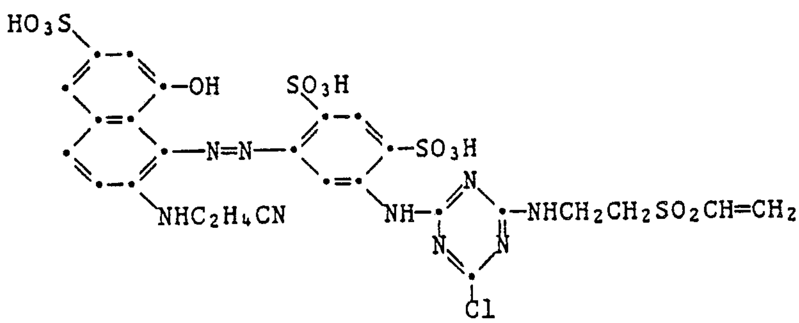 (169)

70 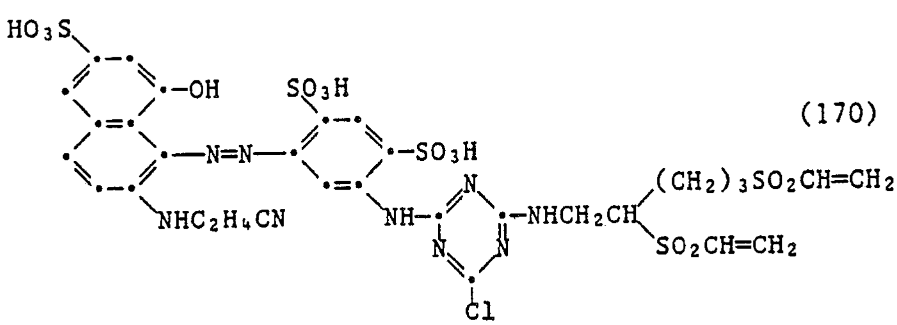 (170)

71 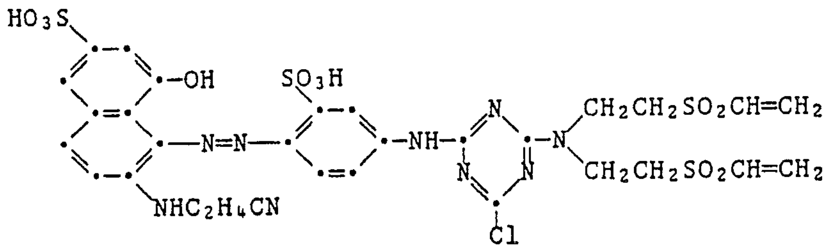 (171)

72 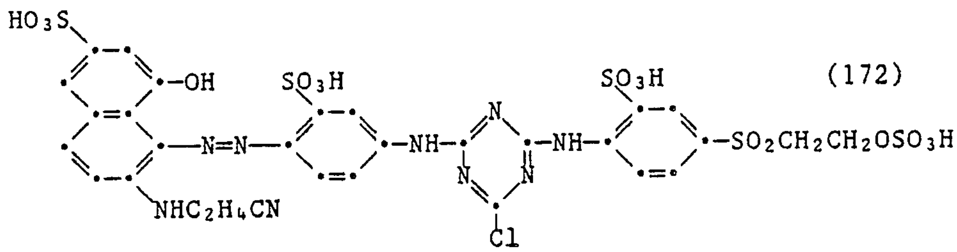 (172)

73 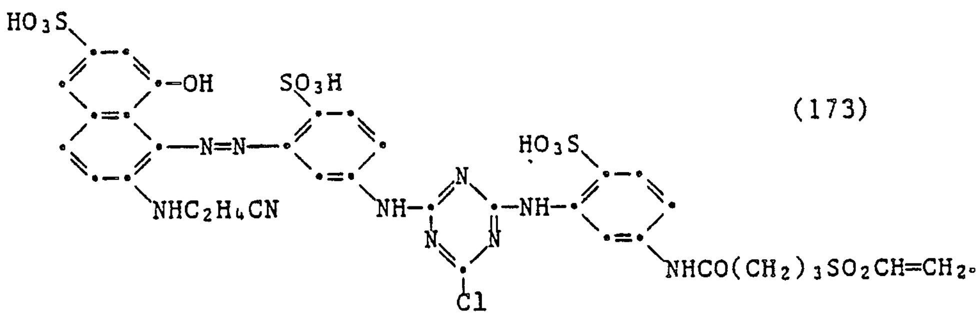 (173)

74 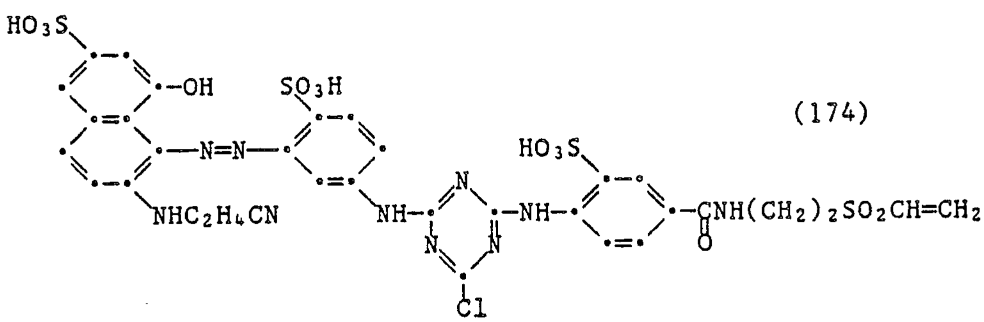 (174)

75 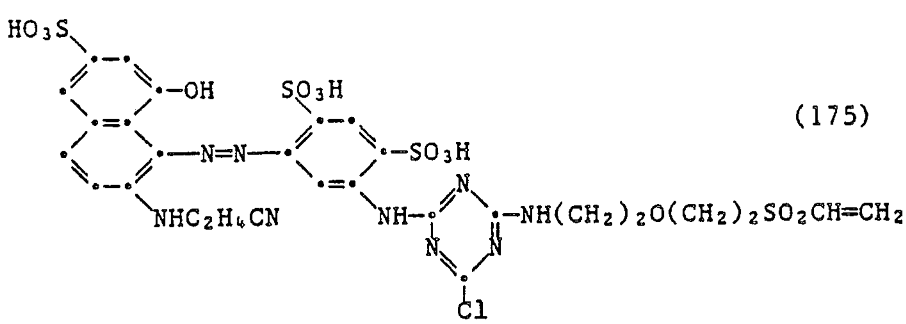 (175)

76 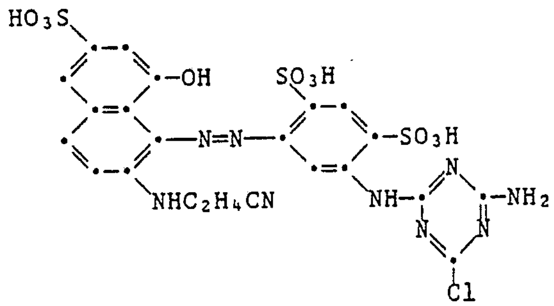 (176)

77 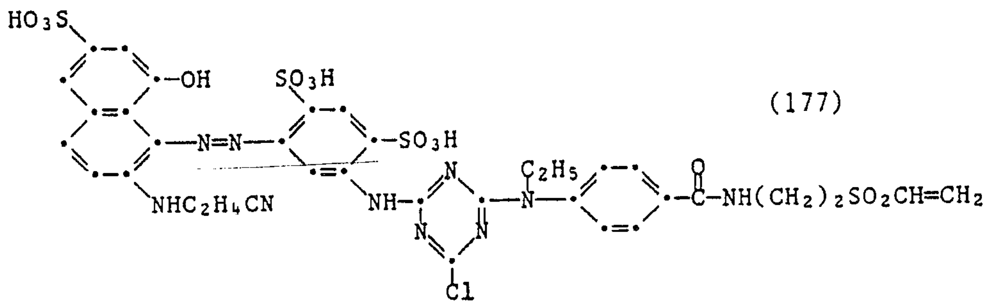 (177)

78 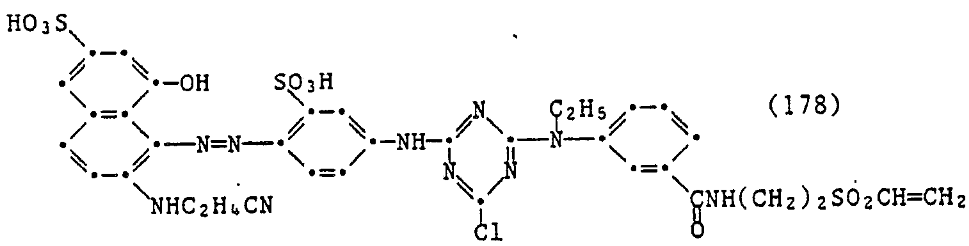 (178)

79 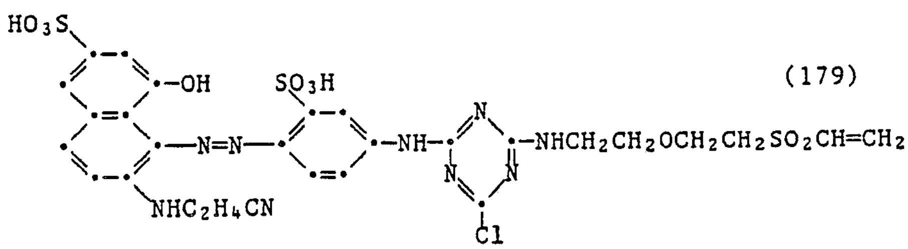 (179)

80 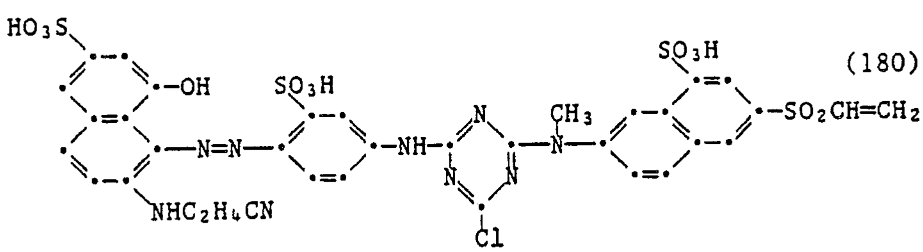 (180)

81

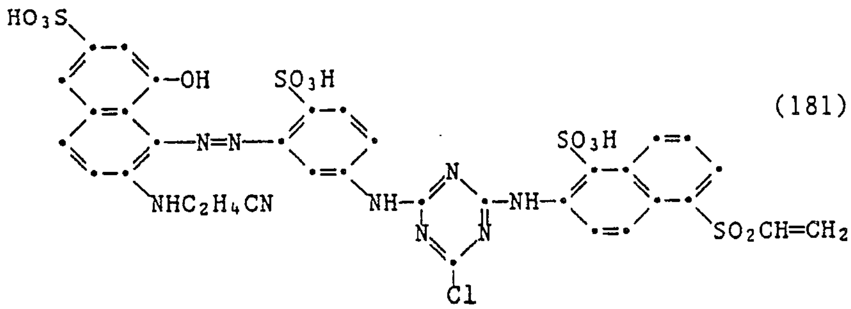

(181)

82

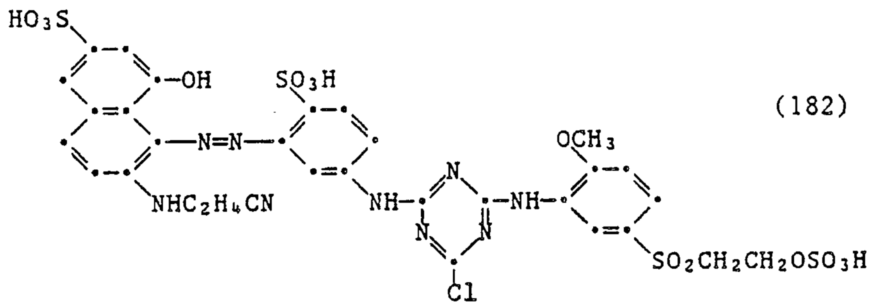

(182)

83

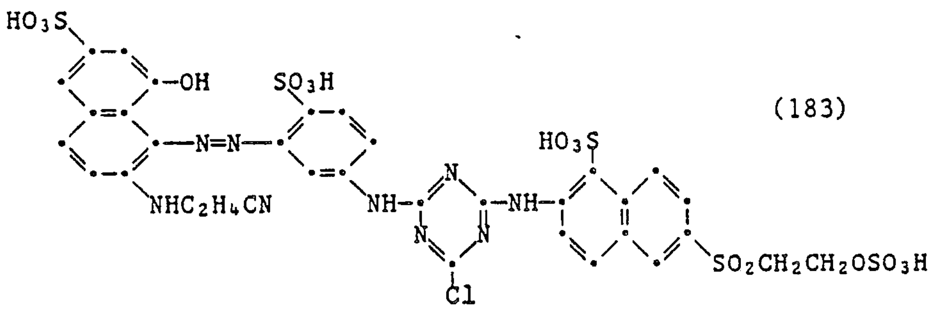

(183)

84

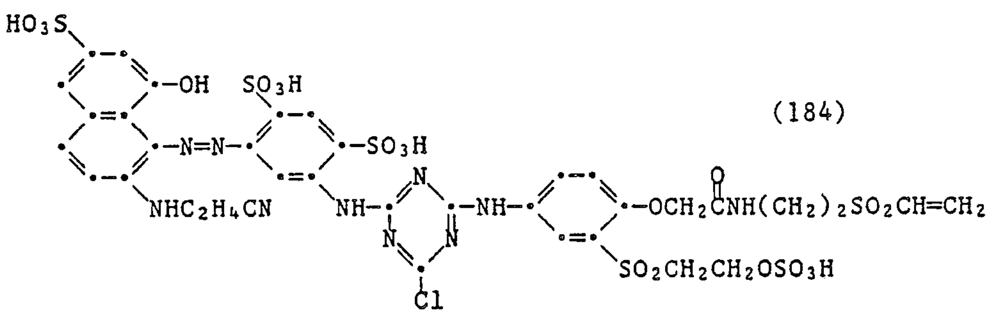

(184)

85

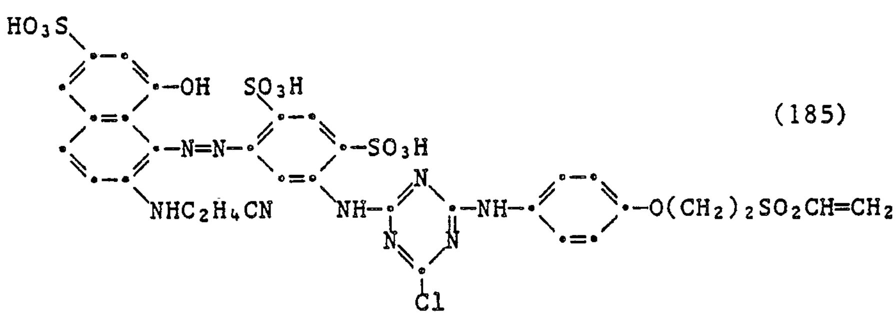

(185)

86
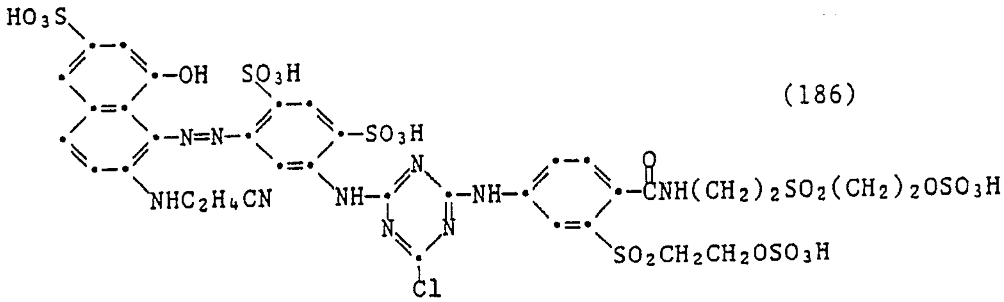
(186)

87
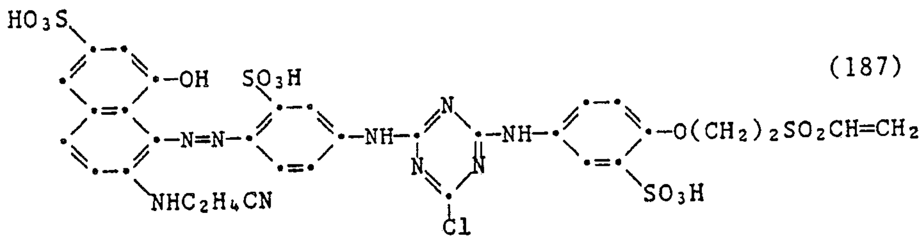
(187)

88
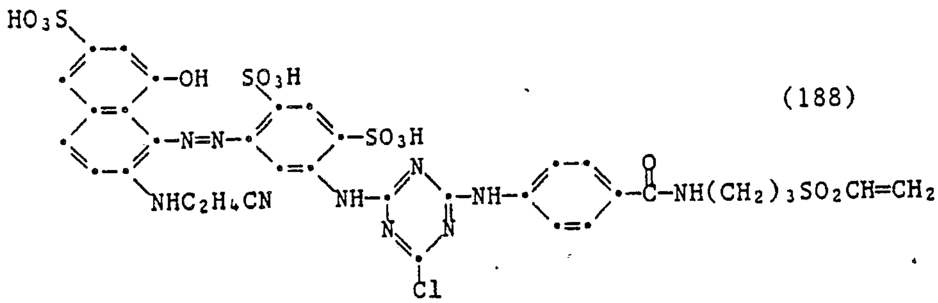
(188)

89
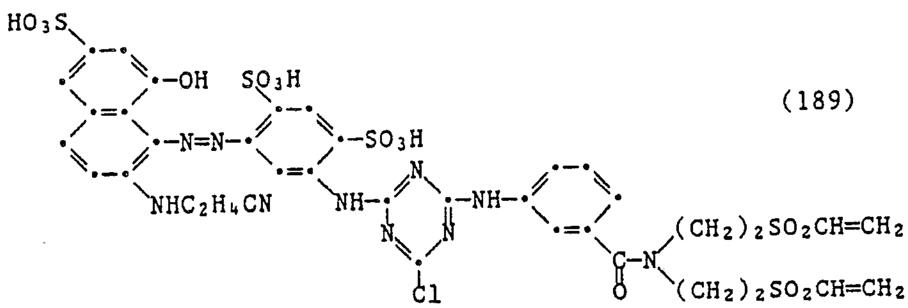
(189)

90
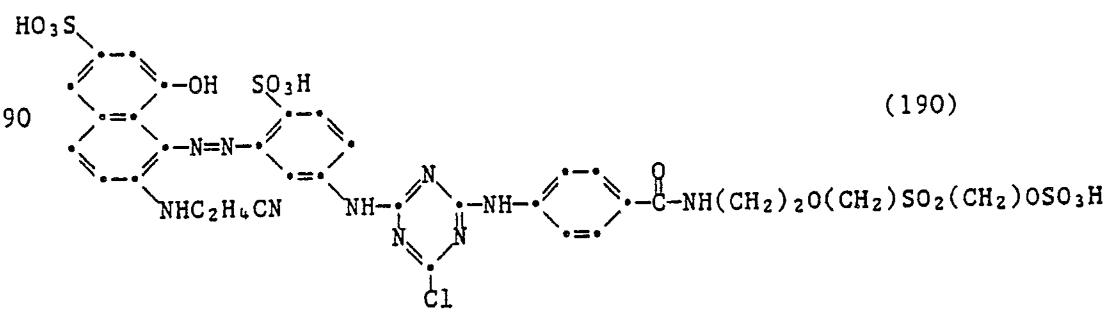
(190)

91 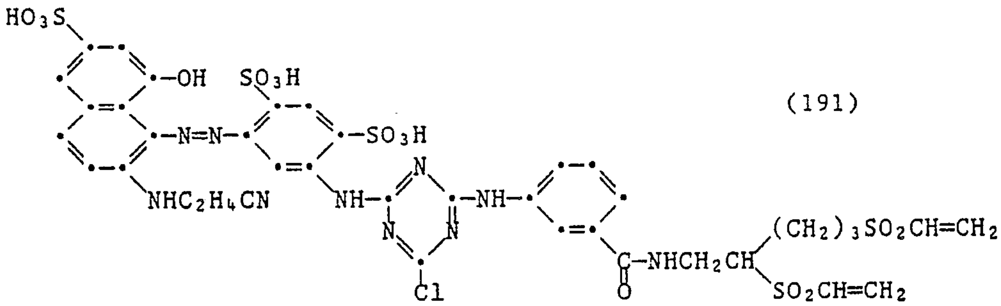 (191)

92 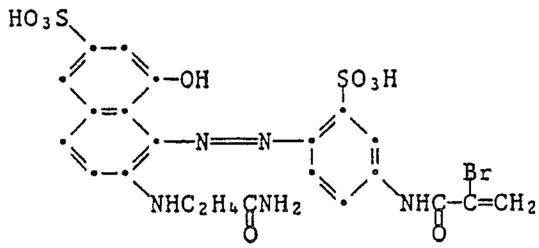 (192)

93 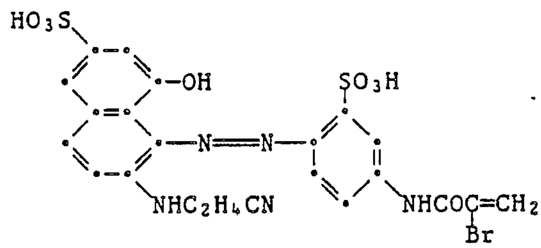 (193)

94 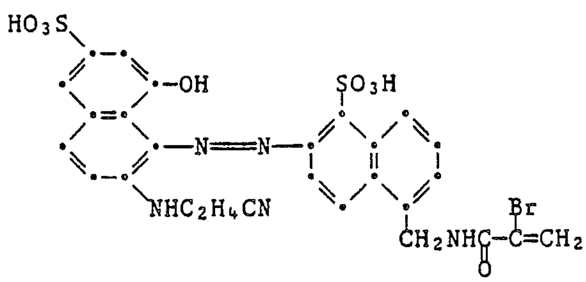 (194)

95 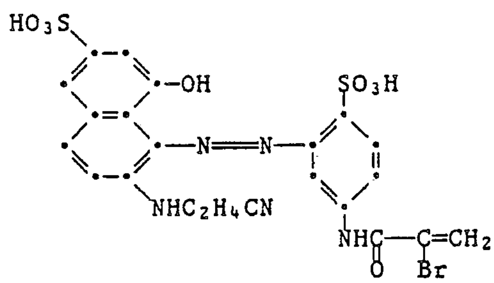 (195)

96

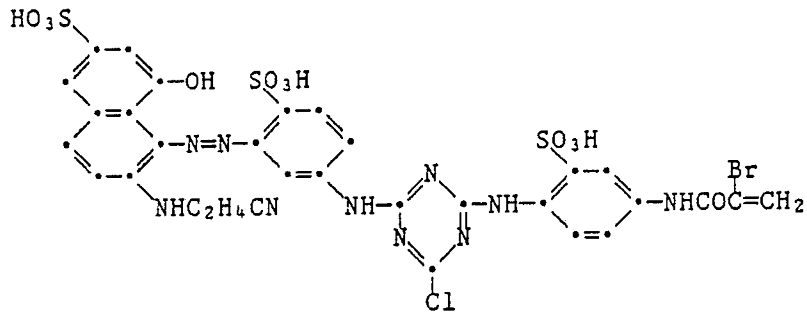

(196)

97

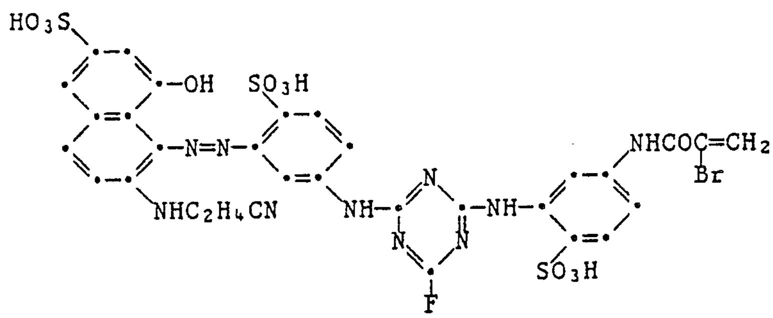

(197)

98

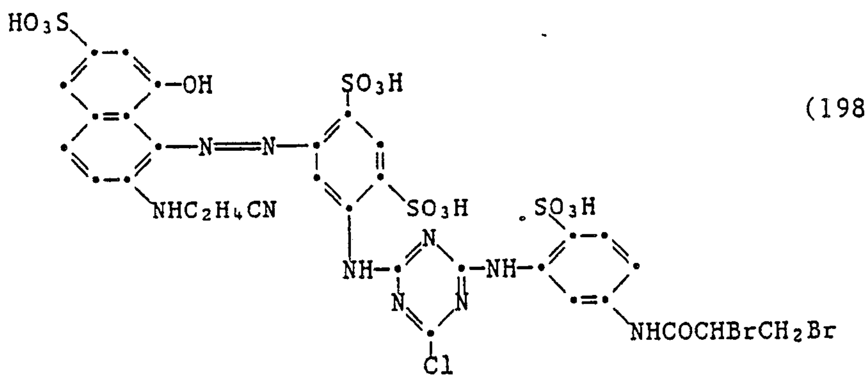

(198)

99

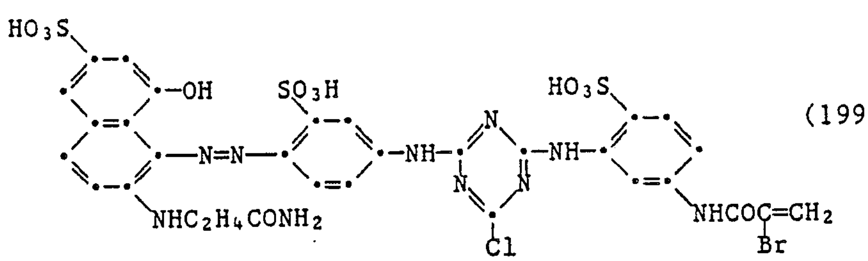

(199)

100

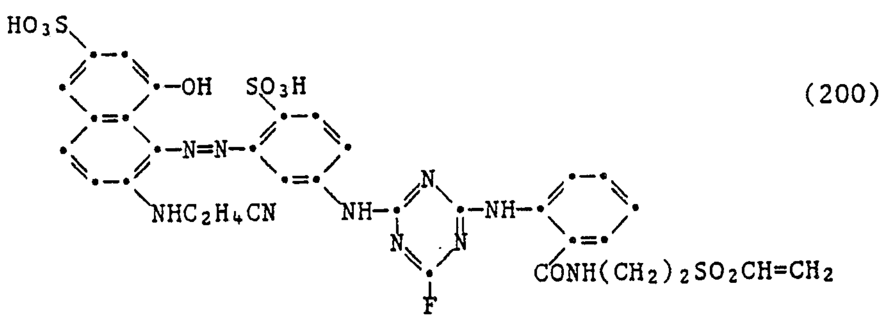

(200)

101 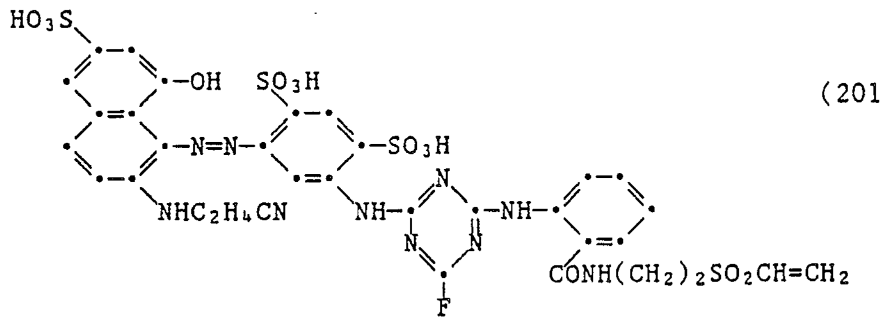 (201)

102 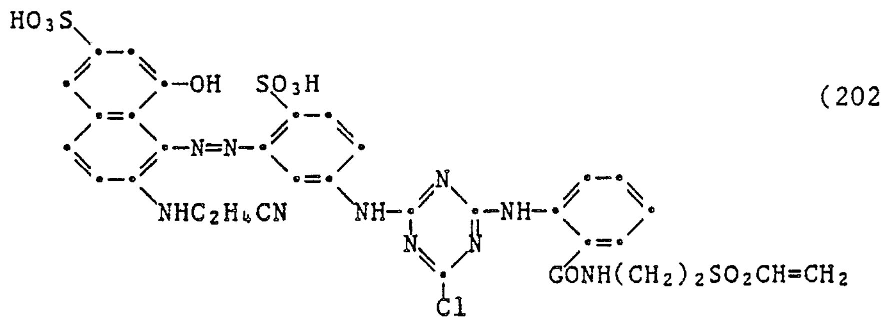 (202)

103 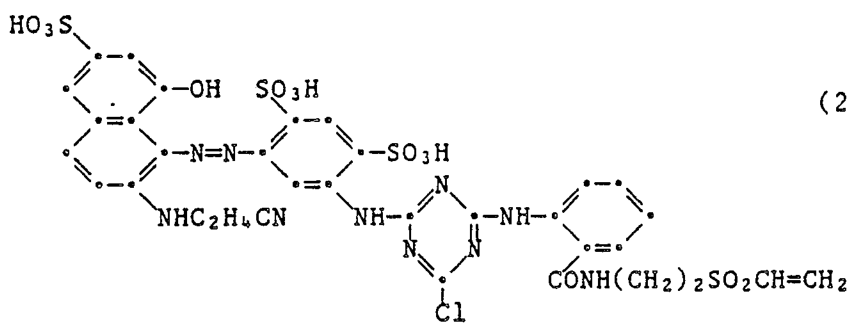 (203)

104 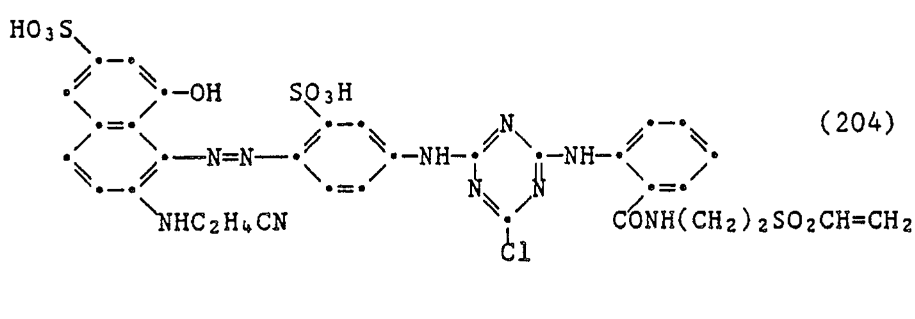 (204)

105 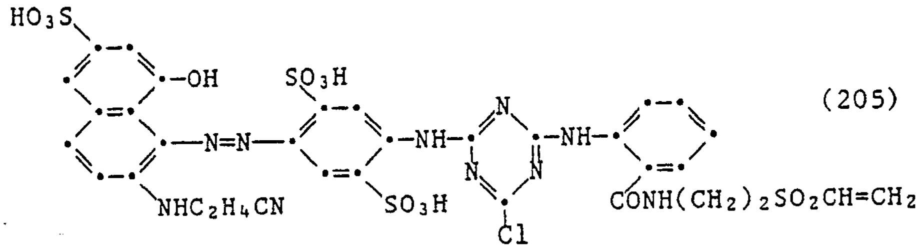 (205)

106 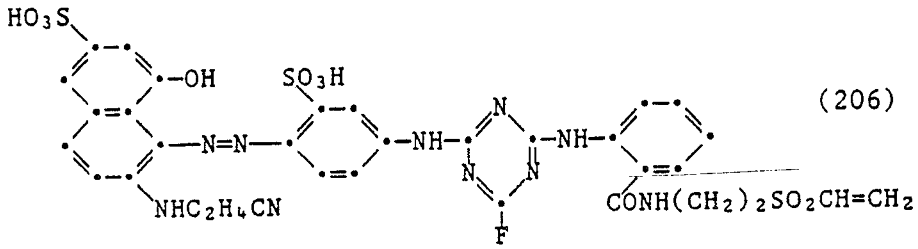 (206)

107 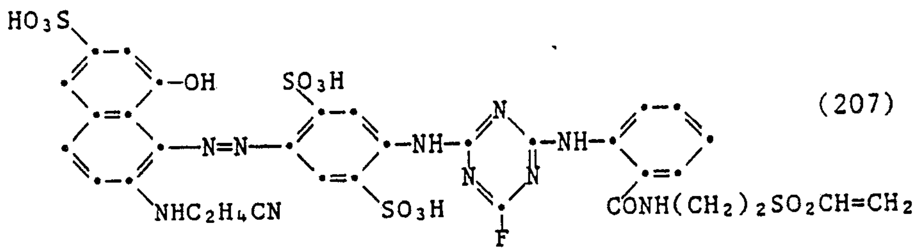 (207)

Färbevorschrift I

2 Teile des gemäss Beispiel 1 erhaltenen Farbstoffes werden in 400 Teilen Wasser gelöst; dazu gibt man 1500 Teile einer Lösung, die pro Liter 53 g Natriumchlorid enthält. In dieses Färbebad geht man bei 40 °C mit 100 Teilen eines Baumwollgewebes ein. Nach 45 Minuten werden 100 Teile einer Lösung, die pro Liter 16 g Natriumhydroxyd und 20 g kalzinierte Soda enthält, zugegeben. Die Temperatur des Färbebades wird weitere 45 Minuten bei 40 °C gehalten. Danach wird die gefärbte Ware gespült, während einer Viertelstunde mit einem nichtionogenen Waschmittel kochend geseift, nochmals gespült und getrocknet.

Färbevorschrift II

2 Teile des gemäss Beispiel 1 erhaltenen Reaktivfarbstoffes werden in 400 Teilen Wasser gelöst; dazu gibt man 1500 Teile einer Lösung, die pro Liter 53 g Natriumchlorid enthält. In dieses Färbebad geht man bei 35 °C mit 100 Teilen eines Baumwollgewebes ein. Nach 20 Minuten werden 100 Teile einer Lösung, die pro Liter 16 g Natriumhydroxyd und 20 g kalzinierte Soda enthält, zugegeben. Die Temperatur des Färbebades wird weitere 15 Minuten bei 35 °C gehalten. Danach wird die Temperatur innerhalb von 20 Minuten auf 60 °C erhöht. Die Temperatur wird weitere 35 Minuten bei 60 °C gehalten. Danach wird gespült, während einer Viertelstunde mit einem nichtionogenen Waschmittel kochend geseift, nochmals gespült und getrocknet.

Färbevorschrift III

8 Teile des gemäss Beispiel 1 erhaltenen Reaktivfarbstoffes werden in 400 Teilen Wasser gelöst; dazu

gibt man 1400 Teile einer Lösung, die pro Liter 100 g Natriumsulfat enthält. In dieses Färbebad geht man bei 25° C mit 100 Teilen eines Baumwollgewebes ein. Nach 10 Minuten werden 200 Teile einer Lösung, die pro Liter 150 g Trinatriumphosphat enthält, zugegeben. Danach wird die Temperatur des Färbebades innerhalb 10 Minuten auf 60° C erhöht. Die Temperatur wird weitere 90 Minuten auf 60° C gehalten. Danach wird gespült, während einer Viertelstunde mit einem nichtionogenen Waschmittel kochend geseift, nochmals gespült und getrocknet.

Färbevorschrift IV

4 Teile des gemäss Beispiel 1 erhaltenen Reaktivfarbstoffes werden in 50 Teilen Wasser gelöst. Dazu gibt man 50 Teile einer Lösung, die pro Liter 5 g Natriumhydroxyd und 20 g kalzinierte Soda enthält. Mit der erhaltenen Lösung wird ein Baumwollgewebe foulardiert, so dass es um 70 % seines Gewichtes zunimmt, und dann auf eine Kaule aufgewickelt. Das Baumwollgewebe wird so während 3 Stunden bei Raumtemperatur gelagert. Danach wird die gefärbte Ware gespült, während einer Viertelstunde mit einem nichtionogenen Waschmittel kochend geseift, nochmals gespült und getrocknet.

Färbevorschrift V

6 Teile des gemäss Beispiel 1 erhaltenen Reaktivfarbstoffes werden in 50 Teilen Wasser gelöst. Dazu gibt man 50 Teile einer Lösung, die pro Liter 16 g Natriumhydroxyd und 0,04 Liter Wasserglas (38° Bé) enthält. Mit der erhaltenen Lösung wird ein Baumwollgewebe foulardiert, so dass es um 70 % seines Gewichtes zunimmt, und dann auf eine Kaule aufgewickelt. Das Baumwollgewebe wird so während 10 Stunden bei Raumtemperatur gelagert.

Danach wird die gefärbte Ware gespült, während einer Viertelstunde mit einem nichtionogenen Waschmittel kochend geseift, nochmals gespült und getrocknet.

Färbevorschrift VI

2 Teile des gemäss Beispiel 1 erhaltenen Reaktivfarbstoffes werden unter Zusatz von 0,5 Teilen m-nitrobenzolsulfonsaurem Natrium in 100 Teilen Wasser gelöst. Mit der erhaltenen Lösung wird ein Baumwollgewebe imprägniert, so dass es um 75 % seines Gewichtes zunimmt, und dann getrocknet. Dann imprägniert man das Gewebe mit einer 20° C warmen Lösung, die pro Liter 4 g Natriumhydroxyd und 300 g Natriumchlorid enthält, quetscht auf 75 % Gewichtszunahme ab, dämpft die Färbung während 30 Sekunden bei 100 bis 102° C, spült, seift während einer Viertelstunde in einer 0,3%igen kochenden Lösung eines nichtionogenen Waschmittels, spült und trocknet.

Färbevorschrift VII

In 2000 Teile Wasser werden 2 Teile des Farbstoffes von Beispiel 1, 160 Teile Natriumsulfat und als Puffermittel 4 Teile $Na_2HPO_4 \cdot 12H_2O$ und 1 Teil $KH_2PO_4$ gegeben, so dass ein Färbebad mit einem pH von 7 erhalten wird. In dieses Bad werden 100 Teile einer Wirkware aus nicht-mercerisierter Baumwolle eingetaucht. Im Laufe von 30 Minuten wird die Temperatur des Bades auf 130° C gebracht, und bei dieser Temperatur wird 60 Minuten lang gefärbt. Danach wird die gefärbte Ware aus dem Bad genommen, mit Wasser gewaschen, geseift, wieder mit Wasser gewaschen und getrocknet. Es wird eine bordeaux-rote Färbung erhalten.

Färbevorschrift VIII

In 2000 Teile Wasser werden 2 Teile des Farbstoffes von Beispiel 1, 2 Teile des bekannten wasserunlöslichen Anthrachinonfarbstoffes der Formel

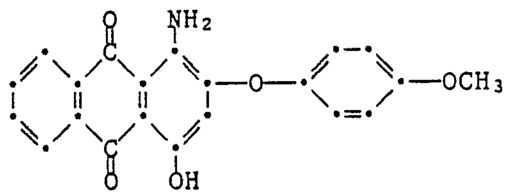

,

120 Teile Natriumsulfat und als Puffermittel 4 Teile $Na_2HPO_4 \cdot 12H_2O$ und 1 Teil $KH_2PO_4$ gegeben. In das so erhaltene Färbebad werden 100 Teile eines Polyester/Baumwoll-Mischgewebes (50:50) eingetaucht, und im Laufe von 30 Minuten wird die Temperatur des Bades auf 130 °C gebracht, bei welcher 60 Minuten gefärbt wird. Dann wird das gefärbte Gewebe aus dem Bad genommen, mit Wasser gewaschen, geseift, erneut mit Wasser gewaschen und getrocknet. Es wird ein egal gefärbtes Gewebe erhalten. Das Färbebad wird vor Beginn und während des Färbens auf pH 7 gehalten.

Druckvorschrift I

3 Teile des gemäss Beispiel 1 erhaltenen Reaktivfarbstoffes werden unter schnellem Rühren in 100 Teile einer Stammverdickung, enthaltend 50 Teile 5%ige Natriumalginatverdickung, 27,8 Teile Wasser, 20 Teile Harnstoff, 1 Teil m-nitrobenzolsulfonsaures Natrium sowie 1,2 Teile Natriumhydrogencarbonat, eingestreut. Mit der so erhaltenen Druckpaste bedruckt man ein Baumwollgewebe, trocknet und dämpft den erhaltenen bedruckten Stoff 2 Minuten bei 102 °C in gesättigtem Dampf. Das bedruckte Gewebe wird dann gespült, gegebenenfalls kochend geseift und nochmals gespült, und anschliessend getrocknet.

Druckvorschrift II

5 Teile des gemäss Beispiel 1 erhaltenen Reaktivfarbstoffes werden unter schnellem Rühren in 100 Teile einer Stammverdickung, enthaltend 50 Teile 5%ige Natriumalginatverdickung, 36,5 Teile Wasser, 10 Teile Harnstoff, 1 Teil m-nitrobenzolsulfonsaures Natrium sowie 2,5 Teile Natriumhydrogencarbonat, eingestreut. Mit der so erhaltenen Druckpaste, deren Stabilität den technischen Anforderungen entspricht, bedruckt man ein Baumwollgewebe, trocknet und dämpft den erhaltenen bedruckten Stoff 8 Minuten bei 102 °C in gesättigtem Dampf. Das bedruckte Gewebe wird dann gespült, gegebenenfalls kochend geseift und nochmals gespült, und anschliessend getrocknet.

## Ansprüche

1. Reaktivfarbstoffe der Formel

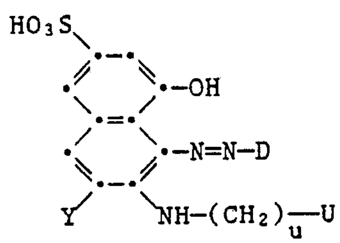

(1),

worin Y Wasserstoff oder Sulfo, U -CN, $-CONH_2$, $-SO_3H$, -OH oder $-OSO_3H$, und D ein Phenyl- oder Naphthylrest, der durch $C_1$-$C_4$-Alkyl, $C_1$-$C_4$-Alkoxy, Halogen, Carboxy und Sulfo substituiert sein kann, ist, und der mindestens einen direkt oder über ein Brückenglied an ein Ringkohlenstoffatom gebundenen Reaktivrest enthält, oder an den ein weiterer Rest gebunden ist, welcher einen Reaktivrest enthält, und u die Zahl 2, 3, 4 oder 5 ist.

2. Reaktivfarbstoffe gemäss Anspruch 1, worin U -CN, $-CONH_2$, $-SO_3H$ oder $-OSO_3H$ ist.

3. Reaktivfarbstoffe gemäss Anspruch 2, worin U $-CONH_2$ oder insbesondere -CN ist.

4. Reaktivfarbstoffe gemäss einem der Ansprüche 1 bis 3, der Formel

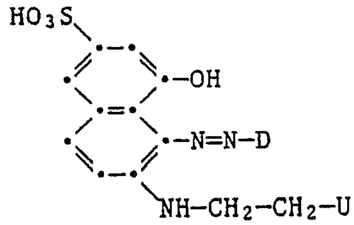

(2),

worin U -CN oder $-CONH_2$ ist, und D die in Anspruch 1 angegebenen Bedeutungen hat.

5. Reaktivfarbstoffe gemäss einem der Ansprüche 1 bis 4, worin D ein Rest der Formel

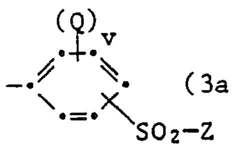

(3a),

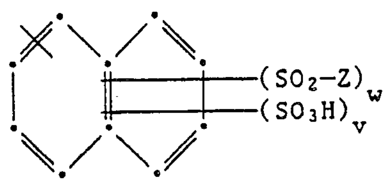

(3b) oder

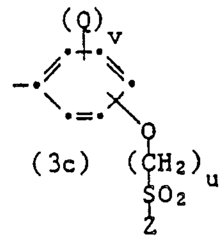

(3c)

ist, worin Q $C_1$-$C_4$-Alkyl, $C_1$-$C_4$-Alkoxy, Halogen, Carboxy oder Sulfo ist, v die Zahl 0, 1 oder 2 und w die Zahl 1 oder 2 bedeutet und u die unter Formel (1) angegebene Bedeutung hat, und Z β-Sulfatoäthyl, β-Thiosulfatoäthyl, β-Phosphatoäthyl, β-Acyloxyäthyl, β-Halogenäthyl oder Vinyl ist.

6. Reaktivfarbstoffe gemäss einem der Ansprüche 1 bis 4, worin D ein Rest der Formel

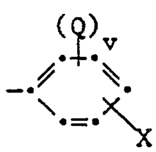

(4a),

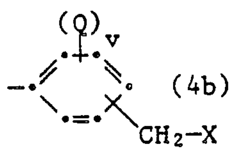

(4b) oder

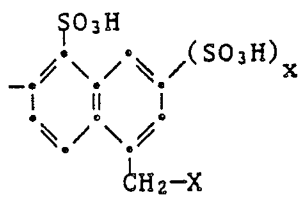

(4c)

und X ein Rest der Formel

$-NHCOCBr=CH_2$ (5a),

$-NHCOCHBrCH_2Br$ (5b),

$-NHCO(CH_2)_3-SO_2-Z$ (5c) oder

$-N(R_{11})-SO_2-Z$ (5d)

ist, Q $C_1$-$C_4$-Alkyl, $C_1$-$C_4$-Alkoxy, Halogen, Carboxy oder Sulfo, v die Zahl 0, 1 oder 2, $R_{11}$ Wasserstoff, Methyl oder Aethyl, x die Zahl 0 oder 1, und Z β-Sulfatoäthyl, β-Thiosulfatoäthyl, β-Phosphatoäthyl, β-Acyloxyäthyl, β-Halogenäthyl oder Vinyl ist.

7. Reaktivfarbstoffe gemäss einem der Ansprüche 1 bis 4, worin D ein Rest der Formel

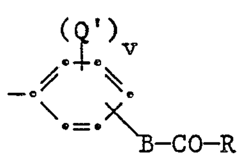

(6)

ist, Q′ $C_1$-$C_4$-Alkyl, $C_1$-$C_4$-Alkoxy, Halogen, Carboxy, Sulfo oder $-SO_2-Z$, worin Z die unter Formel (3a), (3b) oder (3c) angegebene Bedeutung hat, ist, v die Zahl 0, 1 oder 2 ist, B eine direkte Bindung oder ein Rest $(CH_2)_n$ oder $-O-(CH_2)_n$; n = 1, 2, 3, 4, 5 oder 6; R ein Rest der Formel

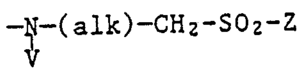
(7a)

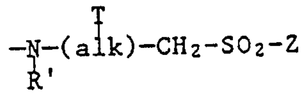
(7b)

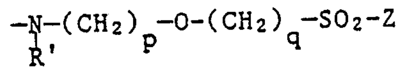
(7c)

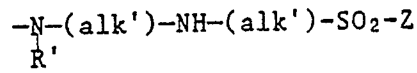
(7d)

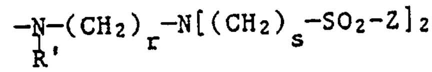
(7e) oder

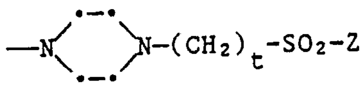
(7f),

worin R′ Wasserstoff oder $C_1$-$C_6$-Alkyl ist, alk einen Alkylenrest mit 1 bis 7 Kohlenstoffatomen oder dessen verzweigte Isomere darstellt, T Wasserstoff, Halogen, Hydroxy, Sulfato, Carboxy, Cyano, $C_1$-$C_4$-Alkanoyloxy, $C_1$-$C_4$-Alkoxycarbonyl, Carbamoyl oder einen Rest -$SO_2$-Z bedeutet, V Wasserstoff, gegebenenfalls substituiertes $C_1$-$C_4$-Alkyl oder einen Rest der Formel

$-(\overset{T}{alk})-CH_2-SO_2-Z$,

worin (alk) die zuvor angegebene Bedeutung hat, alk′ unabhängig voneinander Polymethylenreste mit 2 bis 6 C-Atomen oder dessen verzweigte Isomere, Z die unter Formel (3a), (3b) oder (3c) angegebene Bedeutung hat, p, q, r und t unabhängig voneinander je die Zahl 1, 2, 3, 4, 5 oder 6 bedeuten und s = 2, 3, 4, 5 oder 6 ist.

8. Reaktivfarbstoffe gemäss Anspruch 7, worin D ein Rest der Formel

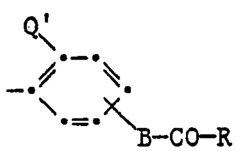
(8)

ist, Q′ Wasserstoff oder Sulfo, B eine direkte Bindung oder ein Rest -$CH_2$- oder -O-$CH_2CH_2$-, R ein Rest der Formel (7a), (7b), (7c) oder (7f), Z β-Sulfatoäthyl, β-Chloräthyl oder Vinyl, alk Methylen oder Aethylen, T Wasserstoff und V Wasserstoff oder ein Rest der Formel

$-(\overset{T}{alk})-CH_2-SO_2-Z$

worin alk, T und Z die angegebenen Bedeutungen haben, oder alk ein Rest

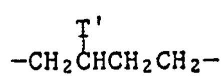

T′ ein Rest -$SO_2$Z, worin Z die oben angegebene Bedeutung hat, und V Wasserstoff, R′ Wasserstoff, p die Zahl 2, q die Zahl 2 und t die Zahl 3 ist.

9. Reaktivfarbstoffe gemäss einem der Ansprüche 3 und 4, worin D ein Rest der Formel

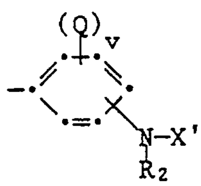 (9a), 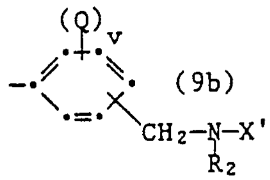 (9b) oder 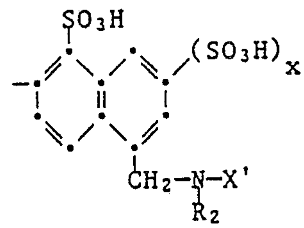 (9c)

ist, worin Q $C_1$-$C_4$-Alkyl, $C_1$-$C_4$-Alkoxy, Halogen, Carboxy oder Sulfo, $R_2$ Wasserstoff, Methyl oder Aethyl, X′ ein Triazin-, oder PyrimidinReaktivrest, v die Zahl 0, 1 oder 2 und x die Zahl 0 oder 1 ist.

10. Reaktivfarbstoffe gemäss Anspruch 9, worin X′ 2,4,5-Trichlorpyrimidinyl-(6) oder 2,4-Difluor-5-chlorpyrimidinyl-(6) ist.

11. Reaktivfarbstoffe gemäss Anspruch 9, worin X′ ein Rest der Formel

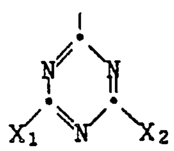 (10)

ist, worin $X_1$ Fluor, Chlor, Brom, Sulfo, $C_1$-$C_4$-Alkylsulfonyl, Phenylsulfonyl oder Carboxypridinium, und $X_2$ -OH, eine gegebenenfalls substituierte Alkoxygruppe, -SH, eine gegebenenfalls substituierte Alkylthio-oder Arylthiogruppe, $-NH_2$ oder der Rest eines aliphatischen, aromatischen oder heterocyclischen Amins ist.

12. Reaktivfarbstoffe gemäss Anspruch 11, worin $X_1$ Fluor oder Chlor, und $X_2$ $C_1$-$C_4$-Alkoxy, $C_1$-$C_4$-Alkoxy-$C_1$-$C_4$-Alkoxy; $-NH_2$, $C_1$-$C_4$-Alkylamino, N,N-Di-$C_1$-$C_4$-alkylamino, Phenylamino, N-$C_1$-$C_4$-Alkyl-N-phenylamino oder Naphthylamino, worin die Alkylreste durch $C_1$-$C_4$-Alkoxy, Cyan, Halogen, Hydroxy, Sulfo oder Sulfato substituiert sein können, und der Phenyl-bzw. Naphthylrest durch $C_1$-$C_4$-Alkyl, $C_1$-$C_4$-Alkoxy, Halogen, Carboxy oder Sulfo substituiert sein kann; oder Morpholino ist.

13. Reaktivfarbstoffe gemäss Anspruch 11, worin $X_1$ Fluor oder Chlor, und $X_2$ ein Rest der Formel

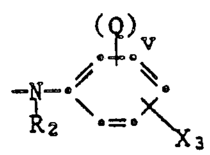 (11),

ist, worin $R_2$ Wasserstoff, Methyl oder Aethyl ist, Q $C_1$-$C_4$-Alkyl, $C_1$-$C_4$-Alkoxy, Halogen, Carboxy oder Sulfo, und v die Zahl 0, 1 oder 2 ist, und $X_3$ ein Rest der Formel $-NHCOCBr{=}CH_2$ (5a),
$-NHCOCHBr-CH_2Br$ (5b),
$-NHCO{(CH_2)}_3 SO_2-Z$ (5c) oder
$-N(R_{11})-SO_2-Z$ (5d),
$R_{11}$ Wasserstoff, Methyl oder Aethyl und Z β-Sulfatoäthyl, β-Thiosulfatoäthyl, β-Phosphatoäthyl, β-Acyloxyäthyl, β-Halogenäthyl oder Vinyl ist.

14. Reaktivfarbstoffe gemäss Anspruch 9, worin X′ ein Rest der Formel

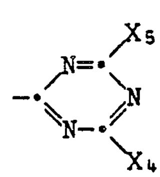 (12)

ist, worin $X_4$ Fluor, Chlor, Brom, Sulfo, $C_1$-$C_4$-Alkylsulfonyl, Phenylsulfonyl, Carboxypyridinium, $-NH_2$ oder der Rest eines aliphatischen, aromatischen oder heterocyclischen Amins ist, oder die gleich Bedeutung hat die $X_5$, unabhängig von diesem, und $X_5$ ein Rest der Formel

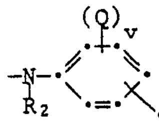 (13a), 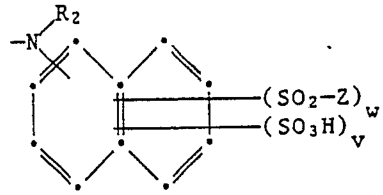 (13b) oder 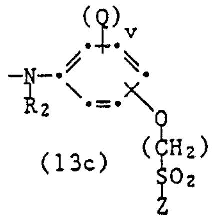 (13c)

ist, worin Q $C_1$-$C_4$-Alkyl, $C_1$-$C_4$-Alkoxy, Halogen, Carboxy oder Sulfo ist, v die Zahl 0, 1 oder 2 bedeutet und w die Zahl 1 oder 2 bedeutet und u die Zahl 2, 3, 4 oder 5 ist, Z β-Sulfatoäthyl, β-Thiosulfatoäthyl, β-Phosphatoäthyl, β-Acyloxyäthyl, β-Halogenäthyl oder Vinyl, und $R_2$ Wasserstoff, Methyl oder Aethyl ist.

15. Reaktivfarbstoffe gemäss Anspruch 9, worin X′ ein Rest der Formel

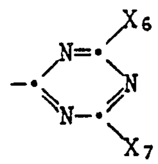 (14)

$X_6$ Fluor, Chlor, Brom, Sulfo, $C_1$-$C_4$-Alkylsulfonyl, Phenylsulfonyl, Carboxypyridinium, $-NH_2$ oder der Rest eines aliphatischen, aromatischen oder heterocyclischen Amins ist, oder die gleiche Bedeutung hat wie $X_7$, unabhängig von diesem, und $X_7$ ein Rest der Formel

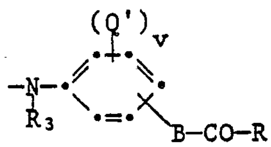 (15)

ist, worin Q′ $C_1$-$C_4$-Alkyl, $C_1$-$C_4$-Alkoxy, Halogen, Carboxy, Sulfo oder $-SO_2$-Z, v die Zahl 0, 1 oder 2, $R_3$ Wasserstoff oder $C_1$-$C_4$-Alkyl, das durch Halogen, Hydroxy, Cyan, $C_1$-$C_4$-Alkoxy, $C_1$-$C_4$-Alkoxycarbonyl, Carboxy, Sulfamoyl, Sulfo oder Sulfato substituiert sein kann, ist, B eine direkte Bindung oder ein Rest $-(CH_2)_n-$ oder $-O-(CH_2)_n-$; n = 1, 2, 3, 4, 5 oder 6; R ein Rest der Formel

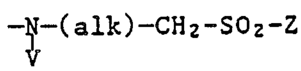 (7a)

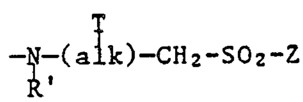 (7b)

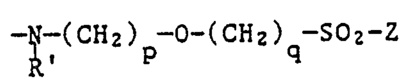 (7c)

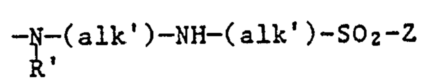 (7d)

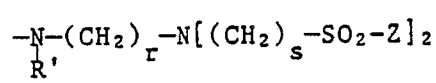 (7e) oder

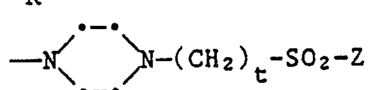 (7f),

worin R′ Wasserstoff oder $C_1$-$C_6$-Alkyl ist, alk einen Alkylenrest mit 1 bis 7 Kohlenstoffatomen oder dessen

verzweigte Isomere darstellt, T Wasserstoff, Halogen, Hydroxy, Sulfato, Carboxy, Cyano, $C_1$-$C_4$-Alkanoyloxy, $C_1$-$C_4$-Alkoxycarbonyl, Carbamoyl oder einen Rest $-SO_2-Z$ bedeutet, V Wasserstoff, gegebenenfalls substituiertes $C_1$-$C_4$-Alkyl oder einen Rest der Formel

$-(a\underset{|}{\overset{T}{}}k)-CH_2-SO_2-Z$

worin (alk) die zuvor angegebene Bedeutung hat, alk′ unabhängig voneinander Polymethylenreste mit 2 bis 6 C-Atomen oder dessen verzweigte Isomere, Z β-Sulfatoäthyl, β-Thiosulfatoäthyl, β-Phosphatoäthyl, β-Acyloxyäthyl, β-Halogenäthyl oder Vinyl ist, p, q, r und t unabhängig voneinander je die Zahl 1, 2, 3, 4, 5 oder 6 bedeuten und s = 2, 3, 4, 5 oder 6 ist, oder $X_7$ ein direkt an den Triazinring gebundener Rest der Formel (7a), (7b), (7c), (7d), (7e) oder (7f) ist, worin Z, alk, T, V, R′, alk′, p, q, r, s und t die angegebenen Bedeutungen haben.

16. Reaktivfarbstoffe gemäss Anspruch 15, worin $X_6$ Fluor, Chlor, $-NH_2$, $C_1$-$C_4$-Alkylamino, N,N-Di-$C_1$-$C_4$-alkylamino, Phenylamino, N-$C_1$-$C_4$-Alkyl-N-phenylamino oder Naphthylamino, worin die Alkylreste durch $C_1$-$C_4$-Alkoxy, Cyan, Halogen, Hydroxy, Sulfo oder Sulfato substituiert sein können, und der Phenyl- bzw. Naphthylrest durch $C_1$-$C_4$-Alkyl, $C_1$-$C_4$-Alkoxy, Halogen, Carboxy oder Sulfo substituiert sein kann, oder Morpholino oder ein Rest der Formel

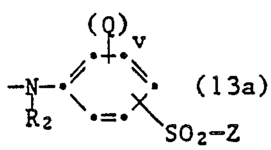 (13a), 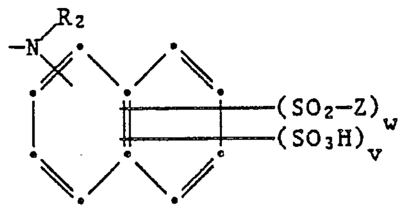 (13b) oder 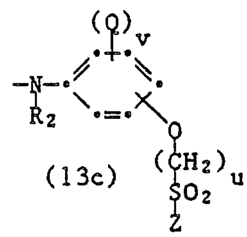 (13c)

ist, worin Q $C_1$-$C_4$-Alkyl, $C_1$-$C_4$-Alkoxy, Halogen, Carboxy oder Sulfo ist, v die Zahl 0, 1 oder 2 und w die Zahl 1 oder 2 bedeutet und u die Zahl 2, 3, 4 oder 5 ist, Z die in Anspruch 15 angegebene Bedeutung hat, und $R_2$ Wasserstoff, Methyl oder Aethyl ist.

17. Reaktivfarbstoffe gemäss Anspruch 15, worin $X_7$ ein Rest der Formel (7a), (7b), (7c) oder (7f), Z β-Sulfatoäthyl, β-Chloräthyl oder Vinyl, alk Methylen oder Aethylen, T Wasserstoff und V Wasserstoff oder ein Rest der Formel

$$-(a\underset{T'}{\underset{|}{}}k)-CH_2-SO_2-Z$$

worin alk ein Rest $-CH_2\overset{|}{C}HCH_2CH_2-$, T′ ein Rest $-SO_2Z$, worin Z die oben angegebene Bedeutung hat, R′ Wasserstoff, p und q je die Zahl 2 und t die Zahl 3 ist.

18. Reaktivfarbstoffe gemäss Anspruch 15, worin $X_7$ ein Rest der Formel

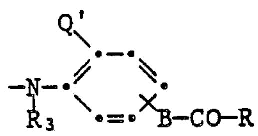 (16),

$R_3$ Wasserstoff oder $C_1$-$C_4$-Alkyl, das durch Halogen, Hydroxy, Cyan, $C_1$-$C_4$-Alkoxy, $C_1$-$C_4$-Alkoxycarbonyl, Carboxy, Sulfamoyl, Sulfo oder Sulfato substituiert sein kann, B eine direkte Bindung oder ein Rest $-CH_2-$ oder $-O-CH_2CH_2-$, R ein Rest der Formel (7a), (7b), (7c) oder (7f), Z β-Sulfatoäthyl, β-Chloräthyl oder Vinyl, alk Methylen, oder Aethylen, T Wasserstoff und V Wasserstoff oder ein Rest der Formel

$-(a\underset{|}{\overset{T}{}}k)-CH_2-SO_2-Z$

ist, worin alk, T und Z die angegebenen Bedeutungen haben, oder alk ein Rest

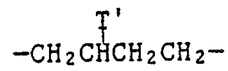

T′ ein Rest $-SO_2Z$, worin Z die oben angegebene Bedeutung hat, und R′ und V je Wasserstoff, p die Zahl 2, m die Zahl 2 und q die Zahl 3 ist.

19. Reaktivfarbstoffe gemäss Anspruch 18, worin $R_3$ Wasserstoff, Methyl oder Aethyl ist.

20. Reaktivfarbstoffe gemäss Anspruch 15, worin $X_7$ ein Rest der Formel

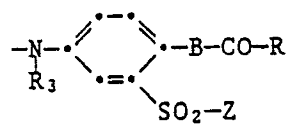

(17)

$R_3$ Wasserstoff, Methyl oder Aethyl, B eine direkte Bindung oder ein Rest $-CH_2-$ oder $-O-CH_2CH_2-$, R ein Rest der Formel (7a), (7b), (7c) oder (7f), Z β-Sulfatoäthyl, β-Chloräthyl oder Vinyl, alk Methylen oder Aethylen, T Wasserstoff und V Wasserstoff oder ein rest der Formel $-(\underset{T}{alk})-CH_2-SO_2-Z$

worin alk, T und Z die oben angegebenen Bedeutungen haben, oder alk ein Rest

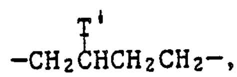

T′ ein Rest $-SO_2-Z$, worin Z die oben angegebene Bedeutung hat und R′ Wasserstoff, p und q je die Zahl 2 und t die Zahl 3 ist.

21. Reaktivfarbstoffe gemäss Anspruch 8 der Formel

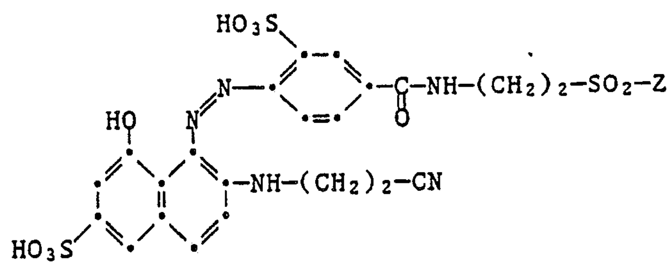

(18),

worin Z β-Sulfatoäthyl, β-Chloräthyl oder Vinyl ist.

22. Reaktivfarbstoffe gemäss Anspruch 5 der Formel

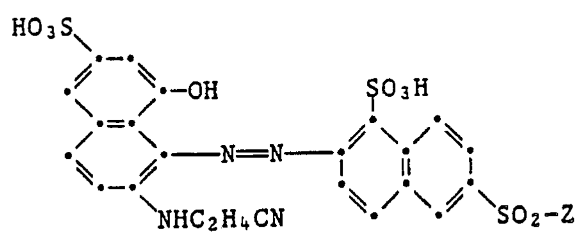

(19),

worin Z β-Sulfatoäthyl, β-Chloräthyl oder Vinyl ist.

23. Reaktivfarbstoffe gemäss Anspruch 12 der Formel

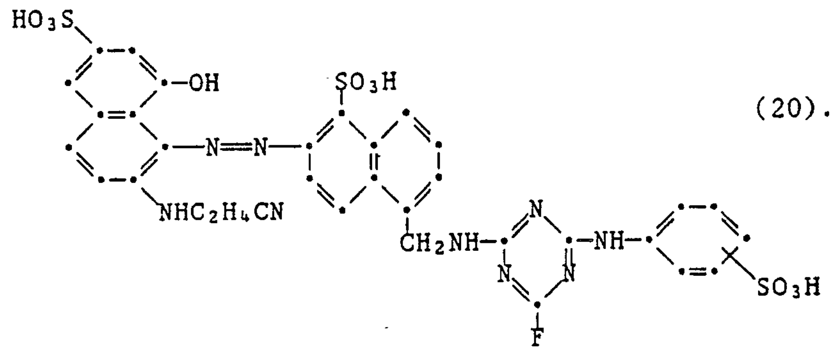

(20).

24. Verfahren zur Herstellung von Reaktivfarbstoffen der Formel (1), dadurch gekennzeichnet, dass man in einen entsprechenden Farbstoff, worin D keinen Reaktivrest enthält, oder in ein Farbstoffvorprodukt mit dem Rest D mindestens einen Reaktivrest einführt, oder dass man im Fall der Verwendung von Farbstoffvorprodukten, die erhaltenen Zwischenprodukte in die gewünschten Endfarbstoffe überführt, und gegebenenfalls eine weitere Umwandlungsreaktion anschliesst.

25. Verwendung der Reaktivfarbstoffe gemäss Anspruch 1 zum Färben oder Bedrucken von cellulosehaltigen Fasermaterialien.

26. Verwendung gemäss Anspruch 25 zum Färben oder Bedrucken von Baumwolle.

Patentansprüche für folgenden Vertragsstaat: ES

1. Verfahren zur Herstellung von Reaktivfarbstoffen der Formel

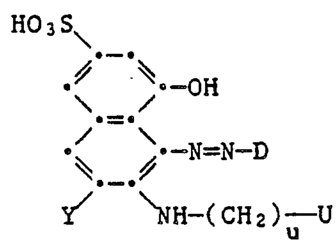

(1),

worin Y Wasserstoff oder Sulfo, U -CN, $-CONH_2$, $-SO_3H$, -OH oder $-OSO_3H$, und D ein Phenyl- oder Naphthylrest, der durch $C_1$-$C_4$-Alkyl, $C_1$-$C_4$-Alkoxy, Halogen, Carboxy und Sulfo substituiert sein kann, ist, und der mindestens einen direkt oder über ein Brückenglied an ein Ringkohlenstoffatom gebundenen Reaktivrest enthält, oder an den ein weiterer Rest gebunden ist, welcher einen Reaktivrest enthält, und u die Zahl 2, 3, 4 oder 5 ist, dadurch gekennzeichnet, dass man ein Amin der Formel

$D'-HN_2$ (21),

worin D′ die für D in Formel (1) angegebene Bedeutung hat oder ein Phenyl- oder Naphthylrest D ist, welcher frei von Reaktivresten ist, diazotiert und auf eine Kupplungskomponente der Formel

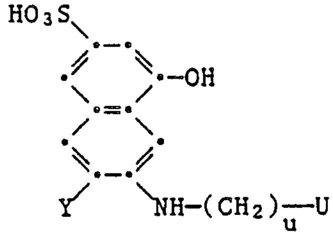

(22),

worin u, U und Y die unter Formel (1) angegebenen Bedeutungen haben, kuppelt, und falls D′ frei von Reaktivresten ist, mindestens einen Reaktivrest in D′ einführt, und gegenbenfalls eine weitere Umwandlungsreaktion anschliesst.

2. Verfahren gemäss Anspruch 1, dadurch gekennzeichnet, dass man eine Kupplungskomponente der Formel (22) verwendet, worin U -CN, $-CONH_2$, $-SO_3H$ oder $-OSO_3H$ ist.

3. Verfahren gemäss Anspruch 2, dadurch gekennzeichnet, dass man eine Kupplungskomponente der Formel (22) verwendet, worin U -$CONH_2$ oder insbesondere -CN ist.

4. Verfahren gemäss einem der Ansprüche 1 bis 3, dadurch gekennzeichnet, dass man eine Kupplungskomponente der Formel

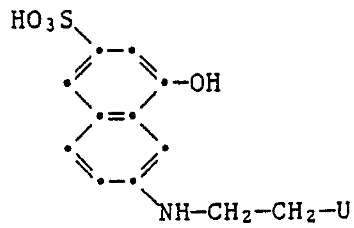

(26)

verwendet, worin U -CN oder -$CONH_2$ ist.

5. Verfahren gemäss einem der Ansprüche 1 bis 4, dadurch gekennzeichnet, dass man eine Diazokomponente der Formel (21) verwendet, worin D′ ein Rest der Formel

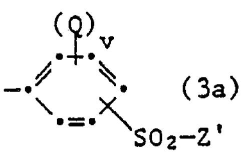

(3a),

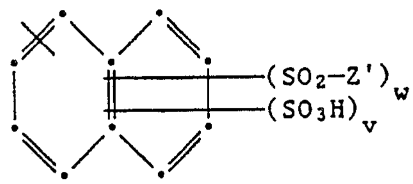

(3b) oder

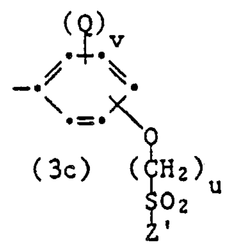

(3c)

ist, worin Q $C_1$-$C_4$-Alkyl, $C_1$-$C_4$-Alkoxy, Halogen, Carboxy oder Sulfo ist, v die Zahl 0, 1 oder 2 und w die Zahl 1 oder 2 bedeutet und u die unter Formel (1) angegebene Bedeutung hat, und Z′ β-Sulfatoäthyl, β-Thiosulfatoäthyl, β-Phosphatoäthyl, β-Acyloxyäthyl, β-Halogenäthyl, β-Hydroxyäthyl oder Vinyl ist.

6. Verfahren gemäss einem der Ansprüche 1 bis 4, dadurch gekennzeichnet, dass man eine Diazokomponente der Formel (21) verwendet, worin D′ ein Rest der Formel

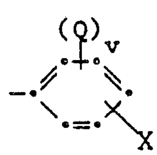

(4a),

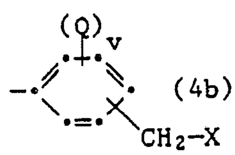

(4b) oder

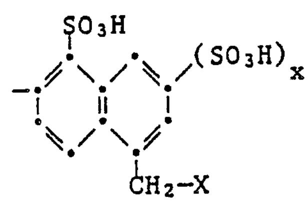

(4c)

und X ein Rest der Formel
-$NHCOCBr=CH_2$ (5a),
-$NHCOCHBrCH_2Br$ (5b),
-$NHCO(CH_2)_3SO_2$-Z′ (5c) oder
-$N(R_{11})$-$SO_2$-Z′ (5d)
ist, Q $C_1$-$C_4$-Alkyl, $C_1$-$C_4$-Alkoxy, Halogen, Carboxy oder Sulfo, v die Zahl 0, 1 oder 2, $R_{11}$ Wasserstoff, Methyl oder Aethyl, x die Zahl 0 oder 1, und Z β-Sulfatoäthyl, β-Thiosulfatoäthyl, β-Phosphatoäthyl, β-Acyloxyäthyl, β-Halogenäthyl, β-Hydroxyäthyl oder Vinyl ist.

7. Verfahren gemäss einem der Ansprüche 1 bis 4, dadurch gekennzeichnet, dass man eine Diazokomponente der Formel (21) verwendet, worin D′ ein Rest der Formel

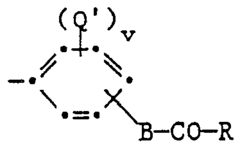

(6)

ist, Q′ $C_1$-$C_4$-Alkyl, $C_1$-$C_4$-Alkoxy, Halogen, Carboxy, Sulfo oder $-SO_2-Z'$, worin Z′ β-Sulfatoäthyl, β-Thiosulfatoäthyl, β-Phosphatoäthyl, β-Acyloxyäthyl, β-Halogenäthyl, β-Hydroxyäthyl oder Vinyl ist, v die Zahl 0, 1 oder 2 ist, B eine direkte Bindung oder ein Rest $-(CH_2)_n-$ oder $-O-(CH_2)_n$; n = 1, 2, 3, 4, 5 oder 6; R ein Rest der Formel

$-N(V)-(alk)-CH_2-SO_2-Z'$ (7a)

$-N(R')-(alk(T))-CH_2-SO_2-Z'$ (7b)

$-N(R')-(CH_2)_p-O-(CH_2)_q-SO_2-Z'$ (7c)

$-N(R')-(alk')-NH-(alk')-SO_2-Z'$ (7d)

$-N(R')-(CH_2)_r-N[(CH_2)_s-SO_2-Z']_2$ (7e) oder

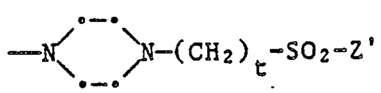

(7f),

worin R′ Wasserstoff oder $C_1$-$C_6$-Alkyl ist, alk einen Alkylenrest mit 1 bis 7 Kohlenstoffatomen oder dessen verzweigte Isomere darstellt, T Wasserstoff, Halogen, Hydroxy, Sulfato, Carboxy, Cyano, $C_1$-$C_4$-Alkanoyloxy, $C_1$-$C_4$-Alkoxycarbonyl, Carbamoyl oder einen Rest $-SO_2-Z'$ bedeutet, V Wasserstoff, gegebenenfalls substituiertes $C_1$-$C_4$-Alkyl oder einen Rest der Formel

$-(alk(T))-CH_2-SO_2-Z'$,

worin (alk) die zuvor angegebene Bedeutung hat, alk′ unabhängig voneinander Polymethylenreste mit 2 bis 6 C-Atomen oder dessen verzweigte Isomere, Z′ die oben angegebene Bedeutung hat, p, q, r und t unabhängig voneinander je die Zahl 1, 2, 3, 4, 5 oder 6 bedeuten und s = 2, 3, 4, 5 oder 6 ist.

8. Verfahren gemäss Anspruch 7, dadurch gekennzeichnet, dass man eine Diazokomponente der Formel (21) verwendet, worin D′ ein Rest der Formel

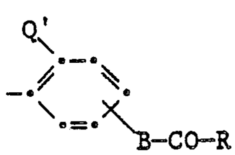

(8)

ist, Q′ Wasserstoff oder Sulfo, B eine direkte Bindung oder ein Rest $-CH_2-$ oder $-O-CH_2CH_2-$, R ein Rest der Formel (7a), (7b), (7c) oder (7f), Z′ β-Sulfatoäthyl, β-Chloräthyl, β-Hydroxyäthyl oder Vinyl, alk Methylen oder Aethylen, T Wasserstoff und V Wasserstoff oder ein Rest der Formel

$-(alk(T))-CH_2-SO_2-Z'$

worin alk, T und Z′ die angegebenen Bedeutungen haben, oder alk ein Rest

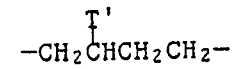

T′ ein Rest $-SO_2Z'$, worin Z′ die oben angegebene Bedeutung hat, und V Wasserstoff, R′ Wasserstoff, p die Zahl 2, q die Zahl 2 und t die Zahl 3 ist.

9. Verfahren gemäss einem der Ansprüche 3 und 4, dadurch gekennzeichnet, dass man eine Diazokomponente der Formel (21) verwendet, worin D′ ein Rest der Formel

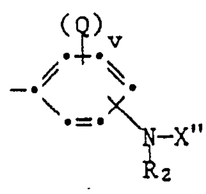 (9a), 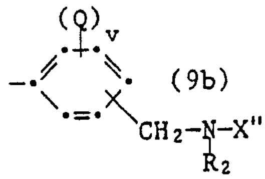 (9b) oder 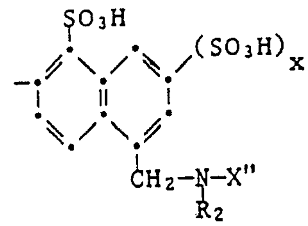 (9c)

ist, worin Q $C_1$-$C_4$-Alkyl, $C_1$-$C_4$-Alkoxy, Halogen, Carboxy oder Sulfo, $R_2$ Wasserstoff, Methyl oder Aethyl, X″ Wasserstoff oder ein Triazin-, oder Pyrimidin-Reaktivrest, v die Zahl 0, 1 oder 2 und x die Zahl 0 oder 1 ist, wobei falls X″ Wasserstoff ist nach der Kupplungsreaktion ein Triazin- oder Pyrimidin-Reaktivrest in D′ eingeführt wird.

10. Verfahren gemäss Anspruch 9, dadurch gekennzeichnet, dass man eine Diazokomponente der Formel (21), worin D′ ein Rest der Formel (9a), (9b) oder (9c) ist, und X″ Wasserstoff, 2,4,5-Trichlorpyrimidinyl-(6) oder 2,4-Difluor-5-chlorpyrimidinyl-(6) ist, verwendet, wobei falls X″ Wasser stoff ist nach der Kupplungsreaktion der Farbstoff mit einem Acylierungsmittel, welches 2,4,5 Trichlorpyrimidinyl-(6) oder 2,4-Difluor-5-chlorpyrimidinyl-(6) einführt, umgesetzt wird.

11. Verfahren gemäss Anspruch 9, dadurch gekennzeichnet, dass man eine Diazokomponente der Formel (21), worin D′ ein Rest der Formel (9a), (9b) oder (9c) ist, und X″ Wasserstoff oder ein Rest der Formel

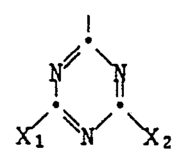 (10)

ist, worin $X_1$ Fluor, Chlor, Brom, Sulfo, $C_1$-$C_4$-Alkylsulfonyl, Phenylsulfonyl oder Carboxypridinium, und $X_2$ -OH, eine gegebenenfalls substituierte Alkoxygruppe, -SH, eine gegebenenfalls substituierte Alkylthiooder Arylthiogruppe, $-NH_2$ oder der Rest eines aliphatischen, aromatischen oder heterocyclischen Amins ist, verwendet, wobei, falls X″ Wasserstoff ist, nach der Kupplungsreaktion der Farbstoff mit einem Acylierungsmittel, welches den Rest der Formel (10) einführt, umgesetzt wird.

12. Verfahren gemäss Anspruch 11, dadurch gekennzeichnet, dass man eine Diazokomponente der Formel (21), worin D′ ein Rest der Formel (9a), (9b) oder (9c) ist, und X″ Wasserstoff oder ein Rest der Formel (10) ist, worin $X_1$ Fluor oder Chlor, und $X_2$ $C_1$-$C_4$-Alkoxy, $C_1$-$C_4$-Alkoxy-$C_1$-$C_4$-Alkoxy; $-NH_2$, $C_1$-$C_4$-Alkylamino, N,N-Di-$C_1$-$C_4$-alkylamino, Phenylamino, N-$C_1$-$C_4$-Alkyl-N-phenylamino oder Naphthylamino, worin die Alkylreste durch $C_1$-$C_4$-Alkoxy, Cyan, Halogen, Hydroxy, Sulfo oder Sulfato substituiert sein können, und der Phenyl-bzw. Naphthylrest durch $C_1$-$C_4$-Alkyl, $C_1$-$C_4$-Alkoxy, Halogen, Carboxy oder Sulfo substituiert sein kann; oder Morpholino ist, verwendet, wobei falls X″ Wasserstoff ist, nach der Kupplungsreaktion der Farbstoff mit einem Acylierungsmittel, welches den Rest der Formel (10) einführt, wobei $X_1$ und $X_2$ die oben angegebenen Bedeutungen haben, umgesetzt wird.

13. Verfahren gemäss Anspruch 11, dadurch gekennzeichnet, dass man eine Diazokomponente der Formel (21), worin D′ ein Rest der Formel (9a), (9b) oder (9c) ist, und X″ Wasserstoff oder ein Rest der Formel (10) ist, worin $X_1$ Fluor oder Chlor, und $X_2$ ein Rest der Formel

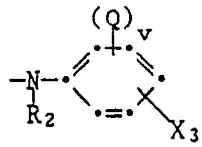

(11),

ist, worin $R_2$ Wasserstoff, Methyl oder Aethyl ist, Q $C_1$-$C_4$-Alkyl, $C_1$-$C_4$-Alkoxy, Halogen, Carboxy oder Sulfo, und v die Zahl 0, 1 oder 2 ist, und $X_3$ ein Rest der Formel

$-NHCOCBr=CH_2$ (5a),

$-NHCOCHBr-CH_2Br$ (5b),

$-NHCO(CH_2)_3SO_2-Z'$ (5c) oder

$-N(R_{11})-SO_2-Z'$ (5d),

$R_{11}$ Wasserstoff, Methyl oder Aethyl und Z′ β-Sulfatoäthyl, β-Thiosulfatoäthyl, β-Phsophatoäthyl, β-Acyloxyäthyl, β-Halogenäthyl, β-Hydroxyäthyl oder Vinyl ist, verwendet, wobei falls X″ Wasserstoff ist, nach der Kupplungsreaktion der Farbstoff mit einem Acylierungsmittel, welches den Rest der Formel (10) einführt, wobei $X_1$ und $X_2$ die oben angegebenen Bedeutungen haben, umgesetzt wird.

14. Verfahren gemäss Anspruch 9, dadurch gekennzeichnet, dass man eine Diazokomponente der Formel (21), worin D′ ein Rest der Formel (9a), (9b) oder (9c) ist, und X″ Wasserstoff oder ein Rest der Formel

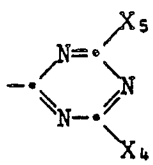

(12)

ist, worin $X_4$ Fluor, Chlor, Brom, Sulfo, $C_1$-$C_4$-Alkylsulfonyl, Phenylsulfonyl, Carboxypyridinium, $-NH_2$ oder der Rest eines aliphatischen, aromatischen oder heterocyclischen Amins ist, oder die gleich Bedeutung hat wie $X_5$, unabhängig von diesem, und $X_5$ ein Rest der Formel

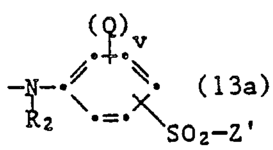

(13a),

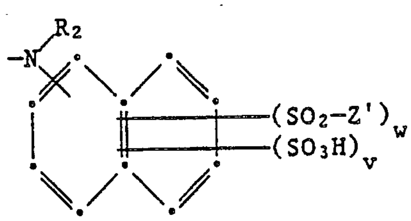

(13b) oder

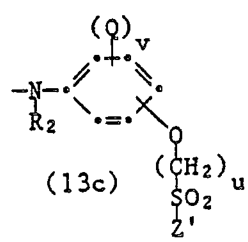

(13c)

ist, worin Q $C_1$-$C_4$-Alkyl, $C_1$-$C_4$-Alkoxy, Halogen, Carboxy oder Sulfo ist, v die Zahl 0, 1 oder 2 bedeutet und w die Zahl 1 oder 2 bedeutet und u die Zahl 2, 3, 4 oder 5 ist, Z′ β-Sulfatoäthyl, β-Thiosulfatoäthyl, β-Phosphatoäthyl, β-Acyloxyäthyl, β-Halogenäthyl, β-Hydroxyäthyl oder Vinyl, und $R_2$ Wasserstoff, Methyl oder Aethyl ist, verwendet, wobei falls X″ Wasserstoff ist, nach der Kupplungsreaktion der Farbstoff mit einem Acylierungsmittel, welches den Rest der Formel (12) einführt, umgesetzt wird.

15. Verfahren gemäss Anspruch 9, dadurch gekennzeichnet, dass man eine Diazokomponente der Formel (21), worin D′ ein Rest der Formel (9a), (9b) oder (9c) ist, und X″ Wasserstoff oder ein Rest der Formel

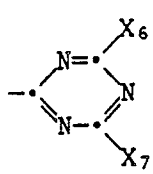

(14)

$X_6$ Fluor, Chlor, Brom, Sulfo, $C_1$-$C_4$-Alkylsulfonyl, Phenylsulfonyl, Carboxypyridinium, -$NH_2$ oder der Rest eines aliphatischen, aromatischen oder heterocyclischen Amins ist, oder die gleiche Bedeutung hat wie $X_7$, unabhängig von diesem, und $X_7$ ein Rest der Formel

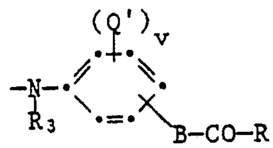

(15)

ist, worin Q′ $C_1$-$C_4$-Alkyl, $C_1$-$C_4$-Alkoxy, Halogen, Carboxy, Sulfo oder -$SO_2$-Z, v die Zahl 0, 1 oder 2, $R_3$ Wasserstoff oder $C_1$-$C_4$-Alkyl, das durch Halogen, Hydroxy, Cyan, $C_1$-$C_4$-Alkoxy, $C_1$-$C_4$-Alkoxycarbonyl, Carboxy, Sulfamoyl, Sulfo oder Sulfato substituiert sein kann, ist, B eine direkte Bindung oder ein Rest $-(CH_2)_n$ oder $-O-(CH_2)_n$; n = 1, 2, 3, 4, 5 oder 6; R ein Rest der Formel

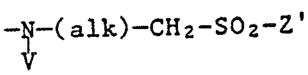

(7a)

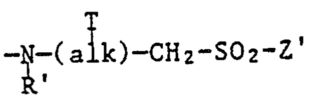

(7b)

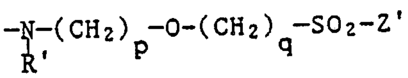

(7c)

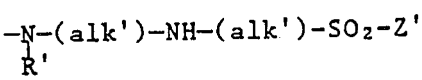

(7d)

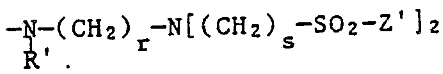

(7e) oder

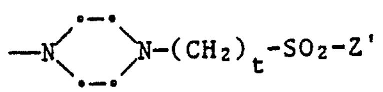

(7f),

worin R′ Wasserstoff oder $C_1$-$C_6$-Alkyl ist, alk einen Alkylenrest mit 1 bis 7 Kohlenstoffatomen oder dessen verzweigte Isomere darstellt, T Wasserstoff, Halogen, Hydroxy, Sulfato, Carboxy, Cyano, $C_1$-$C_4$-Alkanoyloxy, $C_1$-$C_4$-Alkoxycarbonyl, Carbamoyl oder einen Rest -$SO_2$-Z′ bedeutet, V Wasserstoff, gegebenenfalls substituiertes $C_1$-$C_4$-Alkyl oder einen Rest der Formel

$-(a\overset{T}{l}k)-CH_2-SO_2-Z'$

worin (alk) die zuvor angegebene Bedeutung hat, alk′ unabhängig voneinander Polymethylenreste mit 2 bis 6 C-Atomen oder dessen verzweigte Isomere, Z′ β-Sulfatoäthyl, β-Thiosulfatoäthyl, β-Phosphatoäthyl, β-Acyloxyäthyl, β-Halogenäthyl, β-Hydroxyäthyl oder Vinyl ist, p, q, r und t unabhängig voneinander je die Zahl 1, 2, 3, 4, 5 oder 6 bedeuten und s = 2, 3, 4, 5 oder 6 ist, oder $X_7$ ein direkt an den Triazinring gebundener Rest der Formel (7a), (7b), (7c), (7d), (7e) oder (7f) ist, worin Z′, alk, T, V, R′, alk′, p, q, r, s und t die angegebenen Bedeutungen haben, verwendet, wobei falls X″ Wasserstoff ist, nach der Kupplungsreaktion der Farbstoff mit einem Acylierungsmittel, welches den Rest der Formel (14) einführt, umgesetzt wird.

16. Verfahren gemäss Anspruch 15, dadurch gekennzeichnet, dass man eine Diazokomponente der Formel (21), worin D′ ein Rest der Formel (9a), (9b) oder (9c) ist, und X″ Wasserstoff oder ein Rest der Formel (14) ist, worin $X_6$ Fluor, Chlor, -$NH_2$, $C_1$-$C_4$-Alkylamino, N,N-Di-$C_1$-$C_4$-alkylamino, Phenylamino, N-$C_1$-$C_4$-Alkyl-N-phenylamino oder Naphthylamino, worin die Alkylreste durch $C_1$-$C_4$-Alkoxy, Cyan, Halogen, Hydroxy, Sulfo oder Sulfato substituiert sein können, und der Phenyl- bzw. Naphthylrest durch $C_1$-$C_4$-Alkyl, $C_1$-$C_4$-Alkoxy, Halogen, Carboxy oder Sulfo substituiert sein kann, oder Morpholino oder ein Rest der Formel

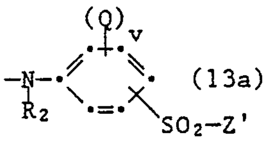 (13a), 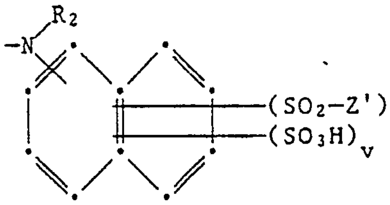 (13b) oder 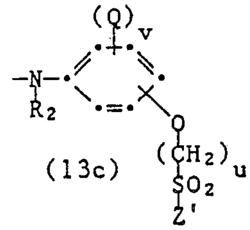 (13c)

ist, worin Q $C_1$-$C_4$-Alkyl, $C_1$-$C_4$-Alkoxy, Halogen, Carboxy oder Sulfo ist, v die Zahl 0, 1 oder 2 und w die Zahl 1 oder 2 bedeutet und u die Zahl 2, 3, 4 oder 5 ist, $Z'$ die in Anspruch 15 angegebene Bedeutung hat, und $R_2$ Wasserstoff, Methyl oder Aethyl ist, verwendet, wobei falls $X''$ Wasserstoff ist, nach der Kupplungsreaktion der Farbstoff mit einem Acylierungsmittel, welches den Rest der Formel (14) einführt, umgesetzt wird, wobei $X_6$ die oben angegebene Bedeutung hat.

17. Verfahren gemäss Anspruch 15, dadurch gekennzeichnet, dass man eine Diazokomponente der Formel (21), worin $D'$ ein Rest der Formel (9a), (9b) oder (9c) ist, und $X''$ Wasserstoff oder ein Rest der Formel (14) ist, worin $X_7$ ein Rest der Formel (7a), (7b), (7c) oder (7f), $Z'$ β-Sulfatoäthyl, β-Chloräthyl, β-Hydroxyäthyl oder Vinyl, alk Methylen oder Aethylen, T Wasserstoff und V Wasserstoff oder ein Rest der Formel

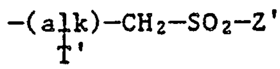

worin alk ein Rest $-CH_2\overset{|}{C}HCH_2CH_2-$, $T'$ ein Rest $-SO_2Z'$, worin $Z'$ die oben angegebene Bedeutung hat, $R'$ Wasserstoff, p und q je die Zahl 2 und t die Zahl 3 ist, verwendet, wobei falls $X''$ Wasserstoff ist, nach der Kupplungsreaktion der Farbstoff mit einem Acylierungsmittel, welches den Rest der Formel (14) einführt, umgesetzt wird, wobei $X_7$ die oben angegebene Bedeutung hat.

18. Verfahren gemäss Anspruch 15, dadurch gekennzeichnet, dass man eine Diazokomponente der Formel (21), worin $D'$ ein Rest der Formel (9a), (9b) oder (9c) ist, und $X''$ Wasserstoff oder ein Rest der Formel (14) worin $X_7$ ein Rest der Formel

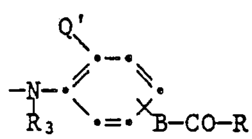 (16),

$R_3$ Wasserstoff oder $C_1$-$C_4$-Alkyl, das durch Halogen, Hydroxy, Cyan, $C_1$-$C_4$-Alkoxy, $C_1$-$C_4$-Alkoxycarbonyl, Carboxy, Sulfamoyl, Sulfo oder Sulfato substituiert sein kann, B eine direkte Bindung oder ein Rest $-CH_2-$ oder $-O-CH_2CH_2-$, R ein Rest der Formel (7a), (7b), (7c) oder (7f), $Z'$ β-Sulfatoäthyl, β-Chloräthyl, β-Hydroxyäthyl oder Vinyl, alk Methylen, oder Aethylen, T Wasserstoff und V Wasserstoff oder ein Rest der Formel

$-(a\overset{T}{|}k)-CH_2-SO_2-Z'$

ist, worin alk, T und $Z'$ die angegebenen Bedeutungen haben, oder alk ein Rest

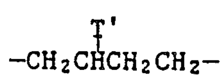

$T'$ ein Rest $-SO_2Z'$, worin $Z'$ die oben angegebene Bedeutung hat, und $R'$ und V je Wasserstoff, p die Zahl 2, m die Zahl 2 und q die Zahl 3 ist, verwendet, wobei falls $X''$ Wasserstoff ist, nach der Kupplungsreaktion der Farbstoff mit einem Acylierungsmittel, welches den Rest der Formel (14) einführt, umgesetzt wird, wobei $X_7$ die oben angegebene Bedeutung hat.

19. Verfahren gemäss Anspruch 18, dadurch gekennzeichnet, dass man eine Diazokomponente der Formel (21), worin D′ ein Rest der Formel (9a), (9b) oder (9c) ist, und X″ Wasserstoff oder ein Rest der Formel (14) ist, und $R_3$ Wasserstoff, Methyl oder Aethyl ist, verwendet, wobei falls X″ Wasserstoff ist, nach der Kupplungsreaktion der Farbstoff mit einem Acylierungsmittel, welches den Rest der Formel (14) einführt, umgesetzt wird, wobei $R_3$ die oben angegebene Bedeutung hat.

20. Verfahren gemäss Anspruch 15, dadurch gekennzeichnet, dass man eine Diazokomponente der Formel (21), worin D′ ein Rest der Formel (9a), (9b) oder (9c) ist, und X″ Wasserstoff oder ein Rest der Formel (14) ist, worin $X_7$ ein Rest der Formel

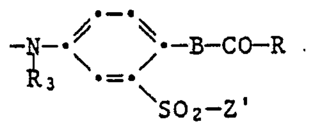

(17)

$R_3$ Wasserstoff, Methyl oder Aethyl, B eine direkte Bindung oder ein Rest $-CH_2-$ oder $-O-CH_2CH_2-$, R ein Rest der Formel (7a), (7b), (7c) oder (7f), Z′ β-Sulfatoäthyl, β-Chloräthyl, β-Hydroxyäthyl oder Vinyl, alk′ Methylen oder Aethylen, T Wasserstoff und V Wasserstoff oder ein Rest der Formel $-(\underset{T}{alk})-CH_2-SO_2-Z'$

worin alk, T und Z′ die oben angegebenen Bedeutungen haben, oder alk ein Rest

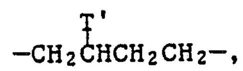

T′ ein Rest $-SO_2-Z'$, worin Z′ die oben angegebene Bedeutung hat und R′ Wasserstoff, p und q je die Zahl 2 und t die Zahl 3 ist, verwendet, wobei, falls X″ Wasserstoff ist, nach der Kupplungsreaktion der Farbstoff mit einem Acylierungsmittel, welches den Rest der Formel (14) einführt, umgesetzt wird, wobei $X_7$ die oben angegebene Bedeutung hat.

21. Verfahren gemäss Anspruch 8 zur Herstellung der Reaktivfarbstoffe der Formel

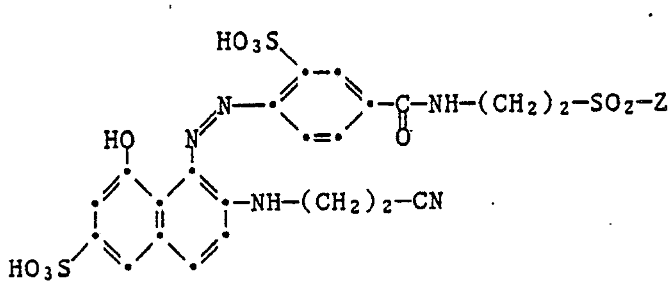

(18),

worin Z β-Sulfatoäthyl, β-Chloräthyl oder Vinyl ist, dadurch gekennzeichnet, dass man ein Amin der Formel

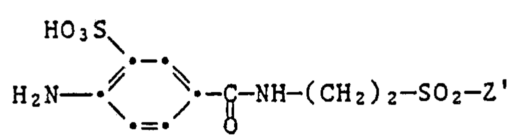

(18a),

worin Z′ die für Z angegebene Bedeutung hat oder β-Hydroxyäthyl ist, diazotiert und auf eine Kupplungskomponente der Formel

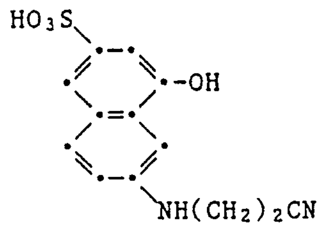

(18b)

kuppelt, und falls Z' in Formel (18a) β-Hydroxyäthyl ist, diesen Rest in einen Rest Z umwandelt.

22. Verfahren gemäss Anspruch 5 zur Herstellung der Reaktivfarbstoffe der Formel

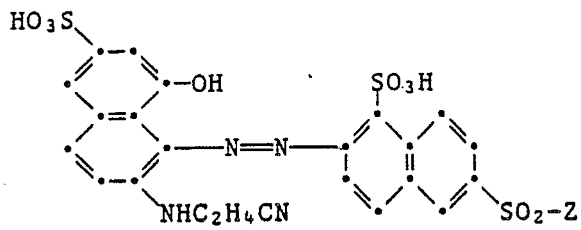

(19),

worin Z β-Sulfatoäthyl, β-Chloräthyl oder Vinyl ist, dadurch gekennzeichnet, dass man ein Amin der Formel

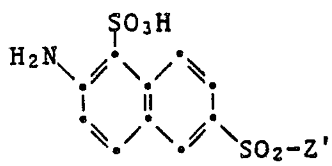

(19a)

worin Z' die für Z angegebene Bedeutung hat oder β-Hydroxyäthyl ist, diazotiert und auf eine Kupplungskomponente der Formel

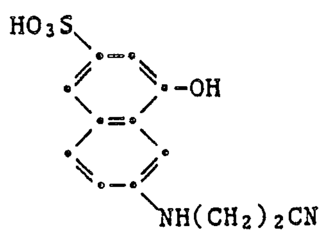

(18b)

kuppelt, und falls Z' in Formel (19a) β-Hydroxyäthyl ist, diesen Rest in einen Rest Z umwandelt.

23. Verfahren gemäss Anspruch 12 zur Herstellung der Reaktivfarbstoffe der Formel

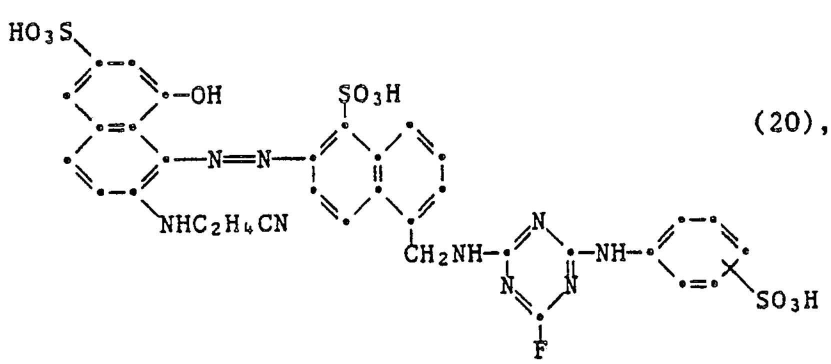

(20),

dadurch gekennzeichnet, dass man ein Amin der Formel

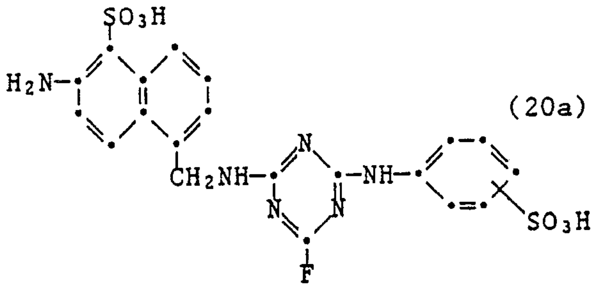

(20a)

diazotiert und auf eine Kupplungskomponente der Formel

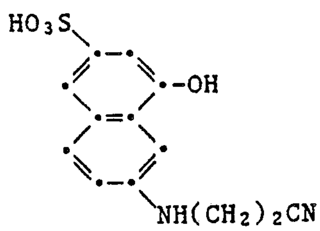

(18b)

kuppelt.

24. Verfahren gemäss einem der Ansprüche 5 bis 8, 13 bis 18 und 20, dadurch gekennzeichnet, dass man in den Diazokomponenten worin Z′ β-Hydroxyäthyl ist nach der Kupplungsreaktion diesen Rest in β-Sulfatoäthyl, β-Thiosulfatoäthyl, β-Phosphatoäthyl, β-Acyloxyäthyl, β-Halogenäthyl oder Vinyl umwandelt.

25. Verwendung der gemäss Anspruch 1 erhaltenen Reaktivfarbstoffe zum Färben oder Bedrucken von cellulosehaltigen Fasermaterialien.

26. Verwendung gemäss Anspruch 25 zum Färben oder Bedrucken von Baumwolle.